# EUROPÄISCHE PATENTSCHRIFT

(11) **EP 0 513 106 B1**
(45) Veröffentlichungstag und Bekanntmachung des Hinweises auf die Patenterteilung: **27.10.1993**
(21) Anmeldenummer: 91903353.0
(22) Anmeldetag: 05.02.1991
(51) Int. Cl.: B65D 65/46, A21D 13/00

(54) **VERFAHREN ZUR HERSTELLUNG VON VERROTTBAREN, DÜNNWANDIGEN FORMKÖRPERN AUF STÄRKEBASIS**
PROCESS FOR MANUFACTURING DECOMPOSABLE, THIN-WALLED STARCH-BASED MOULDINGS
PROCEDE DE FABRICATION DE PIECES MOULEES PUTRESCIBLES, A PAROIS MINCES, A BASE D'AMIDON

(30) Priorität: 06.02.1990 AT 252/90; 07.06.1990 AT 1241/90; 31.08.1990 AT 1783/90
(43) Veröffentlichungstag der Anmeldung: 19.11.1992
(73) Patentinhaber: FRANZ HAAS WAFFELMASCHINEN INDUSTRIEGESELLSCHAFT M.B.H., A-1210 Wien (AT)
(72) Erfinder: TIEFENBACHER, Karl, A-1170 Wien (AT); HAAS, Franz, A-2100 Leobendorf (AT); HAAS, Johann, A-3400 Klosterneuburg (AT)
(74) Vertreter: Berger, Erhard, Dr.
(86) Internationale Anmeldenummer: AT9100019
(87) Internationale Veröffentlichungsnummer: WO9112186

(56) Entgegenhaltungen:
- EP-A- 0 205 273
- EP-A- 0 265 745
- EP-A- 0 271 853
- EP-A- 0 370 913
- EP-A- 0 405 146
- FR-A- 2 642 731
- GB-A- 576 055
- US-A- 2 968 561
- US-A- 3 268 338
- Chemical Abstracts, volum 107, 1987 (Colombus, Ohio, US), abstract 9180u, & SU-A-126649 (Central Scientific Research Institute of Paper)
- Chemical Abstracts, volume 96, 1982 (Colombus, Ohio, US), "Indirect food additives: paper and paperboard components; ammonium zirconium carbonate", Abstract 179584a, & Fed. Regist. 6 April 1982, 47(66), 14697

## Beschreibung

Die vorliegende Erfindung bezieht sich auf ein Verfahren zur Herstellung von verrottbaren, dünnwandigen Formkörpern durch Aufbringen einer Backmasse auf Stärkebasis auf die untere Formhälfte einer mehrteiligen, vorzugsweise zweiteiligen Form, Ausbacken des Formkörpers durch Erhitzen der geschlossenen Form und anschließendes Konditionieren des ausgebackenen Produktes.

Mit Hilfe des erfindungsgemäßen Verfahrens können beispielsweise folgende Formkörper hergestelltwerden: Becher, Teller, Fast-Food-Verpackungen, Verpackungseinsätze, sogenannte Trays, papier- bzw. karton- ähnliche Blätter und Bahnen - beispielsweise als Einlageblätter in Bonbonnieren - oder zur Sicherung stückiger Füllgüter oder als Grundmaterial für Verbundwerkstoffe für Verpackungszwecke, z.B. in Kombination mit Kunststoffen dienende, mehroderweniger regelmäßig geformte kleinteilige Körper, beispielsweise als Füllstoff zur Sicherung verpackter Güter gegen Stoß - ähnlich den bekannten Styroporchips.

Unter "dünnwandig" wird im Rahmen der vorliegenden Erfindung eine Wandstärke verstanden, die einerseits bei bestimmungsgemäßer Verwendung noch bruch- und rißfest ist und andererseits zwischen zwei Formhälften auf üblichen Waffelbackautomaten (s. z.B. US-PS 4,438,685, US-PS 4,648,314 und DE-OS 3 346 970) noch ausbackbar ist.

Die heute am Markt befindlichen Produkte der oben genannten Art bestehen überwiegend aus Kunststoff bzw. Papier und haben als Grundstoff zu ihrer Herstellung Erdöl bzw. Holz. Schnell nachwachsende, pflanzliche Rohstoffe wie etwa stärke- oder ölliefernde Pflanzen werden noch nicht als Hauptrohstoff für die Herstellung von solchen Produkten, die man im weiteren Sinne auch als Verpackungsmaterialen bezeichnen könnte, verwendet. Weltweit stehen heute etwa pflanzliche Stärken sowie Pflanzenöle und -fette über den Ernährungsbedarf hinaus als Industrierohstoffe zur Verfügung.

Im Besonderen stellt Stärke ein interessantes Ausgangsmaterial dar, das durch Quellungs-, Erhitzungs-oder Vernetzungsreaktionen auf physikalischem und chemischem Wege verfestigte Strukturen bildet, wie sie etwa von Backwaren - z.B. der Brotkruste - her bekannt sind.

Im Bereich der Dauerbackwaren etwa sind mit den eßbaren Waffeln, die in Form von Blättern (Flachwaffeln, Oblaten), Tüten, Bechern usw. hergestellt werden, Produkte vorhanden, die ansatzweise Verpackungsfunktion haben, etwa für Eis, jedoch aufgrund ihrer typischen Eigenschaften: knusprig, brüchig, spröde, feuchtigkeitsempfindlich, oxidationsanfällig, mehrere wesentliche Anforderungen bezüglich der Stabilität und Schutzfunktion einer Verpackung nicht erfüllen können.

Die Herstellung eßbarer Waffeln erfolgt nach verschiedenen, in der Patent- und Fachliteratur bekannten Rezepturen (s. z.B.: DE 17 82 502, DE 29 29 496, DE 32 39 871, P.E.-Pritchard, A.H. Emery, D.J. Stevens (1975), The Influence of Ingredients on the Properties of WaferSheets, FMBRA Report No. 66,- D.J.R. Manley, Technology of biscuits, crackers and cookies, Ellis Horwood Limited, 1983, Seite 222 ff.,- E. Winter, CCB Rev. Chocolate, Confectionary & Baking, 5 (3), 19; 1980).

Die Rezepturen für die Waffelbackmasse enthalten neben den in quantitativer Hinsicht wichtigsten Komponenten Weizenmehl und Wasser regelmäßig eine Reihe von, für die Herstellung dieses Produktes essentiellen Minorbestandteilen:

Backtriebmittel: Es wird Natriumhydrogencarbonat (Natron) in Anteilen von 0,2 - 0,8%, bezogen auf den Mehleinsatz, verwendet. Fallweise wird ein Teil davon durch Ammoniumhydrogencarbonat substituiert oder Hefe mitverwendet.

Fette: Die Mitverwendung von Fetten/Ölen in Anteilen von 1 % - 3%, bezogen auf den Mehleinsatz, ist erforderlich, um das Ablösen der Waffeln von der Backform zu erleichtern (Trennmittel). Auch Magnesiumoxid wird vereinzelt für diesen Zweck empfohlen. Dies kann jedoch aufgrund der basischen Eigenschaften dieses Stoffes zu Problemen mit der Stabilität der Backwaren führen.

Lecithin: Lecithin wird als Emulgator in der Waffelherstellung verwendet und kann bei höherem Einsatz ebenfalls als Trennmittel angesehen werden.

Die Verwendung von Ölen und Fetten in solchen Rezepturen erfolgt nicht primär aus geschmacklichen Gründen, vielmehr sind diese erforderlich, um ein Festbacken an der Backform zu vermeiden. Lecithin wirkt nun ebenfalls positiv auf die Entformung und emulgiert den ÖI/Fettanteil in der wäßrigen Waffelbackmasse.

Die zuletzt genannten Rezepturbestandteile Fett und Lecithin werden oft ganz bzw. teilweise über die Zugabe von Eipulver, Milchpulver oder Sojamehlen eingebracht. Derartige Zusätze haben daneben Auswirkungen auf die Struktur, Farbe und Geschmack der Waffeln. Dies gilt ebenso für fallweise verwendete Anteile an Saccharose bzw. Glucose (0 - 3%, bezogen auf Mehleinsatz). Salz wird als Würzmittel in Anteilen zwischen 0 und 0,6%, bezogen auf Mehl, verwendet.

Weitere fakultative Zutaten sind etwa Molkepulver, Aromen oder Färbemittel.

Die fertig gemischte Backmasse wird in der Regel bei einer Backplatten-Temperatur von 160°C bis 180°C etwa 1,2 - 3 Minuten gebacken.

Die poröse Struktur solcher Waffeln, bewirkt durch das Backtriebmittel und die sich daraus ergebende Verteilung der, wenn auch geringen, Fettanteile auf eine sehr große Oberfläche, führt bei unverpackten Waffeln zu einem sehr schnellen Ranzigwerden. Dieses ist durch licht- und luftsauerstoffinduzierte oxidative Fettspaltung bedingt und tritt innerhalb von Tagen bis Wochen ein.

Zur Herstellung heller bzw. weißer Backoblaten finden Backmassen Verwendung, die zu einem Teil oder zur Gänze anstelle von Weizenmehl Stärkematerialien, wie Cerealien- und Kartoffelstärke verwenden. In diesem Fall ist, um ein Festbacken an den Backformen zu vermeiden, entweder ebenfalls die Verwendung von Öl/Fett als Trennmittel erforderlich, dessen Konzentration gegenüber normalen Waffelbackmassen meist erhöht werden muß, oder es müssen die Oberflächen der Backformen speziell vergütet, z.B. poliert und/oder verchromt werden. Alternativ dazu werden Trennöle, Paraffine oder Wachse zur Behandlung der Backform eingesetzt. Dies führt aber zu Schwierigkeiten bei der Wasserdampffreisetzung und bewirkt oft mangelhaft ausgeformte Produkte.

Während des Backvorganges wird durch Verkleisterung von Stärke eine Verfestigung der Struktur herbeigeführt.

Der Kleberanteil des verwendeten Mehles trägt über das Einbringen gebundenen Wassers in die Backmasse und seiner Denaturierung beim Backvorgang durch seine Vernetzung in der Waffelstruktur zur Festigkeit und Textur des Produktes bei.

In der Waffelherstellung spielt neben der Verfestigung durch das Eiweiß die partielle Verkleisterung der Stärke eine wesentliche Rolle bei der Strukturgebung des Produktes.

Diese Verkleisterung beginnt bei etwa 60°C und kann nur bei Vorhandensein von freiem Wasser ablaufen. Steht zu wenig Wasser zur Verfügung, steigt vorerst die Verkleisterungstemperatur stetig an und die Verkleisterung kommt schließlich zum Stillstand.

Parallel zum Wasserbedarf für die Verkleisterung kommt es durch die Erhitzung während des Backvorganges zu einer zunehmenden Dampfentwicklung, die eine rasche Abnahme des verfügbaren Wassers mit sich bringt, aber für die Lockerung und Ausbildung der Porenstruktur des Waffelproduktes von groper Bedeutung ist. Mit zunehmender Fettkonzentration in der Rezeptur werden zunehmend größere Anteile der Stärkekörner mit Fett überzogen und diese hydrophoben Anteile erschweren das Ausdampfen, führen zu stoßweiser, oft ungleichmäßiger Lockerung und schlechter Ausbildung der Oberfläche der zu backenden Waffel produkte. Die Verwendung von Lecithin wirkt diesen Vorgängen entgegen.

Mit den bekannten Herstellungsverfahren gelingt es nicht, erstens den negativen Effekt des Backfettes auf die Struktureigenschaften auszuschalten und zweitens, die durch hydrolytische und oxidative Vorgänge während der Gebrauchszeiten auftretenden geruchlichen und geschmacklichen Veränderungen hintanzuhalten.

Diese schnell einsetzenden geruchlichen und geschmacklichen Veränderungen werden bei Waffelprodukten durch dichte, licht- und luftundurchlässige Verpackung verzögert bzw. - zumindest für den Konsumenten - durch das vorhandene positive Backaroma für einige Zeit überdeckt. Für diese Veränderungen sind drei Komponenten der Rezeptur in erster Linie verantwortlich:
1. Das zugesetzte Fett: Hier kann durch Verwendung ausschließlich gesättigter Fette eine Verbesserung erreicht werden und die Haltbarkeit der Waffelprodukte um 50 bis 200% erhöht werden. Allerdings sind auch im Mehl ungesättigte Fette enthalten.
2. Die als Emulgator verwendeten Lecithine enthalten ebenfalls ungesättigte Fettsäuren. Eine Herabsetzung der eingesetzten Lecithinmenge (Zugabe direkt oder über andere Zutaten, wie oben beschrieben) ist zwar möglich, erschwert aber die technologischen Abläufe des Backens und verschlechtert die Qualität der erhaltenen Produkte.
3. Durch die Verwendung von alkalischen Backtriebmitteln wird der pH-Wert erhöht und damit werden die erwähnten Veränderungen begünstigt.

Es wurde nun überraschenderweise gefunden, daß bei Verwendung von mittel- oder langkettigen Fettsäuren und/oder deren Salze und/oder deren Säurederivate waffelähnliche Produkte gebacken werden können, und zwar untervölligem Verzicht auf Fettzusatz und Lecithin-Zusatz und in den meisten Fällen auch unter Verzicht auf Triebmittelzusatz.

Dies ist umso überraschender, da Versuche mit, in der Trennwirkung ähnlichen Stoffen, wie z.B. Wachsen und Paraffinen, die vielfach als Trennmittel eingesetzt werden, negativ verlaufen sind.

Es wurde weiters gefunden, daß neben dem voranstehend genannten Trennmittel oder als teilweisen, in einzelnen Fällen auch als vollständiger Ersatz Polymethylhydrogensiloxane eingesetzt werden können.

Bevorzugte Polymethylhydrogensiloxane besitzen die allgemeine Formel 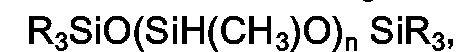 wobei R für H, Methyl, oder Alkyl steht und für den Fall als R Methyl ist, n eine Zahl zwischen etwa 40 und etwa 100 bedeutet.

Das Verfahren der eingangs definierten Art ist demnach dadurch gekennzeichnet, daß man, um ein zähes, festes, hohe mechanische Stabilität aufweisendes Produkt zu erhalten
1) eine aus folgenden Ingredienzien bereitete, im wesentlichen fettfreie Backmasse einsetzt:
   a) 30 bis 63 Gew.-% vorzugsweise 42,0 bis 58,0 Gew.-% Wasser;
   b) als Stärkebasis 27,0 bis 69 Gew.-%, vorzugsweise 36 bis 56,5 Gew.-%, insbesondere 44 bis 49 Gew.-% einer Stärke oder eines Gemisches verschiedener Stärken und/oder eines Mehles oder Mehlgemisches;
   c) als Trennmittel 0,04 bis 11 Gew.-%, vorzugsweise 0,2 bis 4,5 Gew.-% einer oder mehrerer mittel-oder langkettiger, gegebenenfalls substituierter Fettsäuren und/oder deren Salze und/oder deren Säurederivate, z.B. Säureamide - gegebenenfalls können neben diesen Verbindungen oder als teilweiser, in Einzelfällen auch als vollständiger Ersatz derselben 0,5 bis 6,5 Gew.-%, vorzugsweise 0,1 bis 4,2 Gew.-% Polymethylhydrogensiloxane eingesetzt werden, wobei im Falle des Einsatzes beider Verbindungsgruppen bei hohen Konzentrationen an Fettsäuren bzw. deren Verbindungen die Konzentration an Polymethylhydrogensiloxanen in der Regel 3 Gew.-% nicht überschreiten soll -;
   d) 0 bis 10 Gew.-%, vorzugsweise 0,1 bis 7,5 Gew.-% eines Verdickungsmittels, insbesondere 1,0 bis 5,5 Gew.-% Quellstärke, vorverkleisterte Stärke od. Backabfall und/oder 0 bis 2 Gew.-%, vorzugsweise 0 bis 1,0 Gew.-% Guar-Mehl, Pektin, Johannisbrotkernmehl, Carboxymethylcellulose und/oder 0 bis 5,5 Gew.-%, vorzugsweise 0 bis 3 Gew.-% Gummi arabicum;
   e) 0 bis 16,0 Gew.-%, vorzugsweise 0 bis 11 Gew.-% cellulosereiche Rohstoffe, - im Falle von Pülpe bis 26,9 Gew.-% und/oderandere pflanzliche Faserstoffe und/oder Fasern aus Kunststoff, Glas, Metall, Kohlenstoff u.a.;
   f) 0 bis 10 Gew.-%, vorzugsweise 0 bis 7,5 Gew.-% nicht faserförmige Füllstoffe, wie
      Calciumcarbonat,
      Kohle,
      Talkum,
      Titandioxid,
      Kieselgel,
      Aluminiumoxid;
      0 bis 3 Gew.-%, vorzugsweise 0 bis 2,5 Gew.-% Schellack
      0 bis 2,0 Gew.-%, vorzugsweise 0 bis 1,0 Gew.-% Sojaeiweiß, pulv., Weizenkleber, pulv.,
      Hühnereiweiß, pulv., Casein, pulv. und
      Caseinat, pulv.; Caseinat, pulv.;
   g) als Feuchthaltemittel
      0-3,5 Gew.-%, vorzugsweise 0-2,5 Gew.-% Kochsalz und/oder
      0-2,5 Gew.-%, vorzugsweise 0-1,5 Gew.-% Glycerin, Glykole und/oder
      0-4,5 Gew.-%, vorzugsweise 0-3,5 Gew.-% Sorbit
   h) als Färbemittel
      0-10 Gew.-%, vorzugsweise 0-7,5 Gew.-% anorganische Pigmente, und/oder
      0-0,1 Gew.-% natürl. u. synthetische Farbstoffe, und/oder
      0-2,5 Gew.-%, vorzugsweise 0-1 Gew.-% Zuckercouleur, und/oder
      0-1 Gew.-% Ruße und/oder
      0-3,5 Gew.-%, vorzugsweise 0-2,5 Gew.-% Kakaopulver;
   i) als Strukturverfestiger eine Zirkoniumsalzlösung, bevorzugt als alkalische Lösung von Ammoniumzirkoniumcarbonat, wobei der Gehalt an Zirkoniumverbindungen, ausgedrückt als Zr0₂ 0 bis 0,1 Gew.- %, bevorzugt 0,01 bis 0,05 Gew.-% beträgt;
   k) 0-0,25 Gew.-%, vorzugsweise 0-0,1 Gew.-% Konservierungsmittel und
   I) 0-0,5 Gew.-%, vorzugsweise 0-0,1 Gew.-% Antioxidanten;
2) die die Form ausfüllende Backmasse 25 bis 230 sec. lang bei 145 - 230°C ausbackt, und
3) das erhaltene Produkt durch Konditionieren auf einen Feuchtigkeitsgehalt von 6 Gew.-% bis 22 Gew.- % einstellt.

Die Wirkung der genannten Fettsäuren und/oder deren Salze und/oder der Säurederivate bzw. der genannten Polysiloxane als Zusatzstoffe, anstelle der oben beschriebenen Fette/Öle bzw. Emulgatoren, welche Zusatzstoffe die Herstellung eines gebackenen Produktes mit den weiter unten beschriebenen, mechanischen Eigenschaften erlaubt, ist, was die Fettsäuren betrifft vorerst noch unabhängig vom Sättigungsgrad der verwendeten Fettsäuren, ist vorzugsweise aber mit gesättigten bzw. einfach ungesättigten Fettsäuren und Hydroxyfettsäuren festzustellen.

Es ist jedoch darauf hinzuweisen, daß die später beschriebene, hohe oxidative Stabilität des Produktes insbesondere mit gesättigten Fettsäuren erreicht wird.

Verwendet werden mittel- und langkettige Fettsäuren, Kettenlänge vorzugsweise gröper als C12, insbeondere C16 und C 18.

Die Bezeichnung "mittel- und langkettige Fettsäure" schließt die typischerweise bei deren Herstellung aus Pflanzenfetten oder tierischen Fetten auftretenden Kettenlängenverteilungen ein. Das heißt, daß z.B. die Bezeichnung "Stearinsäure" bedeutet, daß wohl die überwiegende Komponente Stearinsäure ist, daß darüber hinaus aber das übliche Fettsäurespektrum von beispielsweise gehärteten Pflanzenölen und -fetten vorliegt, d.h. Anteile von kürzer- oder längerkettigen Fettsäuren ebenso vorhanden sind, wie ebenfalls noch vorhandene Minoranteile der entsprechenden ungesättigten Fettsäuren.

Die genannte Wirkung wird mit Salzen der Fettsäuren, vorzugsweise der Stearinsäure, ebenso erzielt, wobei insbesondere Ca-, Mg-, Al- und Zinkstearat zu erwähnen sind.

Die Anwesenheit der beschriebenen Fettsäuren bzw. deren Salze bzw. deren Säurederivate erlaubt die Herstellung von geformten Produkten unter Verwendung verschiedener, hochstärkehaltiger Rohstoffe.

Es wurde schon erwähnt, daß die Fettsäuren bzw. deren Salze bzw. deren Säurederivate gegebenenfalls durch Polymethylhydrogensiloxane ersetzt werden können.

Der Fachmann mußte auf Grund seines Wissens erwarten, daß die Verwendung dieser Polysiloxane bei Temperaturen über 120°C mit der Ausbildung kovalenter Bindungen mit OH-Gruppen z.B. der Stärke verbunden ist. Es kommt dabei zur Ausbildung einer hydrophoben Oberfläche, etwa der Stärkekörner. Dadurch wird das Ausdampfen und die Ausbildung einer verkleisterten Stärkematrix behindert.

Überraschenderweise ist aber die beim Backvorgang auftretende und elektronenmikroskopisch feststellbare Auflösung der Struktur der Stärkekörner unter Ausbildung einer kontinuierlichen Stärkematrix durch das genannte Polysiloxan nicht behindert. Es kommt sogar zu einer, wenn auch geringfügigen, Verfestigung der Matrix und bei Konzentrationen des Siloxans im unteren angegebenen Bereich zwischen 0,05 und maximal 2 Gew.-% zu einer gewissen Trennwirkung, die das Entformen begünstigt.

Diese geht möglicherweise auf das Binden löslicher, für das Kleben verantwortlicher Bestandteile der Backmasse zurück.

Die gleichzeitig ablaufende Vernetzung der Polysiloxane und ihre partielle Rehydrolyse durch den herrschenden Dampf bei erhöhter Temperatur wirkt allerdings, insbesondere bei Konzentrationen über 2 Gew.-%, einer guten Entformbarkeit wieder entgegen, insbesondere bei höheren Polysiloxankonzentrationen. Es kommt zur Ausbildung von Grenzschichten an der Backform, die bei wiederholten Backzyklen zu einem Steckenbleiben der Formkörper an der Backform führen. Diesem Effekt kann durch die Mitverwendung der oben definierten Fettsäuren bzw. deren Salze bzw. deren Säurederivate wieder entgegengewirkt werden.

Aus den voranstehenden Ausführungen ergibt sich, daß die Fettsäuren, bzw. deren Salze, bzw. deren Säurederivate im Rahmen der vorliegenden Erfindung bevorzugt als Trennmittel eingesetzt werden.

Triebmittel, wie Natriumhydrogencarbonat, erhöhen in der Waffelherstellung und in verwandten Backvorgängen die Wasserdampflockerung der Backwaren.

Die Produkte werden poröser, leichter, brüchiger. Beim erfindungsgemäßen Verfahren ist eine Triebmittelmitanwendung nicht zwingend erforderlich und bringt nur einen geringen Lockerungseffekt. Allein mit der Wasserdosierung kann hier die Porosität der Produkte gesteuert werden, die zu einer Dichte des Materials im Bereich von 0,08 bis 0,38, vorzugsweise 0,12 - 0,30 g/cm³ führt.

Wird aus bestimmten Gründen eine höhere Porosität gewünscht, ist dies bei Stärkerezepturen (keine Cerealienmehle) durch Triebmittelzusatz nur bedingt zu erreichen.

Der im Rahmen der Erfindungsdefinition gewählte Ausdruck "im wesentlichen fettfreie Backmasse" bedeutet, daß der Backmasse kein Fett oder Öl zugesetzt wird; diese enthält nur jenes Fett, daß durch den Stärkegrundstoff eingebracht wird.

So weist Kartoffel-, Mais-, Tapioca-, Reis- und Weizenstärke unter 0,6 Gew.-% und Weizenmehl Type 550 bzw. Roggenmehl Type 997 unter 1,4 Gew.-% Fettanteil auf.

Neben den ausführlich beschriebenen Fettsäuren und ihren Salzen und Derivaten bzw. den Polysiloxanen als Mittel zur Herstellung oxidationsstabilerer Produkte und als Mittel, die anstelle herkömmlicher Fette und Emulgatoren die Strukturbildung des Produktes und die Entformung aus den Maschinen positiv beeinflussen, sind folgende Rohstoffe zur Herstellung dererfindungsgemäß herzustellenden Produkte erforderlich bzw. verwendbar.
- Wasser
- Stärke bzw. stärkereiche Rohstoffe,
- Verdickungsmittel,
- Faserstoffe, bevorzugt cellulosereiche Feststoffe,
- Feuchthaltemittel,
- Färbemittel,
- Konservierungsmittel und.
- Antioxydantien.

Wie weiter oben erwähnt, wird beim erfindungsgemäßen Verfahren der Backmasse 30 bis 63 Gew.-% Wasser zugesetzt. Diese Angabe bezieht sich mit Ausnahme von Zusatzstoffen, die einen sehr hohen "freien" Wasseranteil enthalten, z.B. Pülpe, nicht auf das durch Zusatzstoffe eingebrachte "gebundene" Wasser.

Die beim erfindungsgemäßen Verfahren verwendeten Rohstoffe weisen bei den üblichen Herstellungs-und Lagerbedingungen eine natürliche Gleichgewichtsfeuchte auf, mit der sie im allgemeinen auch besonders gut lagerstabil sind.

Überwiegend handelt es sich dabei um Wasser, das keine oder stark reduzierte Lösungskapazität hat und sich beispielsweise auch in seiner Beweglichkeit, im Verdampfungs- und Gefrierverhalten von freiem Wasser signifikant unterscheidet. (Konstitutionelles Wasser, vicinales Wasser, Mehrschicht-Wasser nach O. FENNEMA "FOOD CHEMISTRY" 2nd Ed. Marcel Dekker, New York, 1985, Seite 23 ff).

Eine Entfernung dieses Wasseranteiles durch entsprechend rigorose Trocknungsbedingungen zu erreichen, bringt irreversible Änderungen der Materialeigenschaften mit sich. Dies gilt speziell für die Hauptrohstoffe, die Polysaccharide, wo ausgeprägte Hystereseerscheinungen beim Vergleich derAdsorptions- und Desorptionsisothermen zu beobachten sind.

Es ist daher weder erforderlich noch sinnvoll im erfindungsgemäßen Verfahren speziell getrocknete oder auf einem bestimmten Wassergehalt eingestellte Rohstoffe zu verwenden.

Die folgende Tabelle gibt den Wassergehalt der in den Rezepturen verwendeten, im allgemeinen in Pulverform eingesetzten Rohstoffe an.

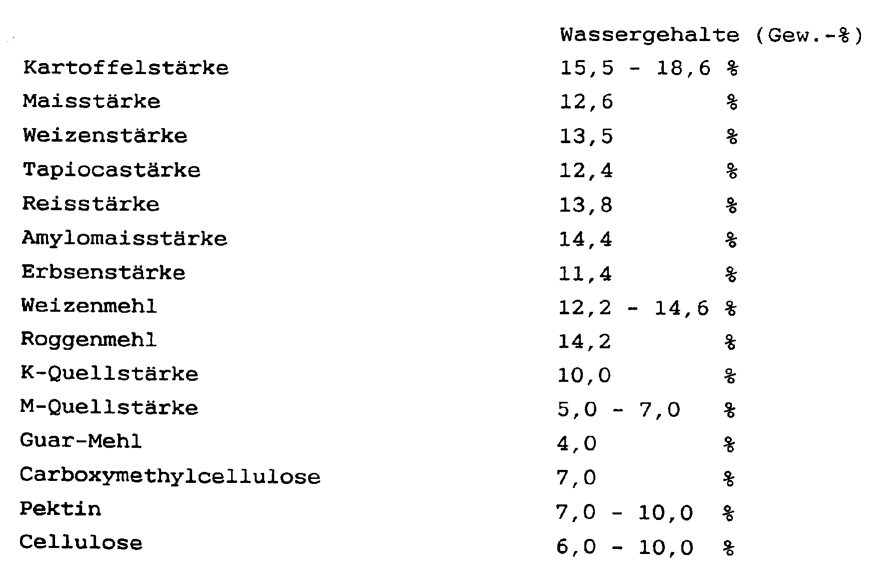

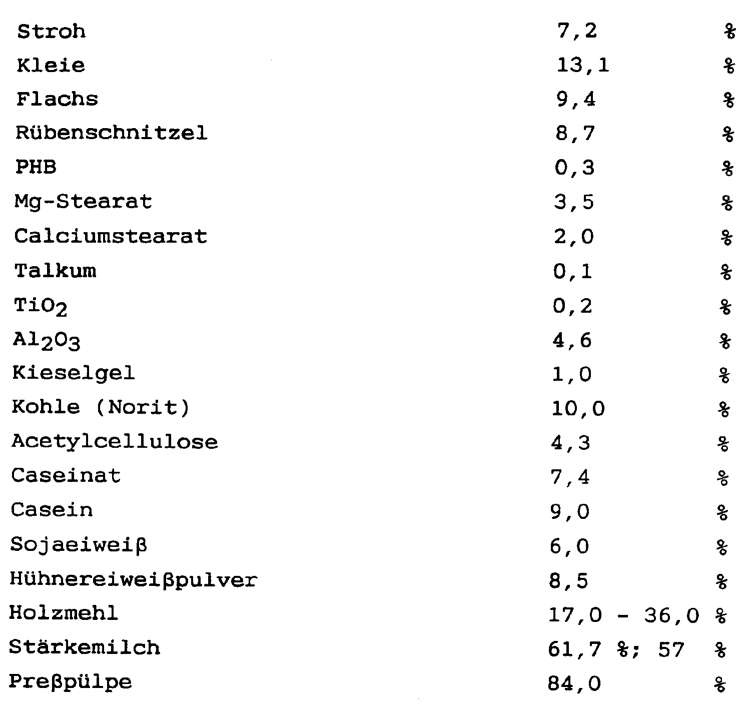

Backmassen mit Wassergehalten unter 40 Gew.-% sind überwiegend nicht kohäsiv, unter 44 Gew.-% meist plastisch, über 45% meist viskos, fließfähig bis dünnflüssig.

Diese Grenzen sind aber von der Wasserbindung des verwendeten stärkereichen Rohstoffes, der Konzentration des Verdickungsmittels sowie des cellulosereichen Rohstoffes abhängig.

Stärke bzw. stärkereiche Rohstoffe stellen, wie aus den weiter unten angeführten Rezepturen hervorgeht, den quantitativ überwiegenden Anteil an den Feststoffen der Rezeptur. Um eine ausreichende mechaniche Festigkeit zu erreichen, werden Stärkearten mit hohem Viskositätsanstieg und damit hoher Verfestigung beim Beginn derVerkleisterung bevorzugt, wie etwa Kartoffelstärke. Kartoffelstärke wird vorzugsweise verwendet, insbesondere in Anteilen zwischen 10% und 100%. Dieser Stärkeanteil kann aber auch durch andere Stärkarten, insbesondere Weizenstärke, Reisstärke, oder aber durch Mehle, insbesondere Weizenmehl eingestellt werden.

Die wichtigste Funktion stärkereicher Rohstoffe im Herstellungsvorgang ist die Strukturbildung durch Quellung, Verkleisterung und Vernetzung. Diese Vorgänge werden wesentlich beeinflußt durch
- die Struktur der Stärkekörner, speziell die Art der Einlagerung der Amylose in der Amylopektinmatrix
- das Ausmaß und die Art und Weise des Amyloseaustrittes
- ionische und nicht ionische Begleitstoffe

Speziell die Komplexierung der Amylose durch Lipide und andere auf die Amylosefraktionen zurückgehende Eigenschaften sind bei Verwendung von Cerealienstärken vermehrt zu beobachten und können vereinzelt sogar zu einer partiellen Schwächung der Struktur der Formkörper, sowie zu einer Bildung von Rissen führen.

Aus diesen Gründen werden Kartoffel- und Tapiocastärken, sowie Maisstärke bevorzugt gegenüber z.B. Weizenstärke, Weizenmehl, Reisstärke.

In der Praxis wird der Einsatz von 100% Kartoffelstärke, Tapioca oder Maisstärke bevorzugt, die Verwendung reiner Cerealienmehle, sowie reiner Reis-, Weizen-, Amylomais- oder Wachsmaisstärke ist weniger günstig.

Wie in einzelnen Rezepturbeispielen gezeigt wird, kann mit Mehlen allein, ohne Verwendung von Stärke, ebenfalls eine positive Wirkung des Trennmittels erzielt werden, wenn
1. die verringerte oxidative Stabilität in Kauf genommen wird oder durch Zusatz von Antioxidantien wieder erhöht wird
2. der Trennmittelanteil erhöht wird oder der Mehlanteil durch Verdünnungseffekt (Cellulose, Stärke) reduziert wird
3. wie in Rezeptur Nr. 64 gezeigt, mit pastösen, teigartigen Backmassen gebacken wird.

Die Verwendung nicht fließfähiger Massen aus Cerealienmehlen führt zu einer verringerten Extraktion löslicher Mehlkomponenten, die für das Klebenbleiben verantwortlich sind. Dadurch wird der Trennmittelbedarf herabgesetzt.

Die Herstellung der erfindungsgemäßen Produkte setzt die Verwendung homogener Massen für den primären Formvorgang voraus. Um eine Sedimentation der verwendeten Rohstoffpartikel, insbesondere der Stärke zu vermeiden, ist die Mitverwendung eines Verdickungsmittels zweckmäßig. Dafür sind verschiedene, an sich bekannte Zusätze geeignet:
1. Verkleisterte Stärken/stärkehaltige Produkte, die als Fertigprodukte wie Qellstärken, Quellmehle oder durch Verkleisterung unmittelbar vor Bereitung der Backmassen bereitgestellt werden können. In der Regel sollen zwischen 1 und 10 Gew.-% des Gesamtstärkeeinsatzes verkleistert sein, das Optimum liegt zwischen 2 und 5 Gew.-%, je nach Stärkeart/Mehlart.
2. Alternativ können übliche Gelier- und Verdickungsmittel eingesetzt werden, vorzugsweise Guarkernmehl, Johannisbrotkernmehl, Carrageen, Pektin, modifizierte Stärken und Carboxymethylcellulose.

Die Konzentration sollte zwischen 0,1 und 1,0 Gew.-% betragen, vorzugsweise 0,3 bis 0,8 Gew.-%, bezogen auf die Stärkebasis.

Eine kombinierte Verwendung von Mitteln nach 1. und 2. ist ebenso möglich.

Die Sedimentation der Stärkekörner bei fließfähigen Backmassen kann ebenso durch intensives Rühren vor der Dosierung verhindert werden, doch ist für eine störungsfreie Verarbeitung bei Backmassen, die als stärkereiche Rohstoffe reine Stärken oder neben Cerealienmehlen zusätzliche Stärkeanteile von mehr als 4 Gewichtsprozent enthalten, die Verwendung verdickender Stoffe technologisch vorteilhaft.

Die Verwendung von Verdickungsmitteln bei plastischen oder nicht kohäsiven Backmassen ist ebenso nicht ausgeschlossen.

Die Gebrauchseigenschaften der herzustellenden Produkte werden, was die Festigkeit betrifft, durch die Mitverwendung von faserartigen Rohstoffen (Naturfasern, Kunstfasern, Glasfasern) verbessert, insbesondere durch die Mitverwendung von cellulosereichen Rohstoffen. Vorzugsweise werden Cellulose, Kleie, Stroh, Rübenfaserstoffe und Holzspäne eingesetzt.

Die Cellulose wird vorteilhafterweise als weitgehend trockenes Pulver mit Faserlängen zwischen 30 und 1500 Mikrometern oder als Rohzellstoff in gebleichter und ungebleichter Qualität eingesetzt. Rohzellstoff erfordert eine entsprechende Zerfaserung zwecks weitgehend homogener Verteilung in der Backmasse.

In vielen Fällen ist es zweckmäßig, anstelle oder zusätzlich zu den vorgenannten Füllstoffen nicht faserförmige Füllstoffe den Backmassen zuzusetzen.

Solche Füllstoffe haben keine primäre strukturgebende Funktion. Sie können aber beispielsweise aufgrund ihrer Härte, ihrer Einbindung in die Stärkematrix oder wegen einer spezifischen Wechselwirkung mit Stärke härtend oder versteifend wirken. Ebenso kommt eine Streckung der Backmasse oder eine stabilisierende Wirkung auf die Struktur der Backmasse und der Formkörper als Anwendungszweck in Betracht.

Die weiter oben in der Erfindungsdefinition und in den nachfolgenden Rezepturen angeführten Beispiele solcher Füllstoffe stehen stellvertretend für die Vielzahl bekannter Füll- und Verstärkungsstoffe. Kohle etwa findet in Form von Graphit, Ruß, Aktivkohle, Kohlenstoffasern Verwendung.

Kieselgel als gefälltes Si0₂, Quarzmehl und chemisch verwandten Stoffen wie Glasmehl, Glasfasern, Silicate, Kaolin, Talkum, Glimmer.

Die angeführten Eiweißstoffe beeinflussen vor allem auf Grund ihrer oberflächenaktiven Wirkung das Aufschlagverhalten und die Textur der Backmassen und zeigen überdies positive Einflüsse auf die gleichmäßige Porenstruktur der Formkörper.

Die im Schritt 3) der Herstellung der eingangs erwähnten Produkte beschriebene Einstellung der Produktfeuchte kann, was die Regulierung und Konstanthaltung dieser Feuchte betrifft, durch die Verwendung von, in anderen Bereichen bekannten Feuchthaltemitteln unterstützt werden.

Die Farbe der Verpackungsprodukte, ursprünglich durch die Rohstoff-Farbe und allfällige Einflüsse des Backvorganges bestimmt, wird durch Mitverwendung von, in wäprigen Medien lösbaren bzw. homogen verteilbaren Farbstoffen, Pigmenten oder Füllstoffen modifiziert. In letzterem Falle ist ein Einflup auf die Oberflächenbeschaffenheit und das spezifische Gewicht des Produktes in bekannterweise gegeben (vgl. die Rezepturbeispiele 53-59).

### 1. Anorganische Farbpigmente:

Die Anwendungskonzentration der Pigmente kann bis zu 10 Gew.-% betragen, vorzugsweise bis 7,5 Gew.- %.

### 2. Farbstoffe:

a) Naturfarbstoffe hoher Farbkraft;
   bevorzugt sind wasserlösliche Naturfarbstoffe wie Annatto (Bixin), Chlorophyll, Chlorophyllin, Karmin, Paprikaoleoresin.
   Die Konzentration, in Abhängigkeit von der Färbekraft des Präparates, liegt zweckmäßigerweise unter 0,1 Gew.-%.
b) Ruße, Kohle;
   Aktivkohle wird als Färbemittel in Konzentrationen von 0,0001 - -1 Gew.-% für Grautöne eingesetzt. Höhere Dosierungen als Füllstoffe wurden bereits beschrieben.
c) Synthetische Farbstoffe hoher Farbkraft sind bevorzugte Lebensmittelfarbstoffe, insbesondere wasserlösliche. Die Einsatzkonzentration liegt unter 0,1 Gew.-%.
   Typische Farbstoffe dieser Gruppe sind beispielsweise Gelborange S, Erythrosin I, Indigotin I, Fast Green FCF, Allura red 40, Patentblau AE.
d) Als andere färbende organische Stoffe, insbesondere Lebensmittel und Lebensmittelzusätze seien Zuckercouleur und Kakaopulver genannt.

In der Praxis wird häufig Annatto, Chlorophyll und Aktivkohle verwendet.

Zur Verbesserung der Stabilität der Produkte ist die Mitverwendung von Antioxidantien und Konservierungsmitteln vorgesehen (vgl. die Rezepturbeispiele 33, 34).

Bevorzugt werden im neutralen und schwach sauren pH-Bereich wirksame Konservierungsmittel, vorzugsweise für die Anwendung bei Lebensmitteln zugelassenen Stoffe, insbesondere PHB-Ester, Konzentration 0-0,25 Gew.-% p-Hydroxybenzoesäure-Methyl, -Ethyl, Propylester bzw. deren Alkalisalze ebenso wie antioxidativ wirkende Stoffe, die für die Anwendung bei Lebensmitteln zugelassene Stoffe darstellen, insbesondere Ester der Gallussäure
Konzentration 0-0,5 Gew.-%, vorzugsweise 0-0,1 Gew.-%.

Alle, in der Herstellung von Verpackungsmaterialien für Lebensmittel üblichen Stoffe können wahlweise eingesetzt werden.

Um die Struktur der herzustellenden Formkörper zu verfestigen, können gemäß dem erfindungsgemäßen Verfahren der Backmasse auch Zirkoniumverbindungen zugesetzt werden.

Zirkonium zeigt aufgrund seines kleinen lonenradius in seiner bevorzugten Oxidationsstufe als Zr(IV) eine starke Tendenz zur Koordination mit Liganden. In wäßrigem Medium sind dies Hydrate mit polymerer Struktur. Ihre Größe und Ladung hängt unter anderem von der Zirkoniumkonzentration, vom pH-Wert und von der Art und Konzentration vorhandener anderer Ionen ab.

Eine schematische Darstellung möglicher Strukturen und Ladungszustände gibt die nachfolgende Abbildung.

### KATIONISCH-Zirkoniumoxychlorid -Zirkoniumnitrat

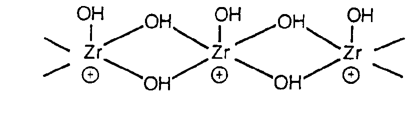

### ANIONISCH -Ammoniumzirkoniumkarbonat -Zirkoniumorthosulphat

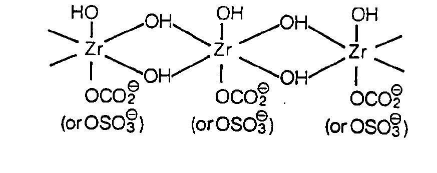

### NEUTRAL -Zirkoniumacetat

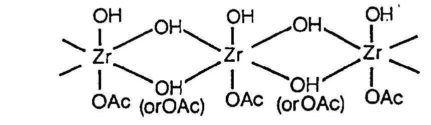

Zunehmende Verdünnung oder die Erhöhung des pH-Wertes wird eine Zunahme der Polymergröße durch vermehrte Hydroxybrücken bewirken bis hin zum Ausfallen von Zirkoniumhydroxid. Das Ausmaß dieser Hydrolyse läßt sich daher beeinflussen. Zirkonium hat eine große Affinität zu sauerstoffhaltigen Spezies und Ionen, welche die Beschaffenheit der Zirkoniumspezies in Lösung steuern. Im Besonderen treten auch sauerstoffhältige Gruppen an organischen Polymeren, wie etwa Stärke, in Wechselwirkung.

Ammoniumzirkoniumcarbonat und seine mit Weinsäure stabilisierte Formulierung (Bacote 20, Magnesium Elektron) sind als wäßrige Lösungen mit pH-Werten um 9,5 besonders wirksam. Die in Lösung vorhandenen anionischen Zirkoniumpolymeren mit Ammonium-Kationen werden durch das Carbonat stabilisiert, zerfallen aber während der Trocknung und vernetzen sich mit Hydroxylgruppen der Stärke. Die Reaktionsgeschwindigkeit ist unter alkalischen Bedingungen erhöht und setzt die für eine wirksame Vernetzung erforderliche Konzentration (berechnet als Zr0₂) wesentlich herab.

Dies konnte bei Versuchen mit verschiedenen Zirkoniumverbindungen gezeigt werden.
1. Zirkoniumoxidchlorid (5g in 100g Ethanol)
2. Zirkoniumpropionat (4g in 100g Ethanol)
3. Zirkoniumcarbonat (5g in 0,1% Essigsäure)
4. Zirkoniumcarbonat, fest, pulverisiert
5. Zirkoniumpropionat, fest, pulverisiert
6. Ammoniumzirkoniumcarbonatlösung (20% Zr0₂), pH 9,5 (AZC, Magnesium Elektron)
7. Azc-Lösung wie 6., stabilisiert mit Weinsäure (Bacote 20, Magnesium Elektron)

Als Basis für diese verschiedenen Versuchsansätze diente die Rezeptur Nr. 76. Mit entsprechend variierten Zr-Salzzugaben. Die folgenden Angaben zur Wirksamkeit beziehen sich der Vergleichbarkeit wegen auf den Gehalt an Zr0₂.

### Ergebnisse:

ad 1. leichte Verfestigung ab 0,04 Gew.-% Zr0₂
ad 2. leichte Verfestigung ab 0,06 Gew.-% Zr0₂
ad 3. leichte Verfestigung ab 0,05 Gew.-% Zr0₂
ad 4. keine Verfestigung
ad 5. keine Verfestigung
ad 6. leichte Verfestigung ab 0,005 Gew.-% Zr0₂
ad 7. leichte Verfestigung ab 0,005 Gew.-% Zr0₂

Aus den Versuchen ergibt sich, daß unter alkalischen Bedingungen mit den unter 6. und 7. genannten Reagentien bevorzugt Formkörper mit besonders fester Struktur hergestellt werden können (Vorliegen anionischer Polymerspezies im Reagens). Der Konzentrationsbereich von 0,01 - 0,03 Gew.-% Zr0₂ ist für die beschriebenen Formkörperrezepturen als bevorzugt anzusehen. Höhere Dosierungen sind nicht prinzipiell ausgeschlossen, führen aber überwiegend zu Verfestigungsgraden, die eine störungsfreie Formgebung nicht mehr zulassen. Die bevorzugte Backtemperatur für mit Zr-Verbindungen hergestellte Formkörper liegt zwischen 180 und 210 Grad C.

Überraschenderweise konnte festgestellt werden, daß die weiter oben im Zusammenhang mit dem Trennmittel genannten Polymethylhydrogensiloxane auch die Festigkeit der erfindungsgemäß hergestellten Formkörper erhöhen.

Die Ausbildung der Struktur von Formkörpern beruht im wesentlichen auf der Verkleisterung der Stärke. Steht nicht genug Wasser zur Verfügung kommt die Verkleisterung zum Stillstand. Es hat sich nun überraschenderweise gezeigt, daß nicht nur mit fließfähigen und pastös-teigigen Massen sondern selbst mit nicht mehr kohäsiven, pulvrig-klumpend anmutenden Rohstoffmischungen Formkörper mit allerdings höherem Gewicht hergestellt werden können.

Der Wasseranteil liegt dabei im unteren Teil des beanspruchten Bereichs. Äquivalent ergibt sich ein höherer Einsatz stärkereicher Rohstoffe, sowie von Nicht-Stärke-Bestandteilen. Dieser Anteil stärkereicher Rohstoffe kann bis zu 69,0 Gew.-% betragen. Er beträgt vorzugsweise z.B. bei Weizenmehl bis 49,5 Gew.-%, bei Maisstärke bis 49,1 Gew.-%.

Wie schon erwähnt, ist die Verkleisterung der Stärke ein wesentlicher Grund für die stabile Struktur dieser Formkörper. Die aus dem stärkereichen Rohstoff stammende Stärke verkleistert während des Erhitzungs- und Trocknungsschrittes.

In diese sich ausbildende Struktur werden andere Nicht-Stärke-Bestandteile (NSB) der Rezepturen eingelagert. Diese NSB sind aufgrund der Durchmischung der Rohstoffe vor dem Einbringen in die Form und/oder wegen ihrer eigenen spezifischen Gestalt und Beschaffenheit (z.B. Faserstruktur, Porosität, strukturierte Oberfläche, chemische Affinität für nicht kovalente Wechselwirkungen) ein fester, im wesentlichen homogen verteilter Bestandteil der Raumstruktur der Formkörper.

Bei der Verwendung solcher NSB treten sowohl die Festigkeit schwächende Effekte auf, die aus der Verdünnung der vernetzend wirkenden Stärke kommen (Füllstoffwirkung), als auch strukturverfestigende Wirkungen (Bindestoffwirkung) wie etwa bei Faserstoffen oder vernetzend wirkenden Bestandteilen.

Der Einsatz von NSB ist also lediglich begrenzt durch:
- Eine allfällige Toxizität. Das heißt NSB dürfen bei der bestimmungsgemäßen Verwendung der Formkörper wie auch bei deren sachgerechter Weiterverarbeitung bzw. Verwertung nach Gebrauch keine Schadstoffe abgeben oder Schadwirkung haben.
- In ihrer Konzentration nach oben wegen des besprochenen Verdünnungseffektes für die strukturbildende Stärke.
- Eine Beeinflussung des erfindungsgemäßen Herstellungsvorganges durch Hemmung oder unerwünschte Modifizierung der ablaufenden Reaktionen.

In den Rezepturen sind eine Reihe von NSB angeführt. In einer Konzentration von mehr als 1% Nicht-Stärke-Trockensubstanz sind dies in einzelnen Rezepturen:
- Trennmittel
- Verdickungsmittel
- Feuchthaltemittel
- cellulosereiche Rohstoffe
- Füllstoffe

Zu der Gruppe von Stoffen mit im Herstellungsvorgang genau festlegbaren Zwecken - wie im Fall der drei zuerst genannten Mittel - und den zwei letztgenannten, die eher eine oben besprochene Füll- bzw. Bindestoffwirkung haben, seien eine Reihe weiterer Beispiele genannt.
Calciumcarbonat 0,1-17,2 Gew.-%, vorzugsweise 0,4-13,2 Gew.-%
Talkum 0,1-12,5 Gew.-%, vorzugsweise 0,4-9,5 Gew.-%
acetylierte Cellulose 0,1-14,1 Gew.-%,
vorzugsweise 0,4-11,7 Gew.-%
Aluminiumoxid 0,1-12,5 Gew.-%, vorzugsweise 0,4-9,5 Gew.-%
Aktivkohle 0,1-12 Gew.-%, vorzugsweise 0,4-8,4 Gew.-%
Schellack 0,1-5 Gew.-%, vorzugsweise 0,4-3,5 Gew.-%
bezogen auf die Trockensubstanz in der Backmasse.

Die genannten Stoffe werden jeweils in Pulverform eingesetzt.

Aktivkohle wird aufgrund ihrer porösen Oberflächenstruktur gut in die Stärkematrix eingebaut und beeinflußt deren Eindrückverhalten sowie die Formstabilität bei Befeuchtung positiv. Die Anforderungen an die Aktivkohle ergeben sich einerseits aus den erwähnten toxikologischen Gesichtspunkten, so etwa der Einschränkung des Gehaltes anorganischer Bestandteile bzw. von Zink je nach Verwendungszweck. Für eine optisch homogene Verteilung haben sich Korngrößen unter 150 Mikrometer als am besten geeignet erwiesen. Granulierte Aktivkohle (Siebfraktion 0,125 - 0,5 mm) führt zu deutlich optisch abgegrenzten Partikeln in der Formkörperstruktur, ist aber deshalb keineswegs ausgeschlossen. Eine spezielle Aktivitätsstufe oder Porosität der Kohle sowie Einschränkungen auf deren Herstellung aus bestimmten Rohstoffen sind nicht erforderlich.

Schellack ist ein hartes, zähes und amorphes Harz mit guter Haft- und Abriebfestigkeit. Das Einbringen von Schellack in die Rohstoffmischung führt zu einer Verfestigung der Formkörper infolge der filmbildenden und haftvermittelnden Eigenschaften.

Die Porosität bekannter, durch Backen hergestellter Produkte kann durch verschiedene Verfahren erreicht werden, die als Prinzip eine Lockerung der Backmasse oder aber Lockerungsvorgänge während des Backens beinhalten. In den meisten Fällen gelangen beide Prinzipien zur Anwendung. Die wichtigsten Lockerungsverfahren sind:
- die mechanische Lockerung, etwa durch Einschlagen von Luft
- die chemische Lockerung durch sogenannte Triebmittel
- eine physikalische Lockerung, wie z.B. die Wasserdampflockerung

In der Herstellung von vergleichbar dünnwandigen Produkte wie etwa Waffeln, ist das Lockerungsprinzip die Wasserdampflockerung (vgl. W. Seibel et al: Getreide, Mehl, Brot 32, 188, 1978). Ein Aufschlagen der Waffelbackmassen ist nicht üblich.

Es hat sich aber nun überraschenderweise gezeigt, daß trotz der großen Wasserdampfvolumina, die während des Ausbackvorganges das in seiner Struktur entstehende Formkörpermaterial durchströmen, eine mechanische Lockerung der Backmasse zu gleichmäßig feinporigen Materialien führt und mit zu einer problemlosen Herstellung der Formkörper selbst bei komplizierteren Details der Formgebung beiträgt.

Zur Herstellung von Formkörpern mit erhöhter Anzahl von Luftporen, d.h. mit verstärkt schaumstoffartiger Struktur ist erforderlich:
1. Das Einbringen von Luft bzw. anderen Gasen durch Rühren, Schlagen oder Druck (mechanisch) oder chemisch durch Freisetzung von Lockerungsgasen (C0₂, Ammoniak).
2. Das Vorhandensein von Stoffen, die im Wandbereich der Poren wirksam sind, in die Struktur eingebaut werden und deren Stabilität erhöhen bzw. gewährleisten. (Beispiel: Zucker und Hühnerei-Eiweiß).

Zur Ausbildung dieser Wandstruktur sind verschiedene Eiweißstoffe wie etwa Hühnerei-Eiweiß, Sojaeiweiß sowie verschiedene Milcheiweißstoffe gut geeignet.

Dazu werden der Backmasse vorzugsweise folgende Eiweißstoffe, einzeln oder in Kombination, zugesetzt (Angaben in Gew.-% Trockensubstanz in der Backmasse).
Casein 0,1-2,6 %, vorzugsweise 0,2-1,3 %
Natriumcaseinat 0,1-1,3 %, vorzugsweise 0,2-1,0 %
Sojaisolat 0,1-2,6 %, vorzugsweise 0,2-1,7 %
Hühnereieiweiß 0,1-1,7 %, vorzugsweise 0,2-1,0 %

Um die Stabilität der Poren bis zum Einsatz der Backmasse zu erhöhen oder über längere Stehzeiten zu gewährleisten oder eine noch feinere Porenstruktur zu erhalten, werden Aufschlagemulgatoren eingesetzt. Aufschlagmittel, die eine höhere Stabilität und ein höheres Volumen des erzeugten Schaumes gewährleisten sollen, enthalten daher neben den genannten Eiweißkomponenten und Füll- bzw. Trägerstoffen (Sorbit, Maltodextrin, Stärke) Emulgatoren aus den Stoffgruppen Monoglyceride und deren Ester, Polyglycerinester, Propylenglycolester oder Sorbitanester bzw. deren Mischungen (Beispiele: Spongolit, Grünau; Delipan, Bender & Co.).

Die Backmasse für das erfindungsgemäße Verfahren wird wie folgt hergestellt:

Wasserlösliche Komponenten und pulverförmige Minorbestandteile werden in die erforderliche Wassermenge unter kräftiger Durchmischung eingerührt. Eine trockene Vormischung speziell der Verdickungs- und Trennmittel, eventuell unter Einbeziehung von 5 Gew.-% der Stärke- bzw. Mehlmenge, ist zu empfehlen, um eine Klumpenbildung oder aber Schwierigkeiten mit der Benetzung des Trennmittels zu vermeiden. Danach wird der Mehl- bzw. Stärkeanteil eingerührt bis eine homogene Suspension entsteht. Zuletzt wird das Trennmittel bzw. - im Falle der Vergleichsbeispiele - das Fett im flüssigen Zustand eingemischt.

Die Massen werden je nach Rezeptur durch Zugabe von Wasser vorzugsweise auf eine Viskosität zwischen 500 und 3000 mPas eingestellt. Je nach Ausgangstemperatur der Rohstoffe und Umgebungstemperatur werden Backmassentemperaturen zwischen 12°C und 26°C erreicht.

Der Backvorgang kann unter den Bedingungen des Backens von eßbaren Waffeln - das sind jene Produkte, die in der Beschreibungseinleitung ausführlich besprochen wurden - ausgeführt werden, speziell dann, wenn Mehl(anteile) als Stärkekomponenten eingesetzt werden. Vorteilhaft und vorzugsweise werden jedoch Abänderungen in zwei Richtungen vorzunehmen sein:
1. beim Anbackvorgang nach der Massendosierung
2. beim Zeit-/Temperaturverlauf des Backvorganges

### Ad 1. Anbackvorgang

Das ein- und mehrmalige Heben und Senken der oberen Backformhälfte ("Wippen") nach der Massendosierung und vor dem Verschließen der Backform zur (1) endgültigen Ausfüllung der Form und (2) zum Ausbacken des Produktes wird mit Vorteil angewendet.

Dabei laufen folgende Vorgänge mit den anschließend beschriebenen positiven Auswirkungen ab.
1.1 Die Backmasse, welche in einem räumlich begrenzten Bereich in dicker Schicht in die Backform dosiert wird, kann durch das Absenken der oberen Backformhälfte auf einer breiteren Fläche in dünnerer, etwa der endgültigen Produktdicke entsprechenden Schichtdicke verteilt werden und erfährt dabei eine erste Erhitzung.
1.2 Verbunden mit dieser Erhitzung ist eine Freisetzung von Wasserdampf, der bei der anschließenden Hebebewegung ohne Umweg über Ausdampföffnungen direkt entströmen kann. Dies bewirkt ein schnelleres Abtrocknen mit den Folgeeffekten: verkürzte Backzeit und höhere Materialdichte bzw. -festigkeit des Produktes.
1.3 Es kommt zu einer "dosierten" Verteilung der Backmasse in der Form mit folgenden positiven Begleitfaktoren. Nach der ersten Verteilung beim Absenkvorgang (1) und der einsetzenden Erhitzung kommt es bei den anschließenden Schließvorgängen zu einem schrittweisen Ausfüllen der Form durch Dampfentwicklung. Diese ist aber durch das zwischenzeitliche Anheben und Ausdampfen geringer als bei sofortigem Verschliepen. Dieses langsamere Ausfüllen der Form kann über die Steuerung der Zeiten für das Absenken, Anheben sowie über die Zahl dieser Bewegungen "dosiert" werden. Die bessere Ausformung der Details der Backform und eine fehlerlose Oberfläche des Produktes sind damit zu erreichen.

Folgende Bereich erwiesen sich als zweckmäßig:

### Zeit

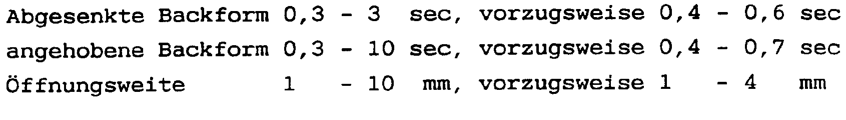

### Ad 2. Zeit-/Temperaturverlauf

Der Backvorgang erfordert einen Mindestenergieeintrag, der wesentlich vom Energiebedarf für die Erhitzung und Verdampfung des in den Backmassen enthaltenen Wassers bestimmt ist. Dieser Energieeintrag kann über die Temperatur der Backform und über die Verweilzeit in der Form erfolgen. Die Temperatureinstellung - zwischen 145 bis 225°C - und die Backzeit - zwischen 40 und 230 sec - sind daher nicht unabhängig wählbar: tiefere Temperatur bedingt längere Fertigungszeit und vice versa.

Im Anschluß an den primären Herstellungsschritt, dem Backen des Produktes, wird über eine Konditionierung durch Einstellung des Wassergehaltes des Produktes die gewünschte Textur: zäh, fest, und damit die gewünschte Deformierbarkeit und mechanische Stabilität erreicht.

Die Untergrenze des Wassergehaltes ist mit etwa 6 Gew.-% gegeben, darunter wird das Produkt zunehmend spröde und die mechanische Belastbarkeit sinkt ab.

Die Obergrenze des Wassergehaltes ist mit vorzugsweise 16 Gew.-% festzulegen, um die Gefahr eines allfälligen mikrobiellen Wachstums mit Sicherheit auszuschließen.

Bei Mitverwendung der in der Verpackungsindustrie üblichen Konservierungsstoffe ist eine Feuchtekonditionierung bis 22 Gew.-% möglich.

Die Konditionierung erfolgt in bekannter Weise in diskontinuierlich betriebenen Klimakammern oder in Durchlaufeinrichtungen. Kaltdampf-, Heißdampfverfahren sowie Feinstvernebelung etwa mit Ultraschall können angewendet werden, wobei sicherzustellen ist, daß es an den Oberflächen der Produkte zu keiner Bildung von Feuchtigkeitsfilmen kommt und die Wasseraufnahme 22 Gew.-% nicht übersteigt. Eine zu starke Durchfeuchtung führt zur Erweichung des Struktur und zu einer Deformation des Produktes.

Das erfindungsgemäße Verfahren zur Herstellung von Formkörpern beruht auf dem Einbringen einer im wesentlichen isotropen Backmasse in beheizte Backformen. Sowohl die für die Ausbildung der Struktur maßgebenden Bestandteile wie auch allfällige Zusatz-, Füll- und Hilfsstoffe sind gleichmäßig in der Masse verteilt.

Diese Formkörper können auch als Werkstoff-Verbunde hergestellt werden, bei denen in den Basiskörper bereits vorgefertigte und vorgeformte, im allgemeinen flächige, allenfalls fadenartige Materialien während des Backvorganges in die dabei entstehende Struktur miteingebunden werden. Als flächige Materialien können auch nach dem erfindungsgemäßen Verfahren hergestellte Produkte eingesetzt werden.

Erste Voraussetzung dafür ist, daß die einzubindenden Materialien spätestens zu einem Zeitpunkt vor dem endgültigen Verschließen der Form an einer vordefinierten Stelle der Form und in definierterAbfoige zum Eintragen der Grundmasse des Basiskörpers eingebracht werden (vgl. Ausführungsbeispiele), wobei diese Einbringung vor einem allenfalls durchzuführenden Wippvorgang erfolgt.

Zweite Voraussetzung für die Verwendung solcher flächiger oder fadenförmiger Materialien ist, daß deren Stabilität, etwa gegen Schmelzen bei den angewendeten Backtemperaturen, gewährleistet ist.

Dritte Voraussetzung: Die einzubringenden flächigen oder fadenförmigen Materialien dürfen an ihrer dicksten Stelle maximal der lichten Weite der Backform entsprechen oder müssen allenfalls auf diese Dicke komprimierbar sein.

Nach unten liegt die Begrenzung in der mechanischen Handhabbarkeit bzw. Herstellbarkeit entsprechender Materialien (Folien). Die in den Beispielen verwendete 12 Mikrometer starke Folie stellt daher keinen Grenzwert nach unten dar.

### Beispiele solcher Materialien:

1. Folien oder Blätter:
   Papier, Karton jeder Art, d.h. im wesentlichen aus Faserstoffen, vorwiegend Cellulose hergestellte Materialien. Diese Papiere können gefärbt, bedruckt oder speziell ausgerüstet sein.
   Kunststoff, Polyethylenterephthalat und andere temperaturstabile Materialien
   Aluminium
   Vliese oder Matten, Fasern

   Fadenförmige, gegebenenfalls zu Vliesen oder Matten in mehr oder weniger regelmäßiger Weise verknüpfte oder anderweitig vernetzte Materialien aus Glas, Kunststoff, Metall, Naturfasern (z.B. div. Bastfasern, Baumwolle, Stroh, usw.)

Die Einbindung der genannten Materialien in den Basiskörper erfolgt während dessen Herstellung durch Backen bei Temperaturen zwischen 145 und 225°C unter den dabei herrschenden Bedingungen: Druckspitze bis ca. 2,5 bar, Freisetzung eines großen Volumens an Wasserdampf, Verkleisterung des Basismaterials Stärke.

Die Haft- und Bindewirkung der eingeformten flächigen bzw. fadenförmigen Materialien ist für die vorgesehenen Verwendungszwecke der damit versehenen Formkörper (z.B. Teller, Tasse, Becher, Tray, Einlageblatt, Träger, Stab, Spatel und verwandte Gebrauchsgegenstände) ausreichend und ist nicht an das Vorhandensein von Klebstoffen oder sonstigen Haft- oder Bindemitteln gebunden, sondern beruht auf der, bei den beschriebenen Herstellbedingungen auftretenden Haft- und Klebewirkung in Abhängigkeit von der Oberflächenbeschaffenheit der eingebundenen Materialien (Rauhigkeit, Porosität).

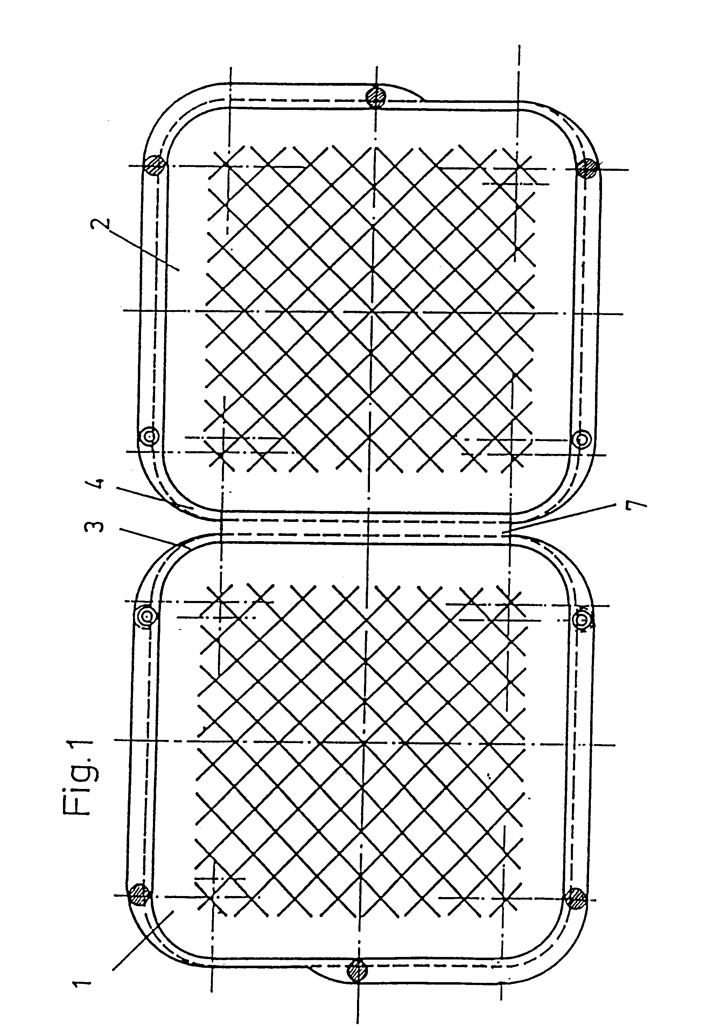

Mit den im folgenden dargelegten Ausführungsarten soll das Prinzip des Verfahrens in nicht einschränkender Weise erläutert werden.
I. Ausformung einer Verbindung von Formkörperteilen zur Ausbildung eines Scharniers
   In Fig. 1 ist schematisch die Ausbildung eines Scharniers zwischen zwei Formkörperteilen gezeigt. Die Ausbildung eines solchen Scharniers ist nicht eingeschränkt auf
   1. die Verbindung gleichartiger Formkörperteile (gleichartig in Form, Größe, Farbe und sonstige Materialzusammensetzung)
   2. die Verwendung eines einzelnen einzubringenden Teiles bzw. Streifens.
      Ebenso kann die Verbindung durch mehrere voneinander getrennte streifen-, band- oder schnurartige Einlagen hergestellt werden
   3. das Einbringen eines bereits vor dem Backvorgang auf seine endgültige Dimension begrenzten Teiles. Das eingebundene Material kann herausragen und dieser Überstand, der gegebenenfalls noch eine Verbindung zu benachbarten Werkstoff-Verbundkörpern herstellen kann, wird erst nach dem Herstellvorgang abgetrennt.

Das Scharniermaterial wird durch das Schließen der Backform in seiner Lage fixiert, in den vorgesehenen Bereichen von Backmasse benetzt und/oder umflossen und durch den Backvorgang in den Basisformkörper eingebunden.

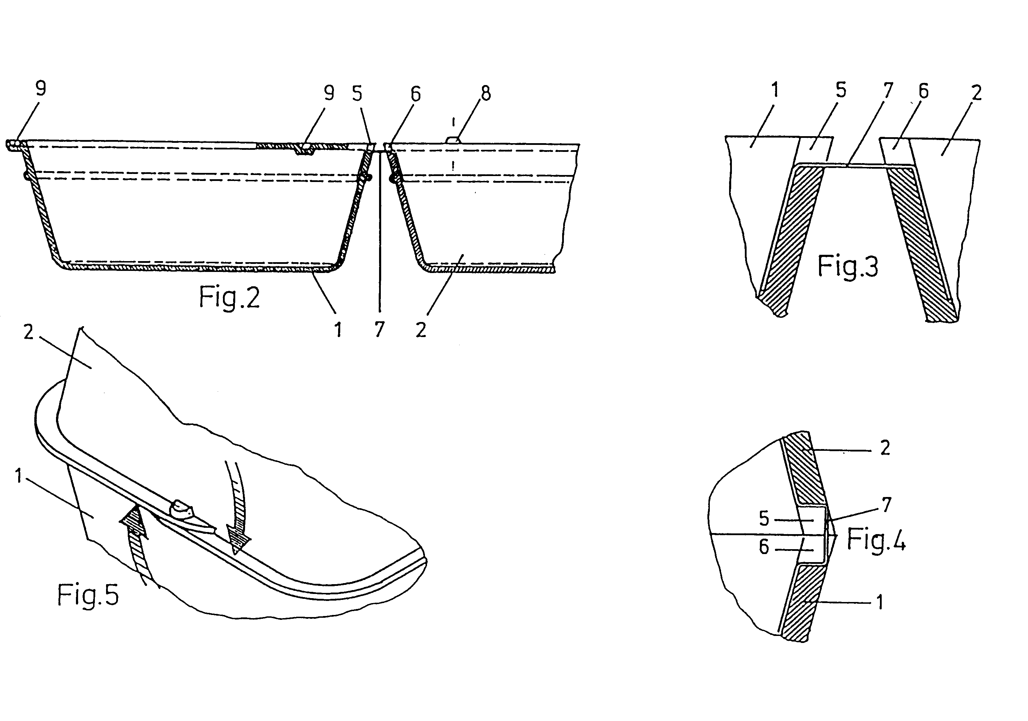

In den angeschlossenen Zeichnungen ist ein Ausführungsbeispiel für ein nach dem erfindungsgemäßen Verfahren hergestelltes Produkt dargestellt. Die Zeichnungen zeigen einen gebackenen Formkörperfür einen, aus zwei gleichen, mit einem Scharnier untereinander verbundene Behälterhälften bestehenden Klappbehälter. Fig. 1 zeigt eine Draufsicht auf den fer tiggebackenen Formkörper, so wie er aus der Behälterbackform entnommen wird; Fig. 2 einen Schnitt durch den Formkörper der Fig. 1; Fig. 3 den Bereich des Bandscharniers in vergrößerter Darstellung; Fig. 4 zeigt das Bandscharnier im gegeneinandergeklappten Zustand der beiden Behälterhälften, d.h. bei geschlossenem Klappbehälter, und Fig. 5 zeigt einen Teil des geschlossenen Klappbehälters von außen.

Der gebackene Formkörper besteht aus zwei, untereinander gleichen, nach oben offenen, Behälterschalen 1,2, die im gegeneinandergeklappten Zustand einen, in sich geschlossenen Klappbehälter bilden. Die beiden Behälterschalen 1,2 sind an ihren, einander benachbarten Rändern 3,4 durch ein in Ausnehmungen 5,6 eingelassenes Bandscharnier 7 verbunden, welches aus einem, mit den beiden den Basiskörper bildenden Behälterschalen mitgebackenen flächigen Material z.B. einem Band besteht. Um ein gegenseitiges Verschieben der beiden Behälterschalen im gegeneinandergeklappten Zustand zu verhindern, sind an den aufeinander zu liegen kommenden Stirnseiten der Seitenwände der Behälterschalen 1,2 miteinander in Eingriff bringbare Erhebungen 8 und Vertiefungen 9 vorgesehen.

Ausführungsvarianten sind in den Beispielen 7 bis 9 beschrieben.

Unter den voranstehend bereits genannten Voraussetzungen an die Beschaffenheit von mit dem Basiskörper verbundenen flächigen Materialien werden von diesem Teile der Innen- bzw. Außenseite der schließlich entstehenden Formkörper abgedeckt.

Aufgrund der beim Backvorgang auftretenden Wasserdampfentwicklung ergibt sich, daß
1. flächige Materialien, die in Bezug auf die gesamte Außenfläche (Unterfläche) des Basiskörpers zentrisch eingebracht wurden, an der vorgegebenen Position eingebunden werden und konturenscharf an der Aupenseite liegen, ohne von Backmasse unterflossen zu werden. Einzige Voraussetzung dafür ist die darauffolgende, ebenfalls zentrische Einbringung der Backmasse.
2. Flächige Materialien, die nicht zentrisch in Bezug auf die Backmassendosierung und damit die anschließende Wasserdampfentwicklung eingebracht werden eine Verschiebung erfahren und nicht an einer vordefinierten Stelle eingebunden werden.
3. Das unter 1 und 2 Ausgeführte gilt sinngemäß für die Innenfläche (obere Fläche) des Basiskörpers mit der Maßgabe, daß die Backmassendosierung vor dem Einbringen des flächigen Materials erfolgt.

Überraschend ist jedoch, daß das Einbinden von flächigem Material im Zuge des Backschrittes des Herstellverfahrens die ganze Ober- bzw. Unterfläche des Basiskörpermaterials oder auch beide Flächen umfassen kann.

In den in den Beispielen 10 bis 24 beschriebenen Versuchen traten weder Probleme mit dem durchgehenden Austrocknen bzw. Ausbacken noch mit derAusbildung der Oberfläche auf. Diese hätten sich aufgrund des geänderten Wärmemengeübergangsverhaltens infolge Belegung der Oberflächen mit schlechter wärmeleitenden Materialien ergeben können.

Es wird jeweils vor bzw. nach der Backmassendosierung oder auch sowohl vor als auch nach der Dosierung ein entsprechend gropes Stück des flächigen Materials in die Backform eingelegt, daß die Ober- und/oder Unterfläche nach Schließen der Backform teilweise oder vollständig bedeckt ist bzw. noch ein Überstand an flächigem Material auftritt.

Sehr glatte und zugfeste Materialien wie beispielsweise Polyethylenterephthalatfolien können nach dem Ausbacken zwar zerstörungsfrei abgezogen werden, wobei auch hier elektronenoptisch und mikroskopisch, jedoch auch mit freiem Auge sichtbare Reste von anhaftendem Basiskörpermaterial festzustellen sind. Dies wurde rasterelektronenmikroskopisch dokumentiert und belegt eine intensive Wechselwirkung selbst bei der Einbindung glatter, flächiger Materialien.

Das unerwartet problemlose Fertigen solcher ober- und unterseitig teil- oder vollflächig bedeckter Werkstoff-Verbunde ist auch in diesem Fall nicht an die geoffenbarten Formkörperrezepturen gebunden. Vergleiche Beispiel 13, etwa eine Rezeptur aus der Waffelherstellung.

Für die Fälle des vollflächigen ober- und unterseitigen Bedeckens des Basiskörpers können neuartige Produkte insofern hergestellt werden, als verschiedene, aus der Herstellung von eßbaren Waffeln und ähnlichen Backwaren her bekannte Einschränkungen wegfallen.

Dies betrifft:
1. Das Kleben an der Backform, ausgelöst durch niedermolekulare Kohlenhydrate (z.B. Zucker, Sirupe, Polyole) die je nach Stoff und Konzentration nach der Fertigstellung besonders harte Strukturen (vgl. Beispiel 18 mitZucker) ergeben oderaberals Feucht- bzw. Weichhaltemittel dienen können wie etwa Glyzerin.
2. Die Verwendung von Fetten, Ölen und Emulgatoren wie z.B. Lecithin in ihrer Funktion als Formtrennmittel.
3. Besondere Probleme mit dem raschen oxidativen Verderb solcher Backwaren vor allem wegen der Verteilung der unter 2. genannten Fettstoffe auf große, poröse Oberflächen.
4. Die Verschmutzung der Backformen, bedingt durch nach dem Entformen zurückbleibende Rückstände, die sich im Laufe wiederholter Backzyklen aufbaut.

Beispielhaft sind in den Ausführungsbeispielen 19 und 20 aus der Waffel herstellung her bekannte Rezepturen ohne Verwendung von Fetten und Lecithin eingesetzt worden. Eine kontinuierliche Produktion ohne diese Zusätze, speziell bei erhöhten Konzentrationen niedermolekularer Kohlenhydrate (Beispiel 20) ist ohne das beschriebene Bedecken der Produktober- und -unterflächen nicht ausführbar.

### TESTMETHODEN

### 1. UV-Test

Prinzip: Bestrahlung der Proben mit UV-Licht (Wellenlänge 366 nm) mit anschließender sensorischer Beurteilung.

Gerät: CAMAG UV-Kabinett, Probenabstand vom Filterglas 80 mm, Bestrahlungsdauer 25 Stunden

Oxidative Veränderungen an Fetten laufen über Radikalreaktionen ab. Eine besonders rasche Induktion solcher Reaktionen ist durch Photooxygenierung möglich. Aus diesem Grund kann durch UV-Bestrahlung von Fetten bzw. fetthaltigen Proben sehr schnell eine Fettoxidation ausgelöst werden. Nur bei Abwesenheit von Fetten oder bei Fettkonzentrationen, die bei den ranzig riechenden Abbauprodukten nicht zum Überschreiten der Geruchsschwelle führen, sind im UV-Test keine Geruchsabweichungen merkbar.

Der UV-Test ist daher ein empfindlicher Schnellnachweis auf Vorhandensein von Lipiden, die ihrerArt oder Konzentration nach zu negativen sensorischen Veränderungen der Formkörper bei Langzeitlagerung unter Einfluß von Licht- und/oder Luftsauerstoff führen können.

Auswertung: Sensorische Beurteilung auf Geruchsabweichungen
1 keine negativen Geruchseindrücke
2 sehr leicht ranzig/verbrannt/muffig
3 leicht ranzig/verbrannt/muffig
4 ranzig/verbrannt/muffig
5 deutlich ranzig/verbrannt/muffig

Die Geschmacksauswertung stellt in analoger Weise auf die Geschmacksnoten ranzig/verbrannt/dumpf ab.

UV-Test bestanden: Bewertung nicht höher als 3

### 2. Lagertest

### Sensorische Bewertung in 2-Wochen-Abständen

Auswertung: Sensorische Beurteilung auf Geruchs- und Geschmacksabweichungen
1 keine negativen Geruchseindrücke
2 sehr leicht ranzig/muffig
3 leicht ranzig/muffig
4 ranzig/muffig
5 deutlich ranzig/muffig

Lagertest bestanden:
Bewertung nach 2 Wochen nicht höher als 1
Bewertung nach 6 Wochen nicht höher als 2

### 3. Beurteilung der Ausformung

Unter Ausformung ist hier die exakte Ausbildung der durch die Backform vorgegebenen Gestalt des Formkörpers zu verstehen.

Die Entformung, d.h. das Ablösen des Formkörpers aus der Backform am Ende des Backvorganges, wird bei den einzelnen Rezepturen unter der Bezeichnung "Kleben" angesprochen.

Unter "Kleben" ist das Verbleiben von Teilen des Formkörpers in der Backform unter Zerbrechen des Formkörpers oderdie sichtbare Bildung von Backrückständen bereits nach einzelnen Backvorgängen zu verstehen.

Eine allfällige Bildung von Rissen im Formkörper, z.B. temperatur- oderfeuchtebedingte Spannungsrisse, ist nicht unter "Kleben" bzw. "Ausformung" zu beanstanden.
1 alle Details sehr gut ausgeformt
2 gute Ausformung, einzelne Details an exponierten Stellen nicht voll ausgeformt
3 in allen wesentlichen Bereichen gut ausgeformt, vereinzelte Mängel
4 deutliche Ausformungsmängel
5 schlecht ausgeformt
   Ausformungstest: Beurteilung 1 - 3: bestanden (+ in Tabelle)
      Beurteilung 4 + 5: nicht bestanden.

### WIPPEN VOR DEM VERSCHLIESSEN DER FORM

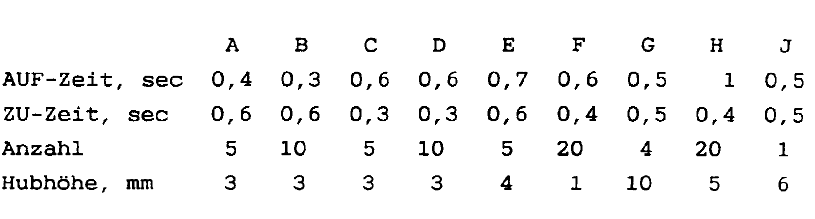

### KONDITIONIERUNG

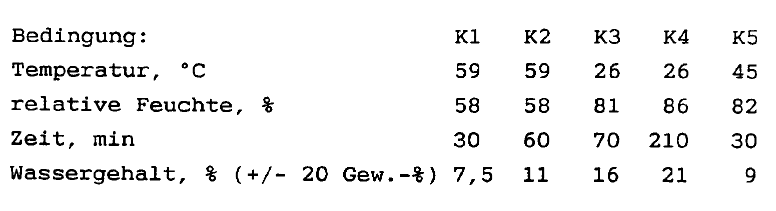

Die angegebenen Wassergehalte (7,5 Gew.-%, 11 Gew.-% usw.) sind Durchschnittswerte, die einer Streuung von Stück zu Stück unterworfen sind und auch von der Rezeptur und Wandstärke des jeweiligen Formkörpers beeinflußt werden.

Es wurde daher eine Bandbreite von mindestens + 20 Gew.-% des Wassergehaltes d.h. zum Beispiel 7,5 ± 1,5 Gew.-% angegeben.

Der Maximalwassergehalt von 22 Gew.-% darf aber keinesfalls überschritten werden.

### Texturprüfung

Die gebackenen und konditionierten Formkörper werden mit Hilfe eines Prüfgerätes
STRUCTOGRAPH, Brabender OHG Duisburg, getestet 2 kp Meßdose, 1000 Skalenteile entsprechen einer Kraft von 2 kp (19,6 N)
Prüfkörper: Zylinder-Stab, Durchmesser 6,00 mm
Prüfmuster: Wandstärke 2,0 mm, Verrippung 8 x 8 mm
Prüfmuster L (Wassergehalt 8,3 Gew.-%, Rezept Nr. 11): erforderliche Kraft für Perforation: 750 Skalenteile kein Bruch, Muster bleibt ganz
Prüfmuster K (Wassergehalt 11,1 Gew.-%, Rezept Nr. 11): erforderliche Kraft für Perforation: 680 Skalenteile kein Bruch, Muster bleibt ganz

Die Texturprüfung ist ein Maß für die Festigkeit des Produktes in Bezug auf Pentration (Durchlöcherung) der Formkörper bei unter 90 Grad zur Formkörperoberfläche ansetzender Kraft.

Einige typische Meßwerte
knusprige Waffel: erforderliche Kraft 200 - 280 Skalenteile
   Das Meßgut ist spröde, hat kaum elastische bzw. plastische Anteile und zerbricht bereits bei einer Kraft unter 450 Skalenteile (entsprechend 8,8 N) in viele kleine Teile.
Formkörpermaterial: 8,3% Wasser, Rezept Nr. 11
   Das Meßgut ist bereits plastisch/ elastisch hat aber noch geringfügig spröde Anteile, die den erforderlichen Kraftaufwand erhöhen.

Der Kraftaufwand ist wegen dieser noch spröden Strukturanteile noch um ca. 10 Gew.-% höher als bei noch feuchter konditionierten Produkte.

Letztere Produkte (11,1 Gew.-% Wassergehalt) können im Winkel von 90° gebogen werden ohne zu zerbrechen. Diese Eigenschaft nimmt mit steigendem Wassergehalt noch zu.

Die Herstellung von knickbaren bzw. faltbaren Formen ist daher gebunden an:
1. Die Herstellung dünner blattartiger Strukturen mit typischen Wandstärken von 0,5 bis 1,5 mm, vorzugsweise unter 1 mm, gegebenenfalls unter Mitbacken von Faltnuten.
2. Das Aufrechterhalten von Wassergehalten im Bereich von 10 bis 22 Gew.-%, vorzugsweise 12 bis 20 Gew.-% oder
3. Das ein- bzw. zweiseitige Laminieren des Formkörpermaterials mit flexiblen Überzügen, die beispielsweise aus Kunststoffen wie Polyethylen oder auch Kunststoffen oder Naturstoffen mit kautschukelastischen Eigenschaften bestehen können.
   Vergleichsmessung Waffeln: erforderliche Bruchkraft unter 450 Skalenteilen vorzugsweise unter 250 Skalenteilen

### Produktbeispiele

### Beispiel 1:

FAST FOOD-VERPACKUNG
   pyramidenstumpfförmige Behälterschale mit abgerundeten Ecken und Kanten
   Format: 130 x 128 mm, Höhe 40 mm
   Wandstärke: 1,8 mm bei angeformten Rippen und Laschen 2,4 mm
   Backtemperatur: 160°C (Außenform) 165°C (Innenform)
   Backzeit: Minimum 80 sec Maximum 105 sec
   Dosierzeit: 2,3 sec; Schließzeit: 1,2 sec
   Rezepturen Nr. 1 bis Nr. 10; Test beurteilung wie oben beschrieben

### Beispiel 2:

VERPACKUNGSEINSATZ
   niedrige wannenförmige Behälterschalte mit verstärktem oberen Rand und mehreren wannenförmigen Einzelabteilen
   Format: 186 x 64 mm, Höhe 17 mm
   Wandstärke: 1,8 mm 2,0 mm am oberen verstärkten Rand
   Backtemperatur: 185°C
   Backzeit: 45 sec
   Dosierzeit: 1,8 sec; Schließzeit 1,2 sec
   Rezepturen Nr. 11 bis 18 und 45-59; Testbeurteilung wie oben beschrieben

### Beispiel 3:

### BECHER

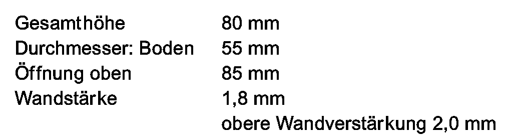

Backtemperatur: 170°C (Außenform)
   190°C (Innenform)
Backzeit: Minimum 43 sec (Versuch 19)
   Maximum 70 sec (Versuch 23)
Dosierzeit: 2,3 sec; Schließzeit 1,2 sec
Rezepturen Nr. 19 bis 27

### Beispiel 4:

### RUNDER TELLER

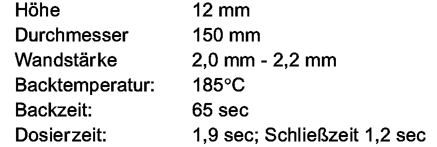

Rezepturen 27 bs 44; Test beurteilung wie oben beschrieben

### Beispiel Nr. 5:

ebenes Blatt mit beidseitigem Waffelmuster
   Format 290 x 460 mm
   Gesamtstärke 4,1 mm
   davon 0,3 mm Gravur, Unterseite, Gravurabstand
      2 mm
      1,8 mm Kernstärke
      2,0 mm Gravur, Oberseite, Gravurabstand
      8 mm
automatische Dosierung, Dosierzeit 1 sec,
Backtemperatur 175°C, Backzeit 100 sec, Rezept Nr. 11

### Beispiel Nr. 6

flache Tasse
   Format 135 x 185 mm
      mit abgerundeten Ecken und allseitig erhöhtem Randbereich
   Wandstärke 2,0/2,2 mm
manuelle Dosierung
Backtemperatur 190°C, Backzeit 90 sec, Rezept-Beispiele Nr. 60-70.

### Beispiel 7

Gebackener Formkörper für Klappbehälter, 2 Teilformen mit 130 x 125 x 40 mm Außenmaß mit um die Mitte der Scharnierseite zwischen den Teilformen spiegelbildlich kongruenten Außenkonturen. (Fig. 1)

Zusammensetzung des Basiskörpers: Rezeptur Nr. 109

Zusammensetzung des flächigen Materials: Papier holzfrei, weiß matt, 80 g/m² Streifen 80 x 20 mm, in Längsrichtung in der Mitte geknickt.
Abfolge: Schritt 1 Einlegen des Papierstreifens in die geschlossene untere Backform
   Schritt 2 Einbringen der Backmasse in die Vertiefungen der unteren Backform
   Schritt 3 Schließen der Backform
   Schritt 4 Backvorgang mit Ausbildung des Werkstoff-Verbundes
   Schritt 5 Entfernen des gebackenen Behälters
   Schritt 6 Konditionierung 15°C, 76% relative Feuchte, 145 min

### Beispiele 8 und 9

Gebackener Formkörper für Klappbehälter, 2 Teilformen mit 130 x 125 x 40 mm Außenmaß mit um die Mitte der Scharnierseite zwischen den Teilformen spiegelbildlich kongruenten Außenkonturen. (Fig. 1)

Zusammensetzung des Basiskörpers: Rezeptur Nr. 109

Zusammensetzung des flächigen Materials:
Beispiel 2 Textilvlies, Baumwolle/Cellulose 110 g/m², 80 x 35 mm, in Längsrichtung vorgefaltet
Beispiel 3 Vlies, Glasfaser, 31,5 g/m², 80 x 35 mm, in Längsrichtung vorgefaltet

### Abfolge analog Beispiel 7

### Beispiel 10

Gebackener Formkörper für Klappbehälter, 2 Teilformen mit 130 x 125 x 40 mm Außenmaß mit um die Mitte der Scharnierseite zwischen den Teilformen spiegelbildlich kongruenten Außenkonturen. (Fig. 1)

Zusammensetzunq des Basiskörpers:

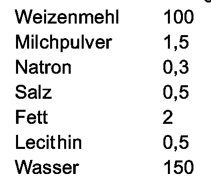

Zusammensetzung des flächigen Materials: Papier holzfrei, weiß, matt, 80 g/m²
Streifen 80 x 20 mm, in Längsrichtung in der Mitte geknickt
Abfolge: Schritt 1 Einlegen des Papierstreifens in die geschlossene untere Backform
   Schritt 2 Einbringen der Backmasse in die Vertiefungen der unteren Backform
   Schritt 3 Schließen der Backform
   Schritt 4 Backvorgang mit Ausbildung des Werkstoff-Verbundes
   Schritt 5 Entfernen des gebackenen Behälters
   Schritt 6 Konditionierung 15°C, 76% relative Feuchte 145 min

### Beispiel 11

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109

Zusammensetzung des flächigen Materials: vorgefertigtes Formkörpermaterial (Rezeptur Nr. 109 mit Zusatz von 0,05 Gew.-% Aktivkohle), Wandstärke 1,1 mm, glattes Blatt, Zuschnitt auf eine ebene Scheibe mit 62 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 12

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109

Zusammensetzung des flächigen Materials: Papier, 80 g/m² holzfrei, weiß, matt, ebene Scheibe, 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 13

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Gewebe aus Baumwolle/Cellulose weiß, mit blauen Linien, Flächengewicht 110 g/m², ebene Scheibe, 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 14

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Glasfaservlies, Flächengewicht 31,5 g/m², ebene Scheibe, 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 15

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Polyethylen-Terephthalat (PET)-Folie, 12 Mikrometer Foliendicke, ebene Scheibe mit 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 16

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Polyethylen-Terephthalat (PET)-Folie, 36 Mikrometer Foliendicke, ebene Scheibe mit 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 17

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur wie Beispiel 4
Zusammensetzung des flächigen Materials: Papier, 80 g/m² holzfrei, weiß, matt, ebene Scheibe, 100 mm Durchmesser
Abfolge: Schritt 1 Einbringen der Backmasse in die Vertiefung der unteren Backform
   Schritt 2 Zentrisches Einlegen der Scheibe auf die dosierte Backmasse
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Flächiges Material in die Oberseite des entstandenen Formkörpers vollständig eingebunden. Die Unterseite des flächigen Materials ist vollständig mit dem Formkörper verbunden, die Oberseite des flächigen Materials liegt frei.

### Beispiel 18

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Glasfaser-Vlies, Flächengewicht 31,5 g/m², quadratisches Vliesstück 200 x 200 mm
Abfolge: Schritt 1 Einbringen der Backmasse in die Vertiefung der unteren Backform
   Schritt 2 Einlegen des quadratischen Stücks aus flächigem Material zur völligen und symmetrischen Abdeckung der unteren Backform
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Das flächige Material deckt die Oberseite (Innenseite) des entstandenen Formkörpers des Werkstoff-Verbundes vollständig ab.

### Beispiel 19

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: Spezialpapier für Lebensmittel ("Backpapier"), Flächengewicht 70 g/m², Format 190 x 200 mm
Abfolge: Schritt 1 Einbringen der Backmasse in die Vertiefung der unteren Backform
   Schritt 2 Einlegen des quadratischen Stücks aus flächigem Material zur völligen und symmetrischen Abdeckung der unteren Backform
   Schritt 3 Schließen der Backform
   Schritt 4 Backvorgang und Ausbildung des Werkstoff-Verbundes
   Schritt 5 Entformen
   Schritt 6 Konditionierung 15°C, 76% relative Feuchte, 145 Minuten
Ergebnis: Das flächige Material deckt die Oberseite (Innenseite) des entstandenen Formkörpers des Werkstoff-Verbundes vollständig ab.

### Beispiel 20

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: PET-Folie, Folienstärke 15 Mikrometer, Format 175 x 210 mm
Abfolge: Schritt 1 Einbringen der Backmasse in die Vertiefung der unteren Backform
   Schritt 2 Einlegen des quadratischen Stücks aus flächigem Material zur völligen und symmetrischen Abdeckung der unteren Backform
   Schritt 3 Schließen der Backform
   Schritt 4 Backvorgang und Ausbildung des Werkstoff-Verbundes
   Schritt 5 Entformen
Ergebnis: Das flächige Material deckt die Oberseite (Innenseite) des entstandenen Formkörpers des Werkstoff-Verbundes vollständig ab.

### Beispiel 21

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: PET-Folie, Folienstärke 36 Mikrometer, Format 175 x 210 mm
Abfolge: Schritt 1 Einbringen der Backmasse in die Vertiefung der unteren Backform
   Schritt 2 Einlegen des quadratischen Stücks aus flächigem Material zur völligen und symmetrischen Abdeckung der unteren Backform
   Schritt 3 Schließen der Backform
   Schritt 4 Backvorgang und Ausbildung des Werkstoff-Verbundes
   Schritt 5 Entformen
Ergebnis: Das flächige Material deckt die Oberseite (Innenseite) des entstandenen Formkörpers des Werkstoff-Verbundes vollständig ab.

### Beispiel 22

Gebackener Formkörper für runden Teller mit den Dimensionen 150 mm Durchmesser; 12 mm Gesamthöhe; Wandstärke 2,0/2,2 mm; Temperatur 185°C, Backzeit 80 Sekunden

Zusammensetzung des Basiskörpers: Rezeptur Nr. 109
Zusammensetzung des flächigen Materials: PET-Folien, Folienstärke 15 Mikrometer, Format 175 x 200 mm, 2 Stück
Abfolge: Schritt 1 Einlegen der ersten Folie zur Abdeckung der Unterform
   Schritt 2 Dosieren der Backmasse
   Schritt 3 Einlegen der zweiten Folie zur völligen und symmetrischen Abdeckung der unteren Backform
   Schritt 4 Schließen der Backform
   Schritt 5 Backvorgang und Ausbildung des Werkstoff-Verbundes
   Schritt 6 Entformen
Ergebnis: Das flächige Material deckt die Oberseite (Innenseite) und die Unterseite (Außenseite) des entstandenen Formkörpers des Werkstoff-Verbundes vollständig ab.

### Beispiel 23

Gebackener Formkörper für runden Teller mit den Dimensionen 150 mm Durchmesser; 12 mm Gesamthöhe; Wandstärke 2,0/2,2 mm; Temperatur 180°C, Backzeit 110 Sekunden

Zusammensetzung des Basiskörpers (in Gew.-Teilen):

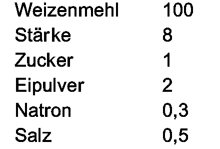

Wasser 150
Fett -
Lecithin -
Zusammensetzung des flächigen Materials: PET-Folien, Folienstärke 15 Mikrometer, Format 175 x 200 mm, 2 Stück
Abfolge: Schritt 1 Einlegen der ersten Folie zur Abdeckung der Unterform
   Schritt 2 Dosieren der Backmasse
   Schritt 3 Einlegen der zweiten Folie zur völligen und symmetrischen Abdeckung der unteren Backform
   Schritt 4 Schließen der Backform
   Schritt 5 Backvorgang und Ausbildung des Werkstoff-Verbundes
   Schritt 6 Entformen
Ergebnis: Das flächige Material deckt die Oberseite (Innenseite) und die Unterseite (Außenseite) des entstandenen Formkörpers des Werkstoff-Verbundes vollständig ab.

### Beispiel 24

Gebackener Formkörper für runden Teller mit den Dimensionen 150 mm Durchmesser; 12 mm Gesamthöhe; Wandstärke 2,0/2,2 mm; Temperatur 180°C, Backzeit 115 Sekunden

Zusammensetzung des Basiskörpers (in Gew.-Teilen):

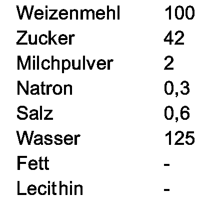

Zusammensetzung des flächigen Materials: PET-Folien, Folienstärke 15 Mikrometer, Format 175 x 200 mm, 2 Stück
Abfolge: Schritt 1 Einlegen der ersten Folie zur Abdeckung der Unterform
   Schritt 2 Dosieren der Backmasse
   Schritt 3 Einlegen der zweiten Folie zur völligen und symmetrischen Abdeckung der unteren Backform
   Schritt 4 Schließen der Backform
   Schritt 5 Backvorgang und Ausbildung des Werkstoff-Verbundes
   Schritt 6 Entformen
Ergebnis: Das flächige Material deckt die Oberseite (Innenseite) und die Unterseite (Außenseite) des entstandenen Formkörpers des Werkstoff-Verbundes vollständig ab.

### Beispiel 25: Ebenes Blatt;

Format 290 x 230 mm, Wandstärke 1,4 mm, glatte Oberfläche Backtemperatur 180°C, Backzeit 105 sec. Rezeptur Nr. 116
Ergebnis: glatte, vollständig ausgeformte Blätter, geschlossene Oberflächen, gute Beschrift- und Bedruckbarkeit

### Beispiel 26: Flache Tasse

Format 135 x 185 mm mit abgerundeten Ecken und allseitig erhöhtem Randbereich
Wandstärke 2,0/2,2 mm
Backtemperatur 180°C; Backzeit 130 sec
Rezepturen Nr. 117, 119 - 127

### Beispiel 27: rechteckiger Behälter, konische Form mit Stapelrand

Außenmaß 142 x 91 mm (oben)
   112 x 62 mm (unten)
Höhe 42 mm
Wandstärke 1,8/2,0 mm, Gravur 5 x 5 mm, 45 Grad an Außen- und Innenboden
Backtemperatur 165/180°; Backzeit 40 sec
Rezepturen Nr. 116, 128

### Beispiel 28: Wannenförmige Behälterschale mit verstärktem oberen Rand und 8 wannenförmigen Einzelabteilen

Format 106 x 173 mm, Höhe 30 mm
Wandstärke 1,8/2,0 mm; Gravur 5 x 5 mm, 45° am Innenboden
Backtemperatur 175/190°C
Backzeit 50 sec
Rezepturen Nr. 116, 128

### Beispiel 29: Niederer runder Becher;

Durchmesser 75 mm (oberer Rand)
   50 mm (Boden)
Höhe 30 mm
mit rundstabartigem Außendekor, glatter Innenrand verstärkter Rand (Maximaldicke 4 mm)
Wandstärke 1,5/1,8 mm, im Dekorbereich zwischen 1,2 und 3,2 mm Backtemperatur 180/185°C
Backzeit 60 sec
Rezepturen Nr. 116, 118

### Beispiel 30: Wannenförmige Behälterschale mit verstärktem oberen Rand und einsetzbarem Deckel und Bodengravur

Außenabmessungen: oben 135 x 171 mm im Maximum
   Boden 115 x 150 mm im Maximum
   Höhe 90 mm
Deckel: max. 127 x 164 mm, Höhe 18 mm
Wandstärke 1,8 mm
Backtemperatur: 190°C
Backzeit: 60 sec
Rezeptur Nr. 116

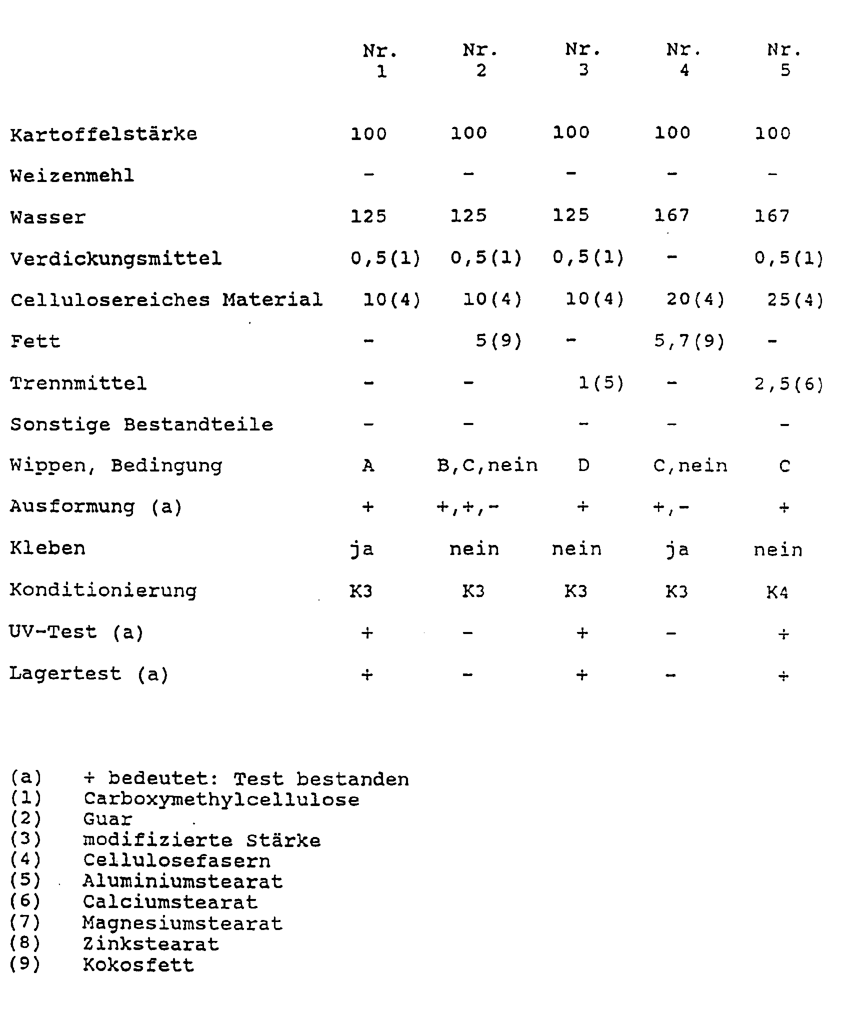

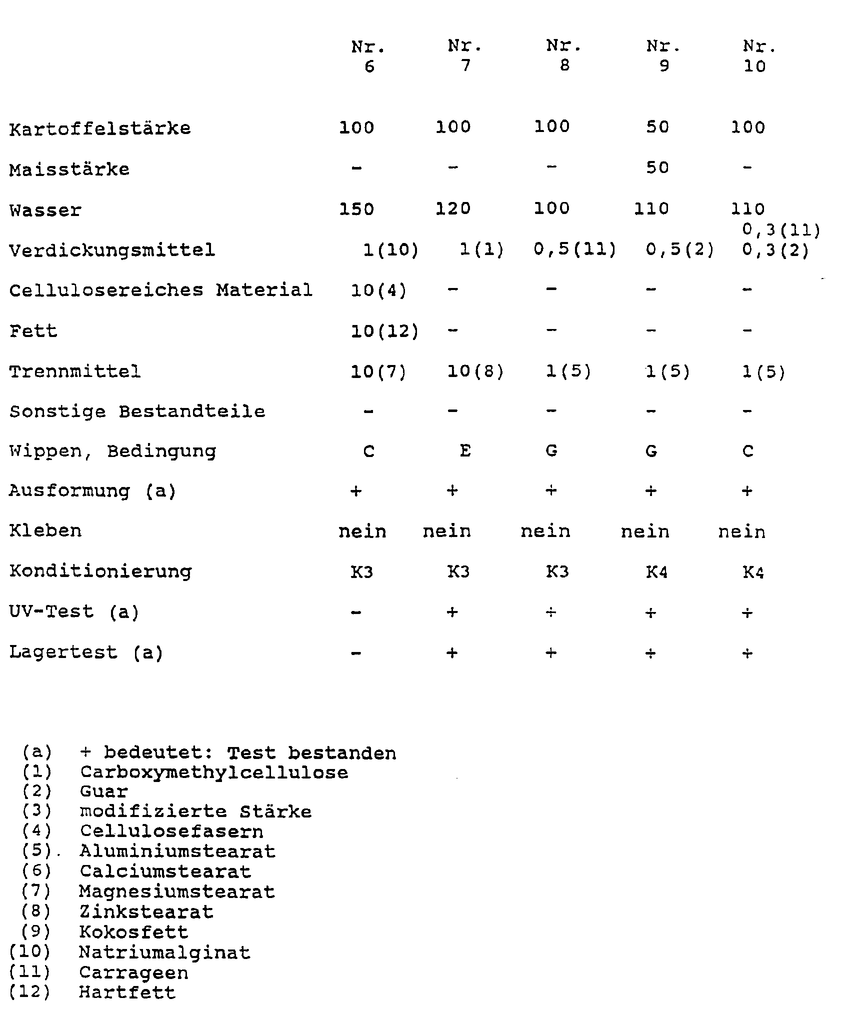

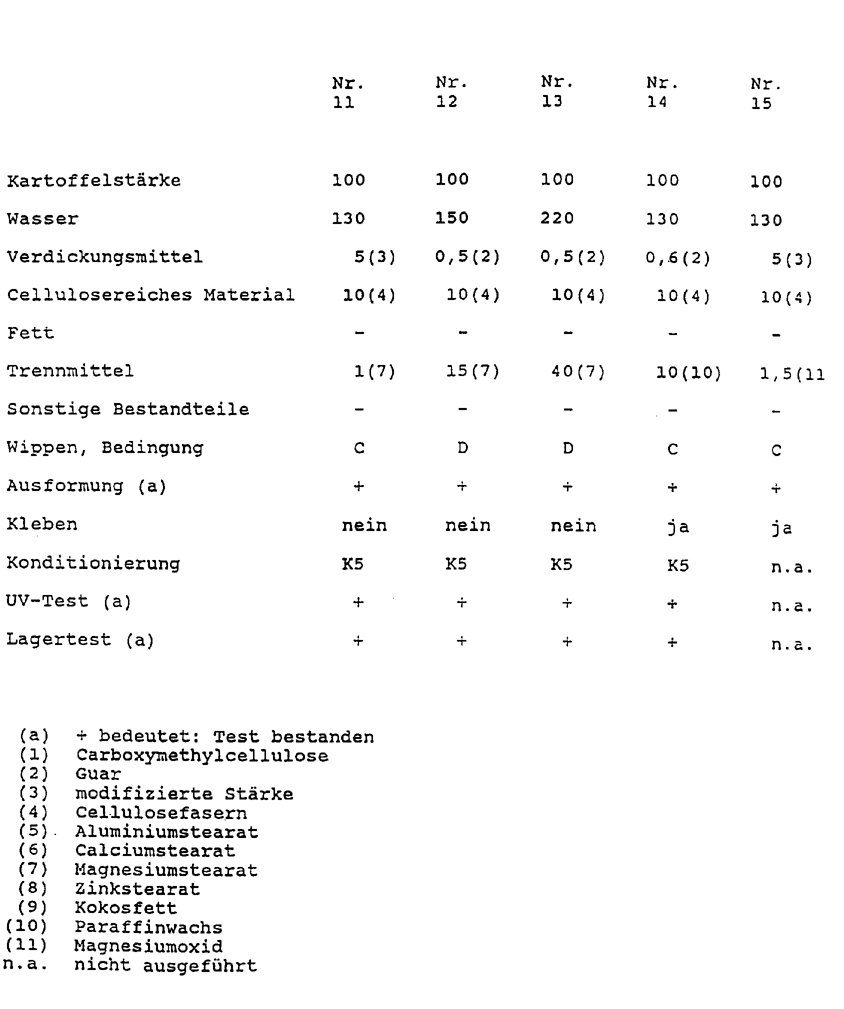

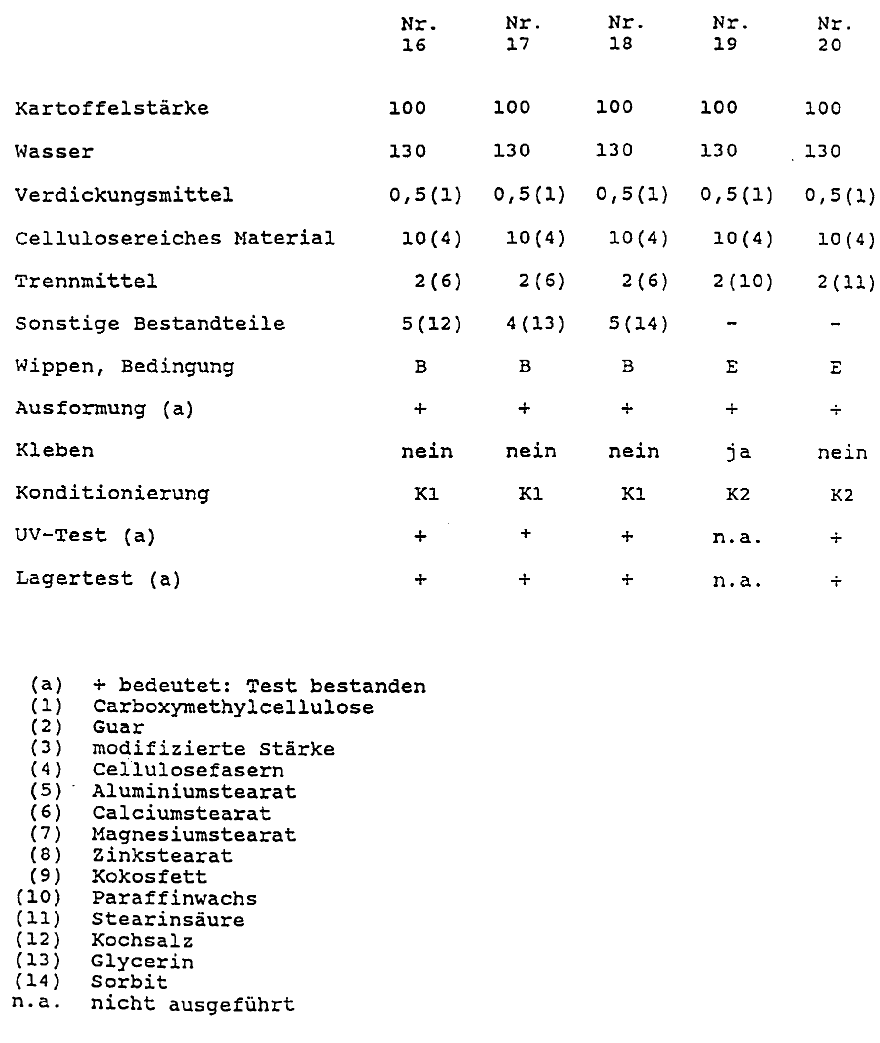

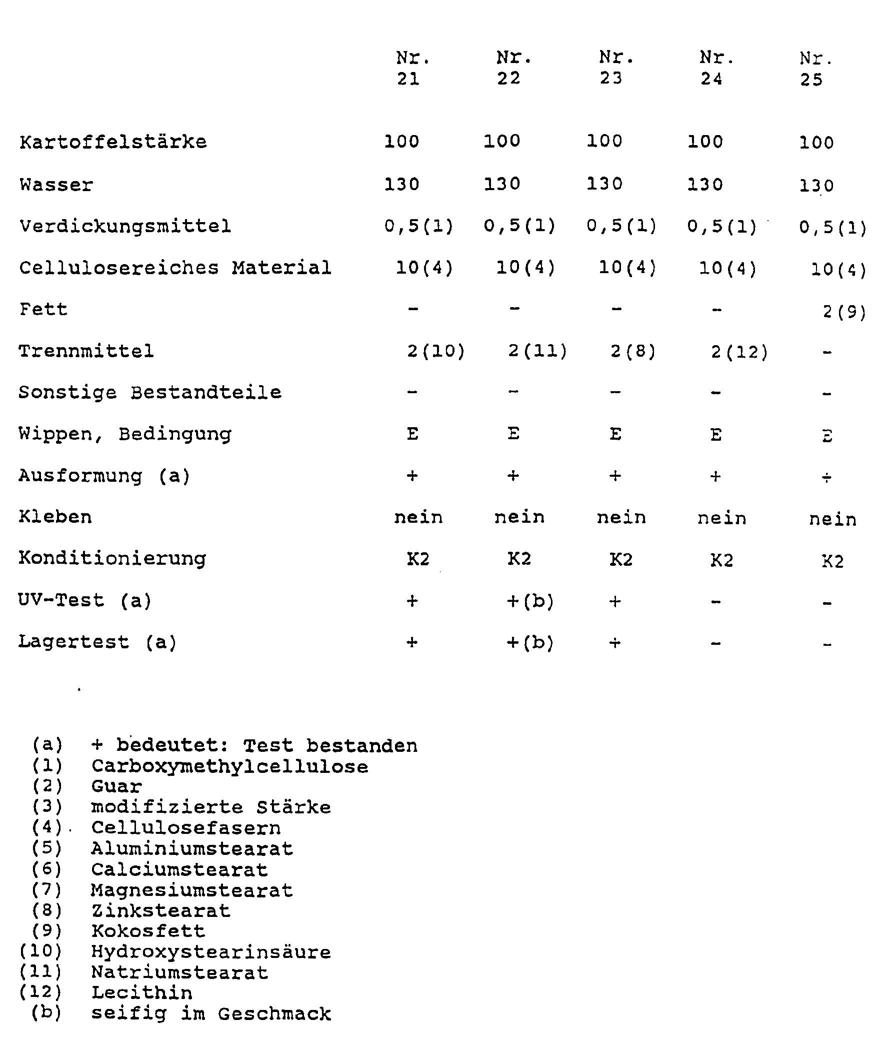

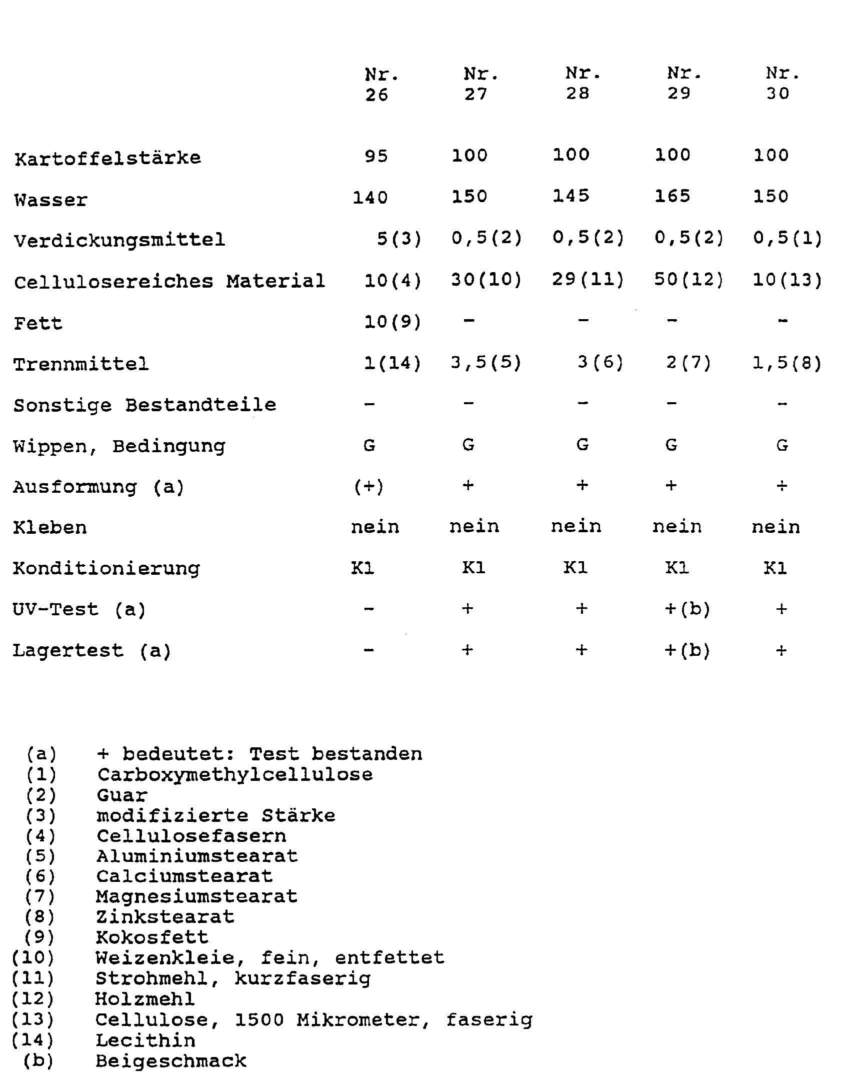

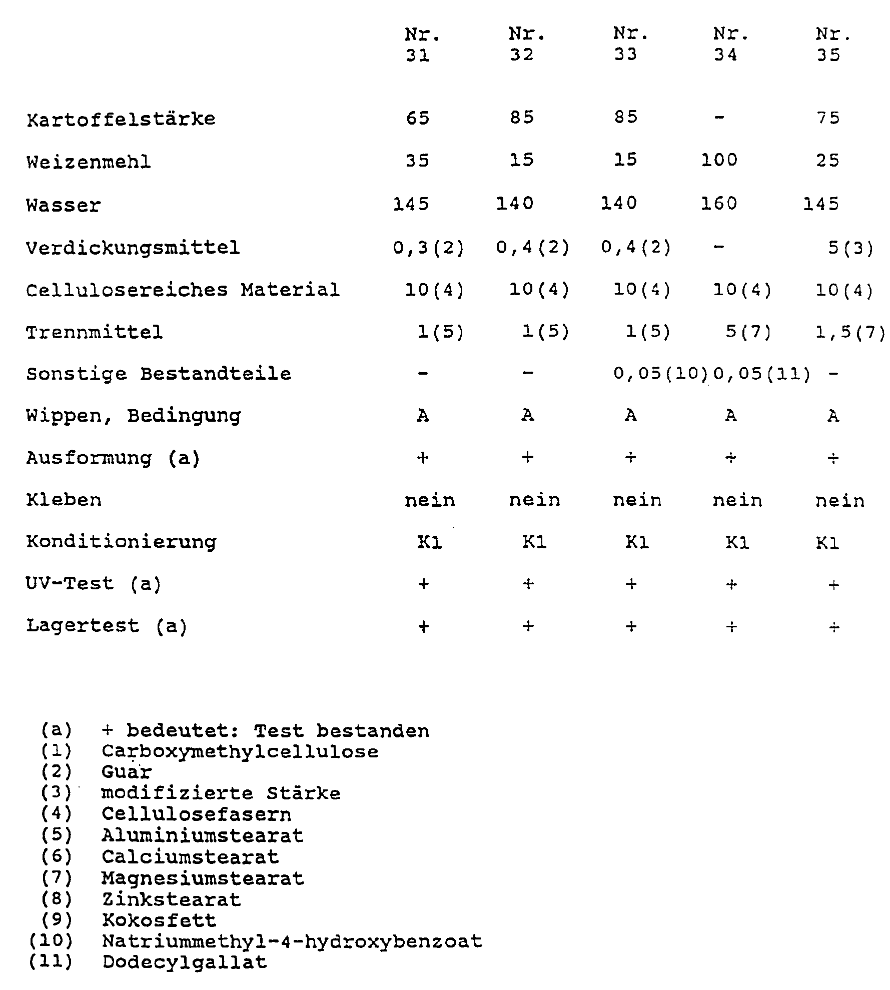

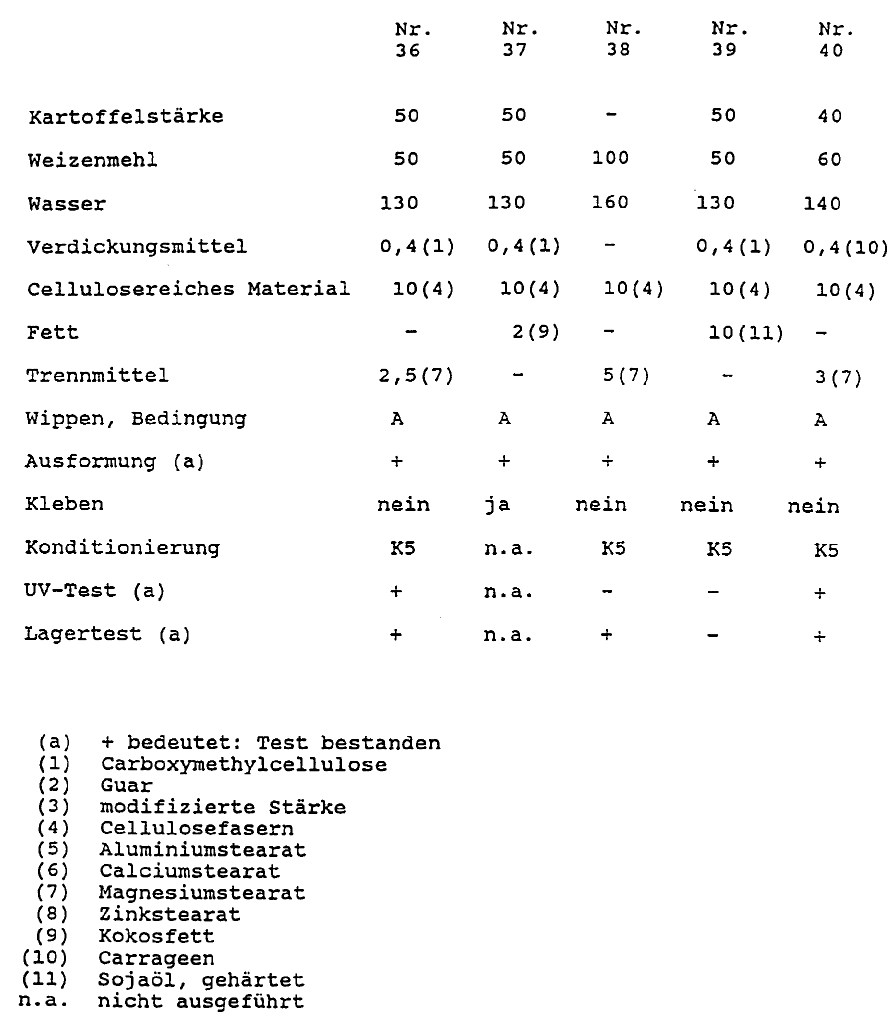

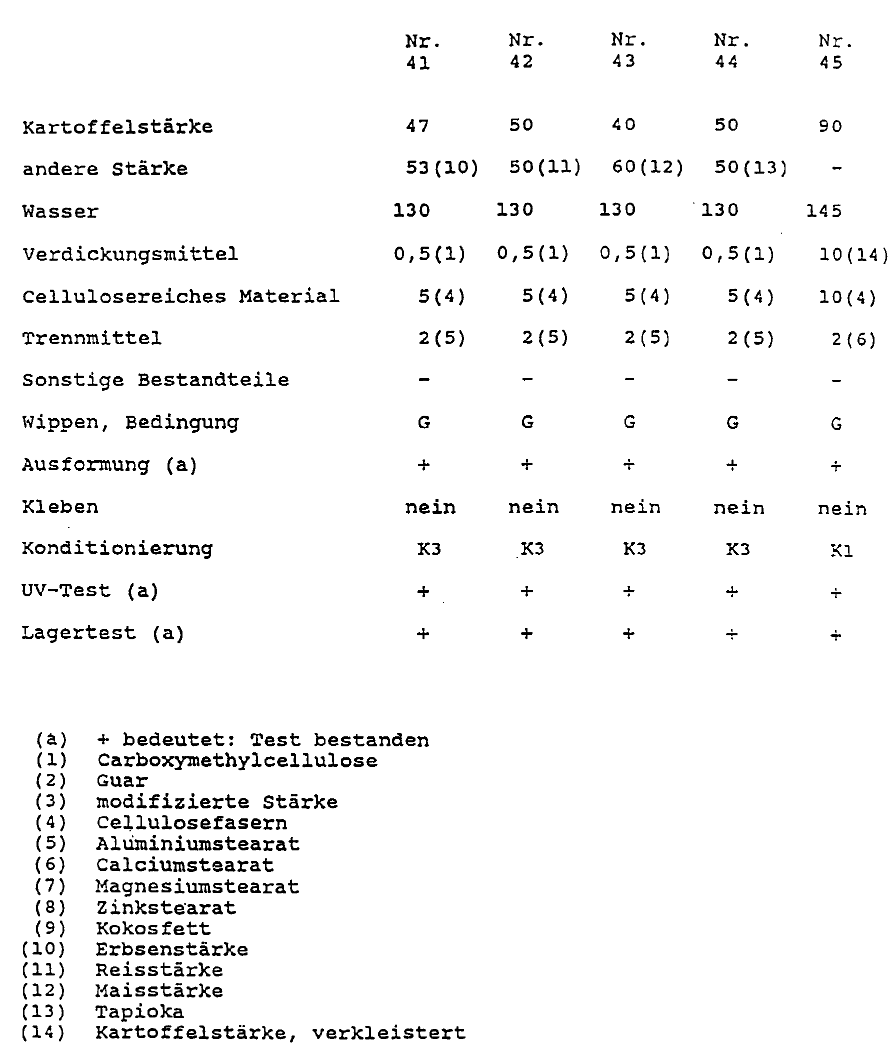

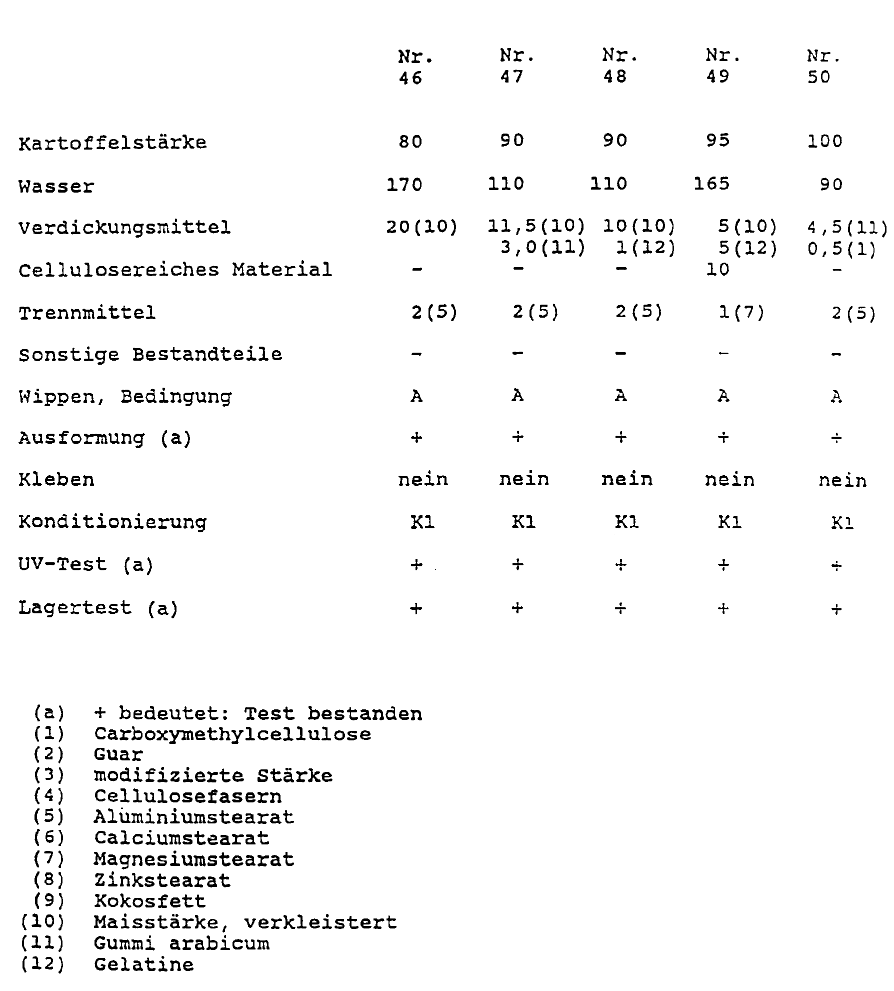

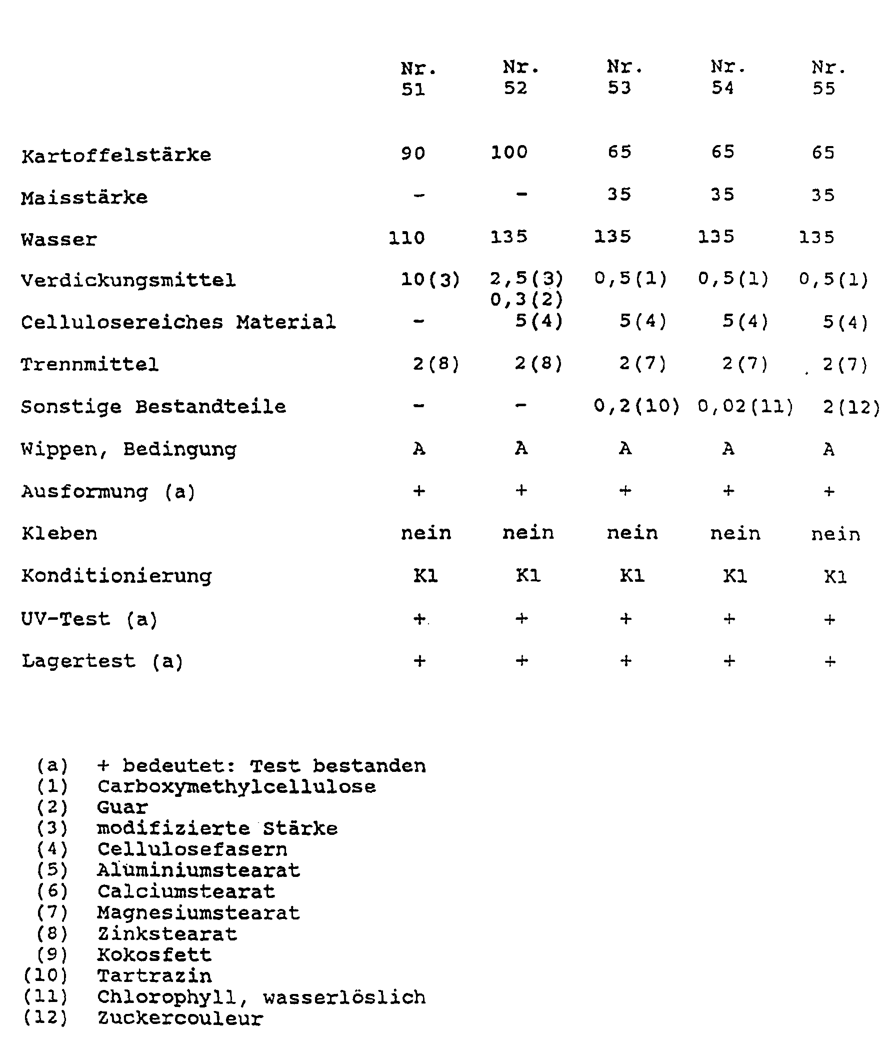

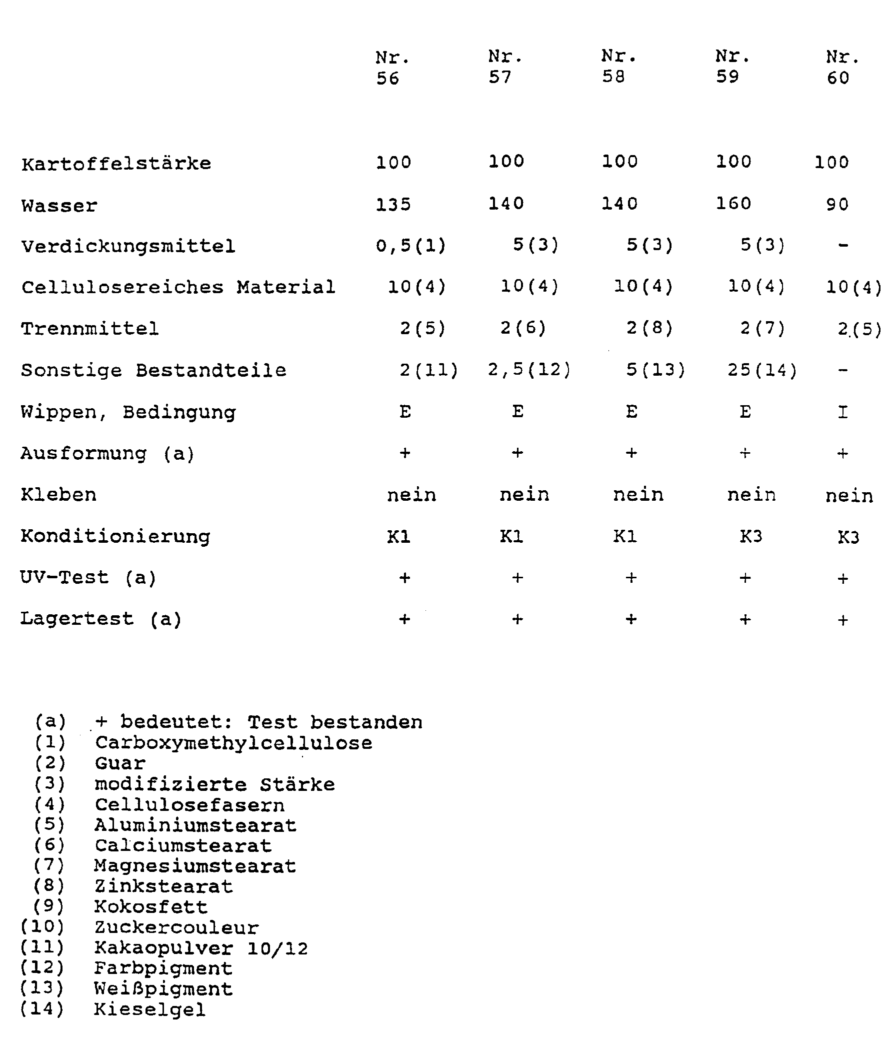

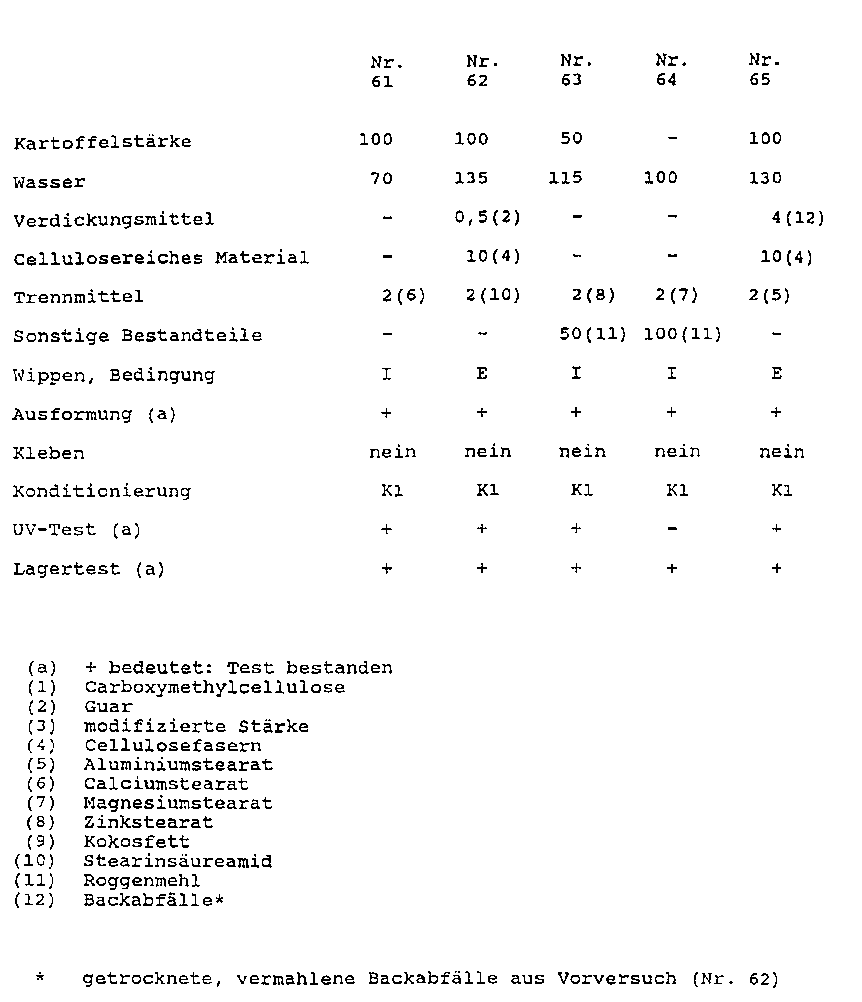

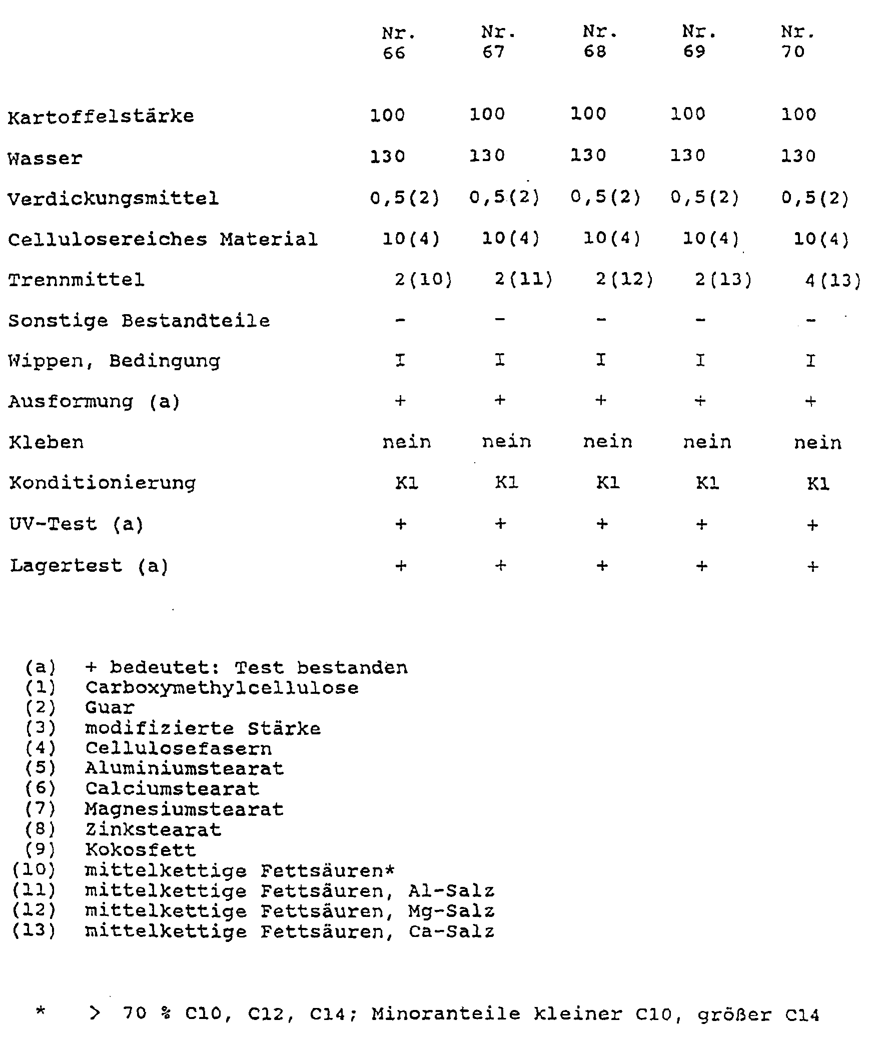

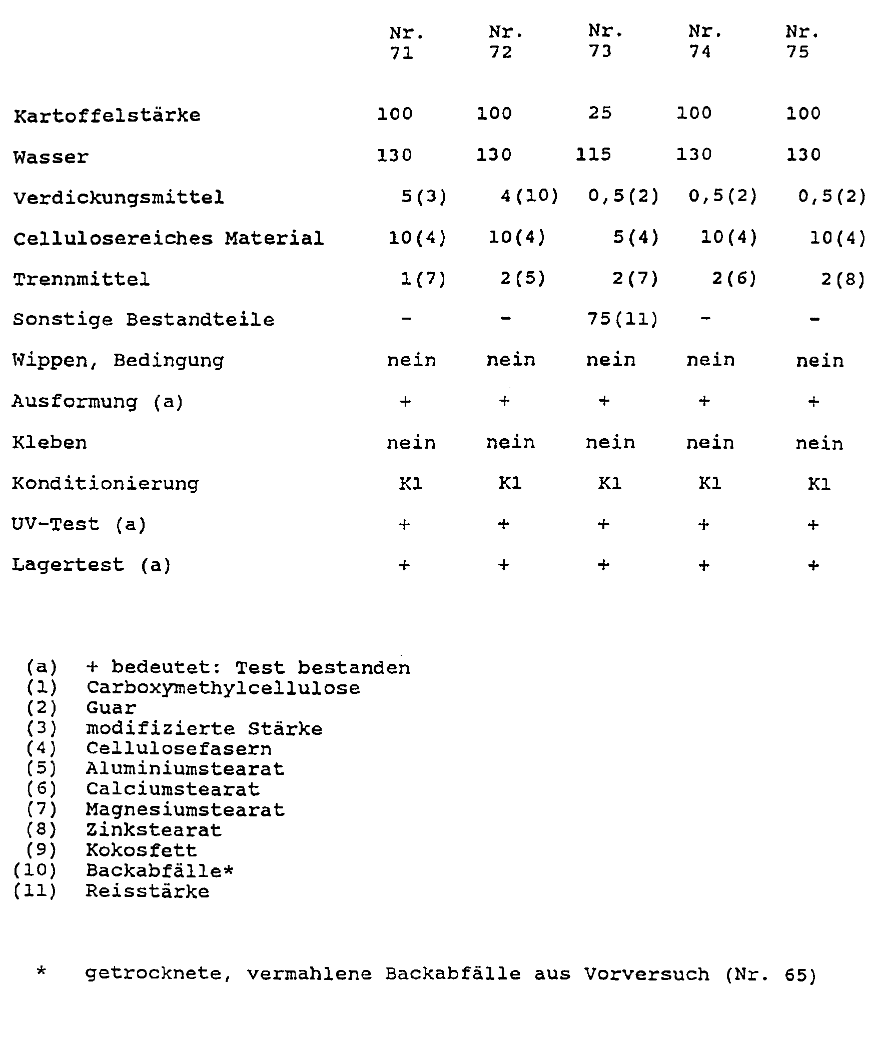

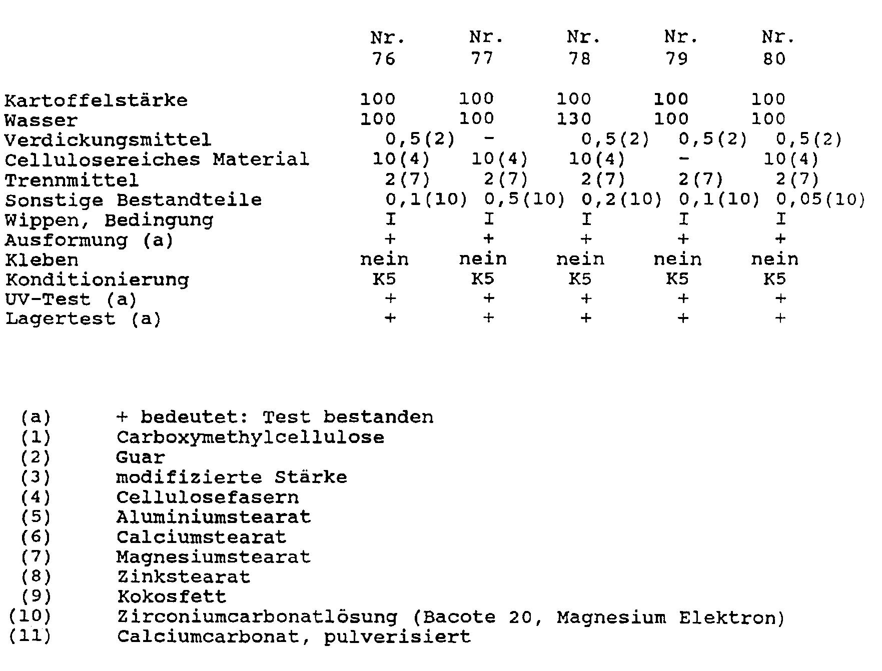

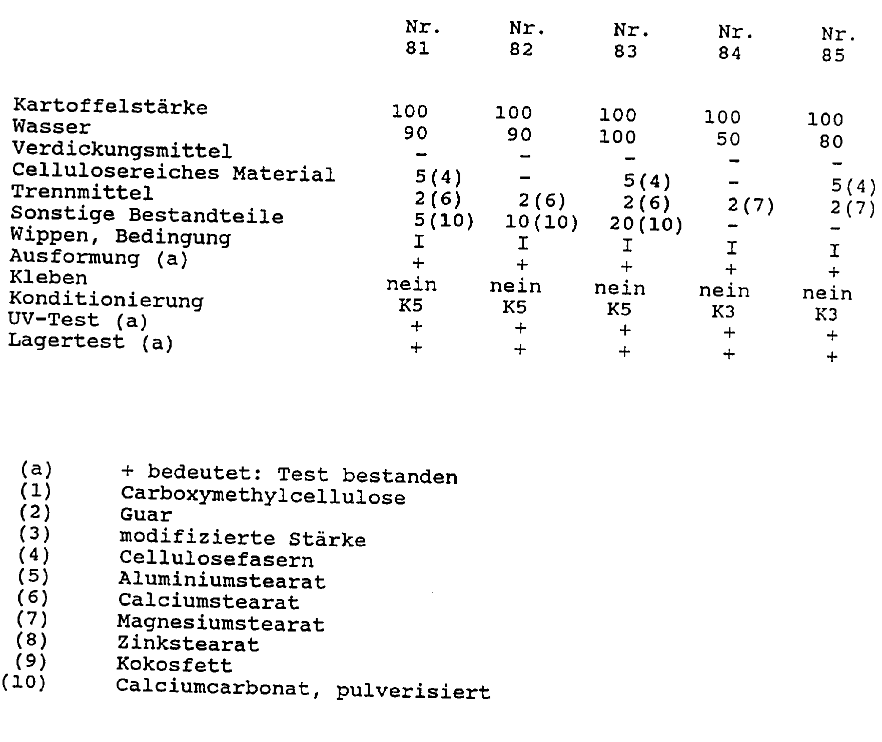

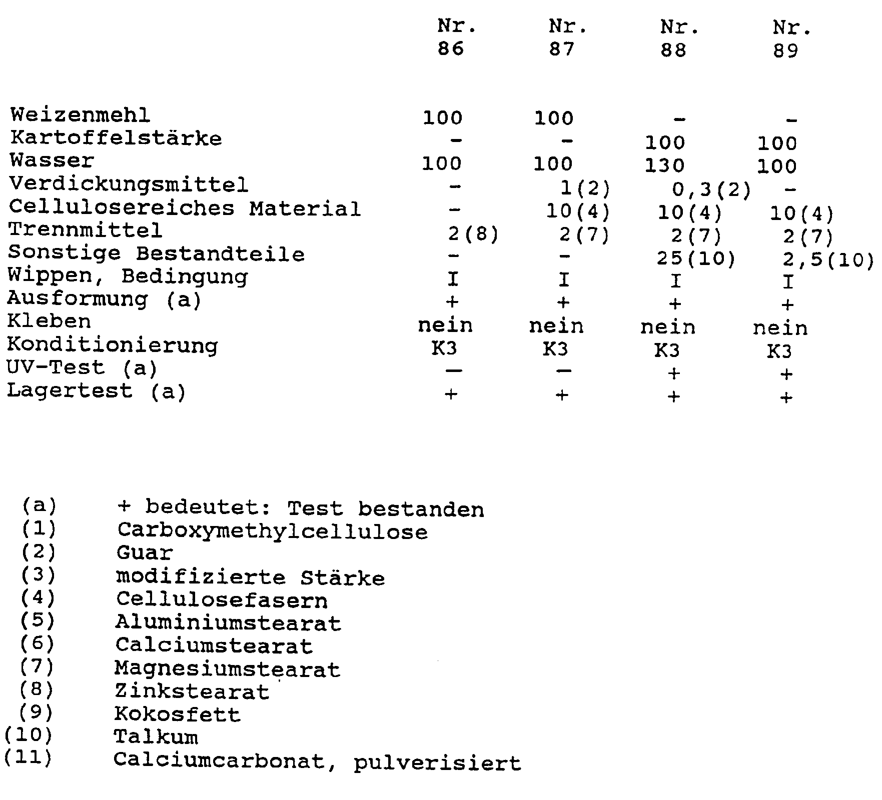

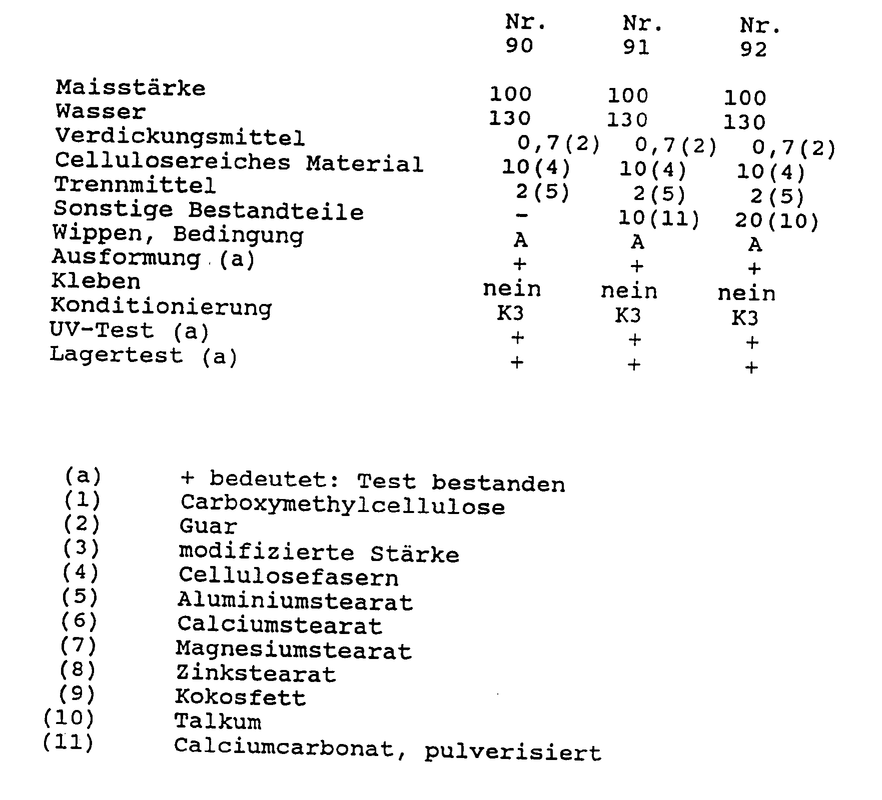

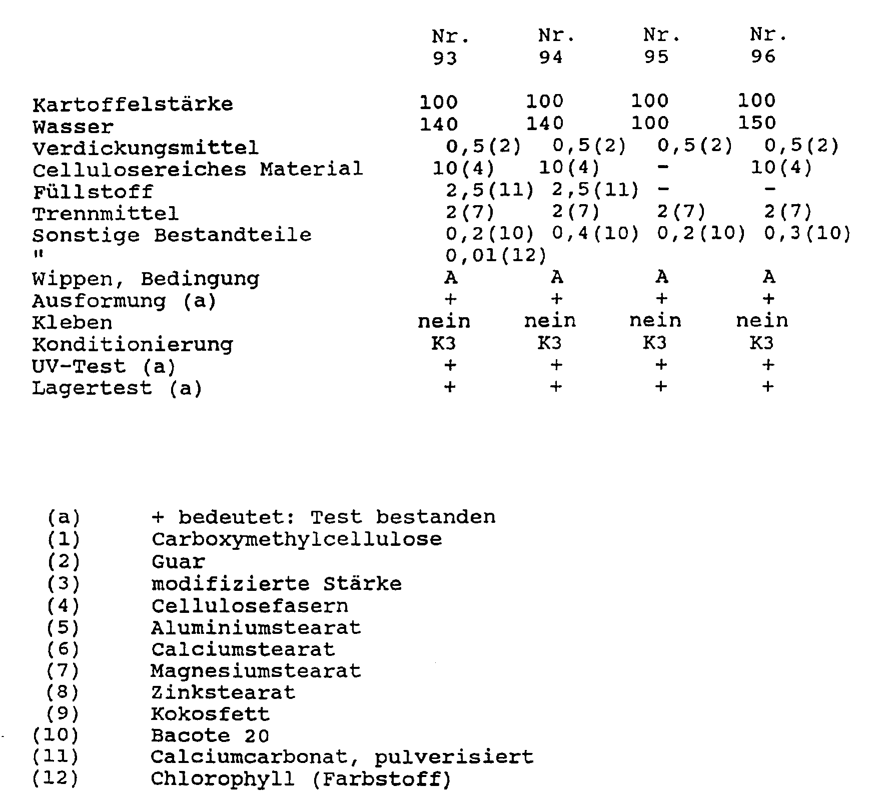

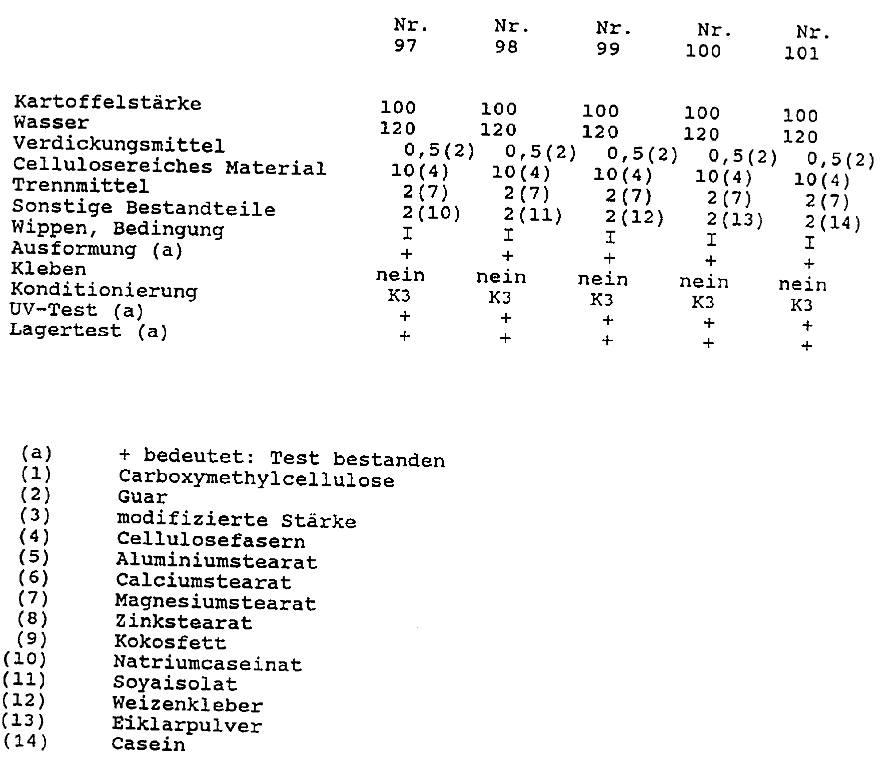

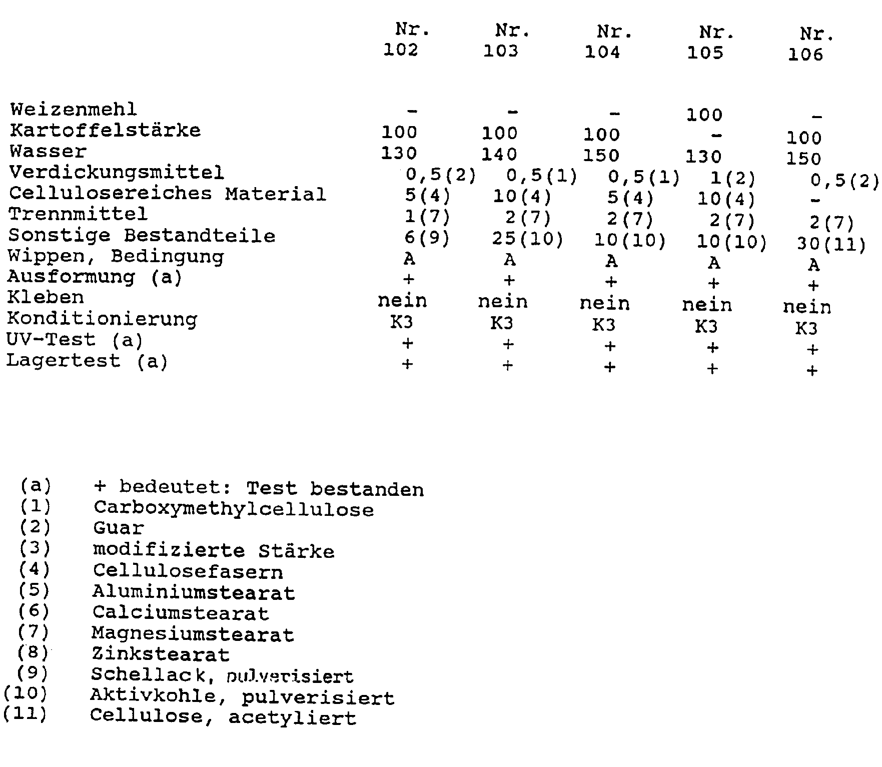

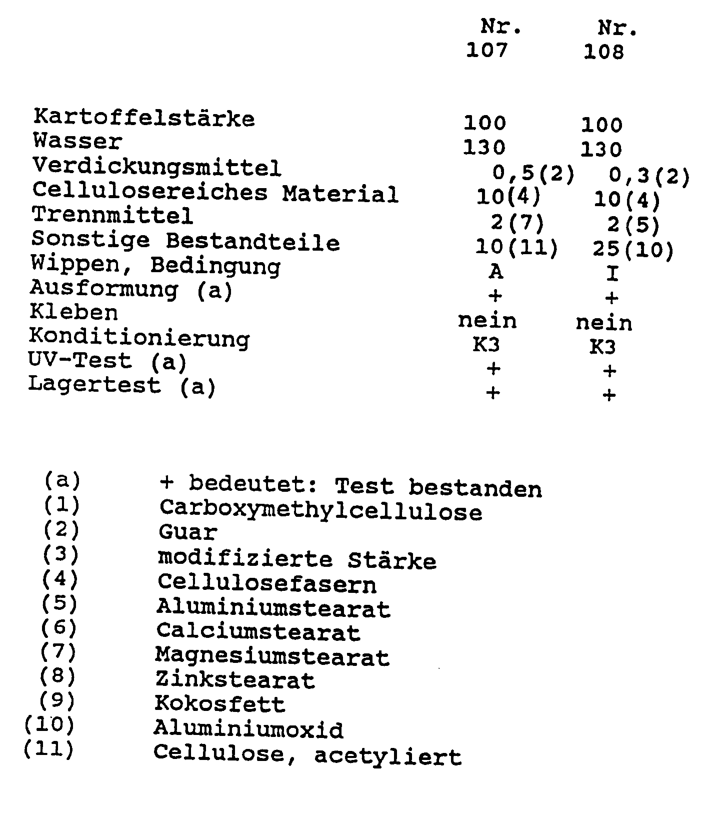

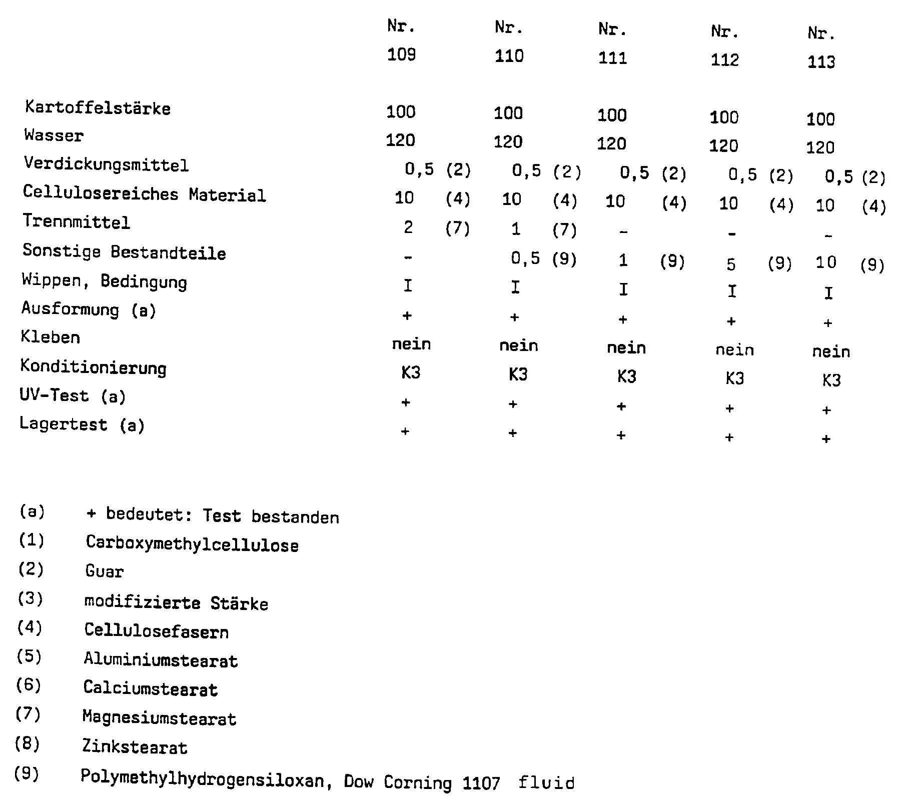

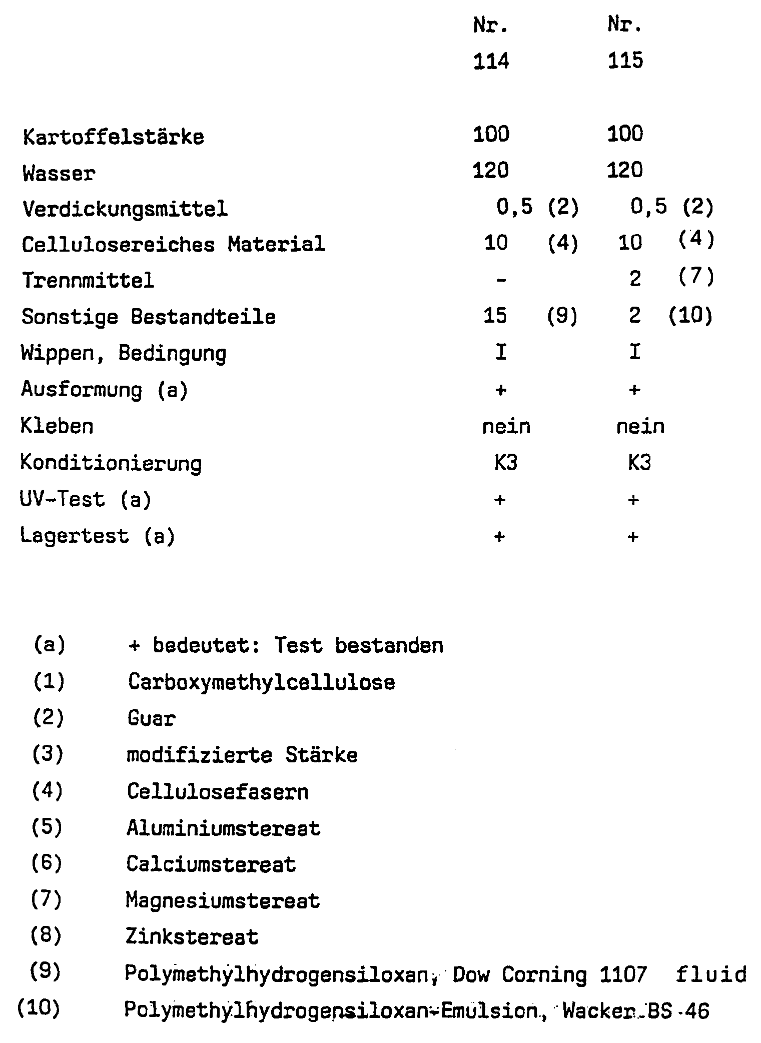

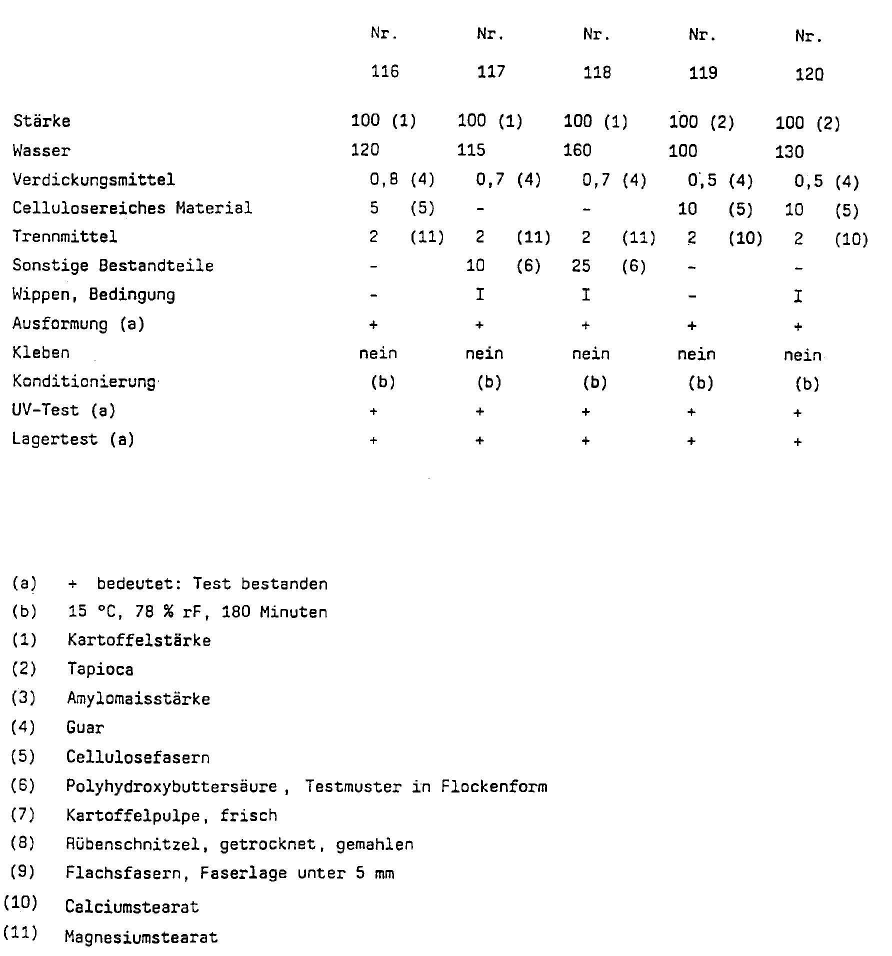

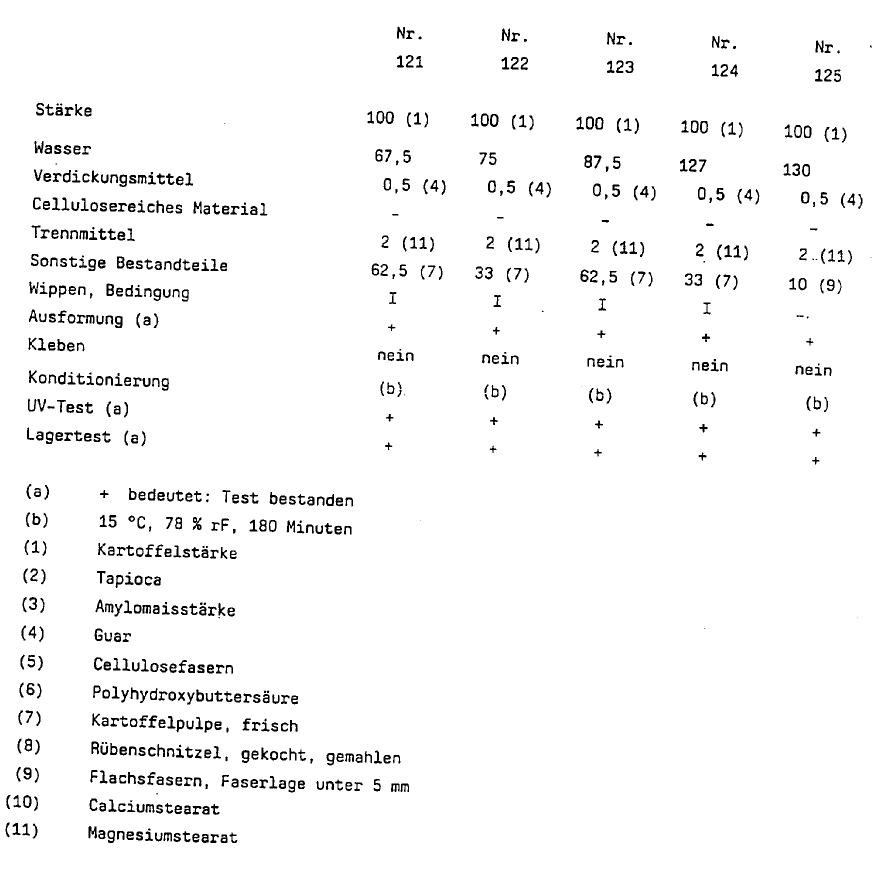

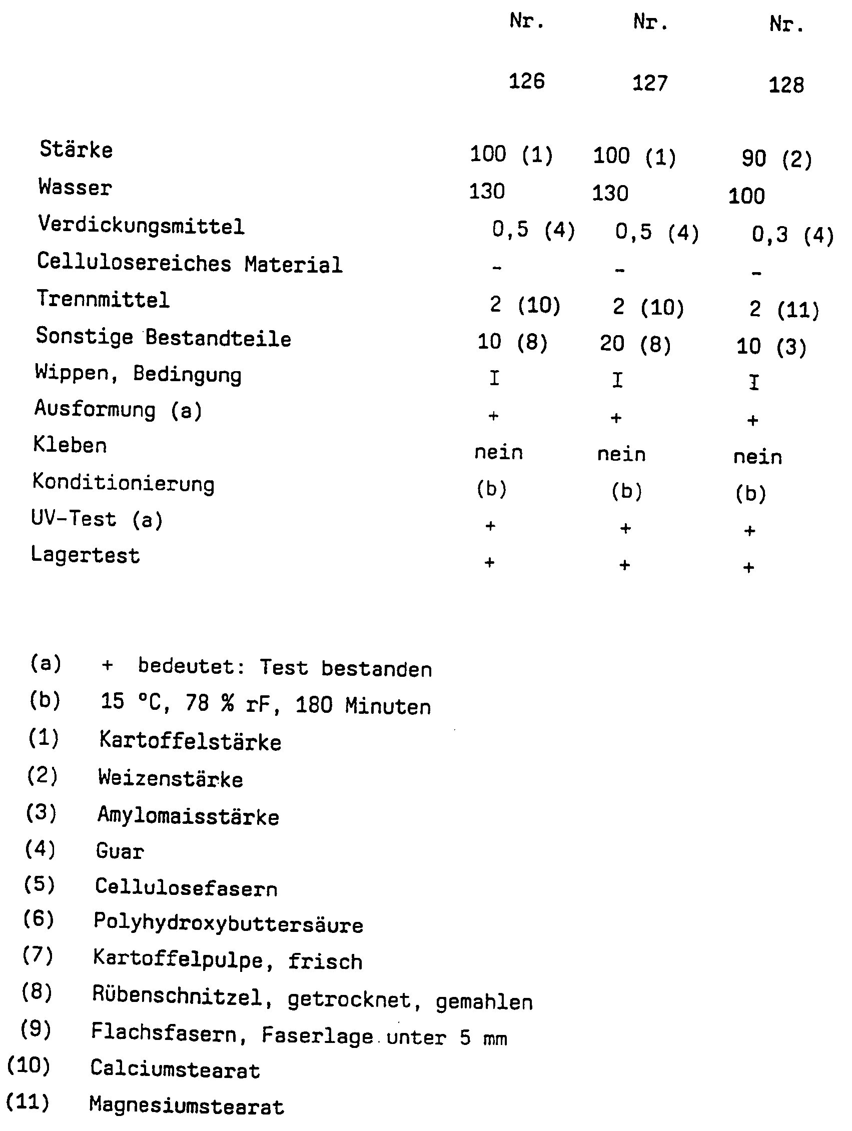

Aus den voranstehenden Versuchen lassen sich folgende Schlüsse ziehen:

### Rezepturen mit Fett bzw. Lecithin als Trennmittel

### (Nr. 2, 4, 6 , 24, 25, 26, 39)

In den einzelnen Versuchsreihen wurden zum Vergleich immer wieder Rezepturen unter Mitverwendung von Fetten, speziell Kokosfett und Sojafett, gehärtet ausgeführt. Obwohl die genannten Fette ohnedies überwiegend gesättigte Fettsäuren enthalten, sind im UV-Test wie im Lagertest sensorisch wahrnehmbare Mängel - ranzig-dumpfe Fehlgerüche - feststellbar. Dies gilt ebenso für Lecithin als Trennmittel (Versuch 24). Bei höheren Konzentrationen cellulosereichen Materials kommt es trotz der Fettzugabe zu Problemen infolge Klebenbleibens der gebackenen Produkte (Versuch Nr. 4, 37).

### Vergleichsrezeptur ohne Trennmittel

### (Nr. 1)

Diese Rezeptur führt bei sauberer, backbereiter Form bereits nach wenigen Backvorgängen zu einem zunehmend starken Klebenbleiben des fertig gebackenen Produktes und zu sichtbarer Rückstandsbildung an den Backformen.

### Cellulosefasern als cellulosereiches Material

### (Versuche 3-5 im Vergleich zu 7ff; 60 im Verleich zu 61)

Cellulosefasern erhöhen - wie andere faserartige Materialien - die mechanische Stabilität des fertigen, konditionierten Produktes. Diese wird zwar durch eine erhöhte Porosität - wegen erhöhter Wasseraufnahme der Backmassen und stärkere Wasserdampflockerung beim Backen - wieder teilweise reduziert, erlaubt aber die Herstellung von Produkten mit modifizierten Eigenschaften: geringere Dichte, höhere Flexibilität. Trotz der hohen Wasseranteile in cellulosereichen Massen (Versuch 4, 5) treten keine, auf das Fehlen eine Emulgators zurückgehende Ausdampfprobleme auf.

### Faserlänge, Dimensionen von Faserstoffen

Die verwendeten Faserlängen der Cellulosefasern lagen zwischen 30 Mikrometer (sehr kurzfaserig) und 1500 Mikrometer (langfaserige Qualität). Probleme infolge zu großer Faserdimensionen ergeben sich weniger bei der Dosierung der Backmassen, hier könne für dickflüssige Massen (über 2000 mPas), pastose Massen (Versuche 60, 61, 63, 64) oder Massen mit Faserstoffen andere Dosiersysteme als für Waffelbackmassen eingesetzt werden, als vielmehr durch das Blockieren der Ausdampföffnungen der Backformen. Aus diesem Grund wurden andere Faserstoffe, speziell Holzmehl und Strohfasern, vor ihrer Verwendung zerkleinert und gesiebt (1 mm Maschenweite oder kleiner).

### Verwendung von Fett plus Trennmittel

### (Versuch 6)

Fett und Trennmittel können gemeinsam verwendet werden, aber die oxidative Stabilität ist reduziert.

### Trennmittelkonzentrationen

### (Versuche 11 - 13)

Sogar stark erhöhte Trennmitteldosierungen führen zu keinen Backproblemen und ergeben eine exakte Ausbildung des Formkörpers bei Verwendung herkömmlicher Fette als Trennmittel undenkbar.

### Konventionelle Trennmittel

### (Versuche 10, 11, 19)

Wachse, wie z.B. Bienenwachse oder Paraffinwachse, die etwa bei Produktionsunterbrechungen von Waffelbackautomaten zur Imprägnierung der Backform gegen anfängliches Klebenbleiben verwendet wurden bzw. werden, sind nicht geeignet. Dies gilt auch für Magnesiumoxid, das in Waffelrezepturen vereinzelt, zusätzlich zu Lecithin und Fett, als Trennmittel eingesetzt wird.

### Feuchthaltemittel

### (Versuche 16-18)

Die Verwendung von Feuchthaltemitteln beeinflußt die Feuchtigkeitsaufnahme positiv und kann auch im Hinblick auf die Stabilität in mikrobiologischer Sicht Vorteile bringen, backtechnisch wird jedoch die Struktur der Formkörper gelockert.

### Verschiedene Trennmittel: Carbonsäure und deren Salze; Säure- amide

### (Versuche 20 - 23, 41, 45, 53, 62)

Sowohl die freien Säuren als auch verschiedene Salze sind in technischer Hinsicht geeignet. Von den in den einzelnen Versuchen verwendeten Metallseifen sind diejenigen mit mehrwertigen Kationen vorzuziehen (AI, Ca, Mg, Zn), da sie im Gegensatz etwa zum Na-Salz die sensorisch neutralsten Produkte ergeben. Dies ist vor allem beim Kontakt mit sensiblen Füllgütern (z.B. Lebensmitteln) von Bedeutung.

### Unterschiedliche cellulosereiche Materialien

### (Versuche 27 - 30)

Beispiele verschiedener Faserstoffe, die zusätzliche Festigkeit verleihen. Bei Weizenkleie ist eine Vorentfettung erforderlich, um die Stabilität gegen oxidativen Verderb zu gewährleisten. Die genannten Rohstoffe erhöhen den Wasserbedarf zur Massenbereitung und werden fallweise auch in pastoser Konsistenz mit Viskositäten deutlich über 2000 mPas in die Backformen dosiert.

### Weizenmehl als stärkereicher Rohstoff

### (Versuche 31 - 40)

Weizenmehl ist ein fast überall erhältlicher und leicht herstellbarer stärkereicher Rohstoff. Seine überwiegende bzw. ausschießliche Verwendung bereitet in zweierlei Hinsicht Probleme, die aber gelöst werden können.
1. Weizenmehl enthält ca. 1 - 1,5 Gew.-% Lipide, welche überwiegend ungesättigte Fettsäuren enthalten. Die Mitverwendung steigender Anteile von Weizenmehl ergibt speziell im UV-Test zumindest vom Fachmann erkennbare, leicht ranzige Geruchsnoten. Im Lagertest ist dies, offenbar durch laufende Verflüchtigung dieser in geringsten Spuren auftretenden, aber sehr geruchsaktiven Stoffe, wenigerwahrnehmbar.
Die Mitverwendung von nicht wasserdampfflüchtigen Antioxidantien, die sich während des Backvorganges nach Aufschmelzen verteilen, schwächt diese Veränderungen ab. Vergleichbare Effekte können mit anderen, in der Kunststoffherstellung eingesetzten Antioxidantien erzielt werden.
2. Der Kleberanteil des Weizenmehles schwächt, offenbar durch Bindung von Trennmittelanteilen, die Trennwirkung. Dies kann aktiv durch Erhöhung des Trennmittelanteiles in der Rezeptur und passiv durch die Mitverwendung cellulosereichen Materials (Verdünnungseffekt) behoben werden.

### Mitverwendung von Konservierungsmitteln

### (Versuch 33)

Hierwird beispielhaft die Verwendung eines Konservierungsmittels gezeigt. Analog zur Papierherstellung sind solche Zusätze vorzusehen, wenn eine Feuchtebelastung des Formkörpermaterials im Laufe seines Gebrauchs nicht auszuschliepen ist.

### Andere stärkereiche Rohstoffe

### (Versuche 41 - 44, 63ff)

Die Verwendung anderer stärkereicher Rohstoffe wie von Stärken verschiedener Pflanzen sowie von Ceralienmehlen ist nicht ausgeschlossen. Die einzelnen Rohstoffe beeinflussen die Farbe und die Festigkeit der Struktur der Formkörper in spezifischer Weise. Naturfarbstoffe aus den Rohstoffen wie z.B. die Farbstoffe des Maismehls und der Maisstärke bleichen im Lagertest und im UV-Test rasch aus.
Das über die eingeschränkte oxidative Stabilität bei Weizenmehl Gesagte gilt für andere Cerealienmehle in analoger Weise (Roggenmehl, Gerstenmelhl, Hirsemehl, Maismehl).

### Verdickungsmittel

Neben den in den einzelnen Beispielen angeführten Verdickungsmitteln auf Nicht-Stärke-Basis sind wie in den Beispielen 11, 15, 26, 35, 45 - 49, 51, 52, 57 - 59 gezeigt, auch modifizierte Stärken, die durch Vorverkleisterung oder chemische Modifizierung verdickende Wirkung haben, anwendbar.

### Farbstoffe

Zur Herstellung reintönig weißer Formkörper ist Kartoffelstärke am besten geeignet. Die Mitverwendung wasserlösicher Farbstoffe ist beispielhaft in den Versuchen 53 - 56 gezeigt.

### Füllstoffe

Füllstoffe als an der Strukturbildung der Formkörper nicht wesentlich beteiligte, sondern eher passiv eingelagerte Materialien verändern beispielsweise die Dichte (Beispiel 59), die Druckfestigkeit oderdas Aussehen des Produktes (Pigmente 57, 58).
Das in Beispiel 59 verwendete Kieselgel als Beispiel eines harten, glasähnlichen Materials ist annähernd sphärisch geformt. Faserartige Materialien dieser Art sind nicht mehr ausschließlich als Füllstoffe zu betrachten.

### Wassergehalt der Backmassen

Der Wassergehalt der Backmassen kann, wie aus den Ausführungsbeispielen hervorgeht, in weiten Grenzen schwanken. Er wird durch 2 Faktoren bestimmt.
1. Die Wasseraufnahme der Rohstoffe: speziell cellulosereiche Rohstoffe oder Mehle erfordern höhere Wasserdosierungen als die verwendeten Stärken, um eine bestimmte Fließfähigkeit der Massen zu erreichen.
2. Die gewünschte Konsistenz: im allgemeinen werden entweder Backmassen mit einer Viskosität zwischen 500 mPas und 3000 mPas, vorzugsweise 1000 - 2000 mPas eingesetzt oder aber teigartige, nicht mehr fließende, knetbare oder sogar nicht mehr kohäsive Zubereitungen (vergleiche Rezeptur 61, 62).

Zur Festlegung der Grenzen des erfindungsgemäßen Verfahrens wurden Formkörper mit zunehmendem Gehalt an stärkereichen Rohstoffen hergestellt.

### Beispiel I

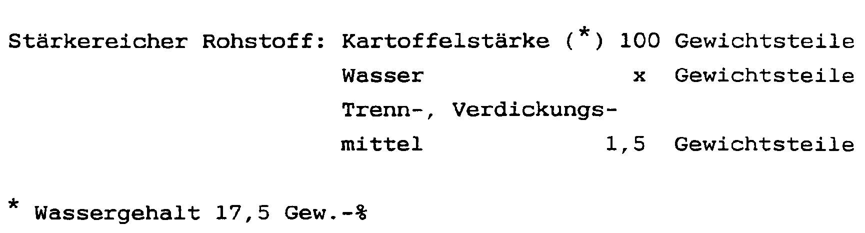

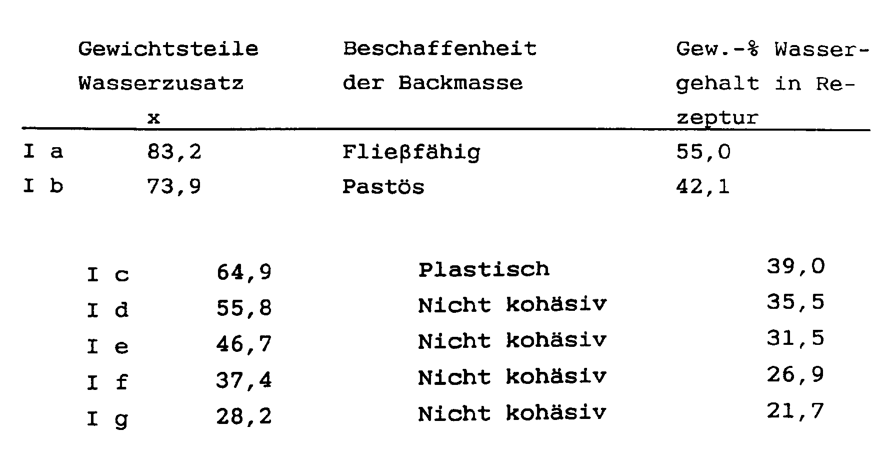

Die durchgeführten mikroskopischen, sensorischen und physikalischen Tests zeigen, daß die Formkörper If und I g bereits verschlechterte Eigenschaften: Abrieb nichtverkleisterter Partikel, Diskontinuität im E-Modul und in der Bruchkraft, aufweisen.

### Beispiel 11

### Stärkereicher Rohstoff:

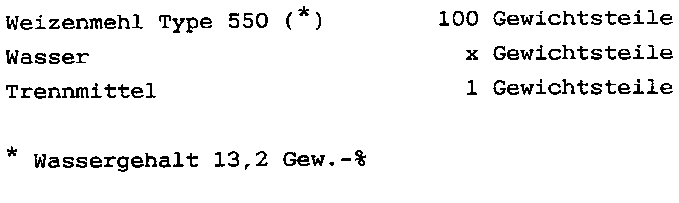

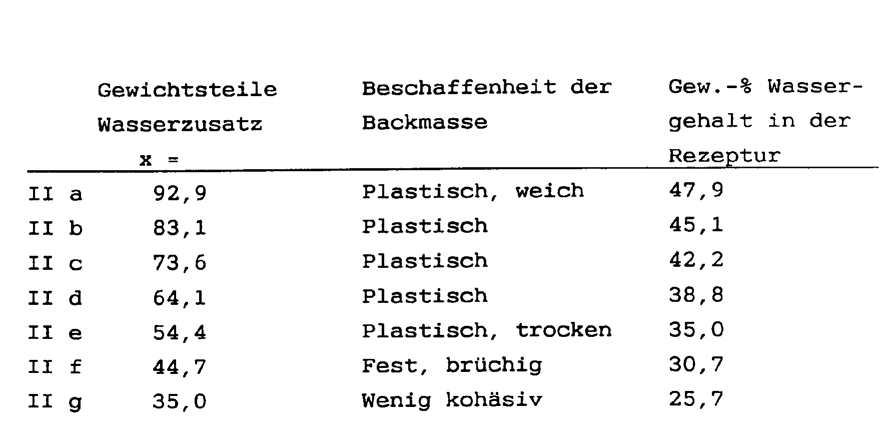

Es zeigen sich bei den Probekörpern II g deutlich verschlechterte Eigenschaften im Bruchverhalten.

Die nach dem erfindungsgemäßen Verfahren erhältlichen dünnwandigen Formkörper weisen folgende Beschaffenheit auf:
- Eine weitgehend geschlossene Oberfläche
   Elektronenmikroskopisch zeigt sich eine Außenhaut mit dem typischen Bild verkleisterter Stärke mit vereinzelten Einlagerungen von Füll- bzw. Bindestoffen.
- eine schaumstoffartige Kernstruktur
   Unter der Außenhaut schließt eine poröse Mittelschicht an mit zur Mitte hin zunehmender Porengröße. Diese ist für Eigenschaften wie Stopabsorption und Wärmeisolierung maßgebend. Im Vergleich zu den bekannten eßbaren Waffeln und Backoblaten ist kein fallweises Aufspalten im Zentrum dieser Mittelschicht - oft als Delamination, Abblättern, Splitting bezeichnet - festzustellen.
- elastisches und plastisches Verhalten
   Aufgrund der an den Backvorgang anschließenden Konditionierung wird das Material zunehmend unter Druck verformbar. Bedingt durch Wassereinlagerung kommt es zu einem Überschreiten des Glaspunktes. Dies tritt bei Raumtemperatur im allgemeinen bei Wassergehalten über 6 Gew.-% ein. Es schließt sich ein breiter Bereich bis zu Wassergehalten von 22 Gew.-% an. Erst darüber kommt es zu einem, dem Schmelzvorgang von Feststoffen analogen Erweichen und Zusammenfließen des Materials.
   Die Wassergehalte stellen sich als Gleichgewichtsfeuchte in Abhängigkeit von der Temperatur und der relativen Luftfeuchtigkeit (rF) ein. Aufgrund der Zusammensetzung ergibt sich zu hohen Luftfeuchtigkeiten hin (bis ca. 85% rF) wie auch zu niederen Luftfeuchten hin (bis ca. 35% rF, Hysterese) ein für native verkleisterte Stärke als Hauptrohstoff breiter Bereich erhöhter mechanischer Stabilität,
- Stabilität gegen Einwirkung von Licht- und Luftsauerstoff
   Das Produkt zeigt bei Licht- und Sauerstoffeinwirkung keine Veränderung der mechanischen Eigenschaften (Versprödung) und keine sensorisch wahrnehmbare Bildung von geruchlich oder geschmacklich wirksamen Substanzen.
   Im Gegensatz zu Waffeln und Backoblaten sind alle auf Polysaccharidbasis hergestellten erfindungsgemäßen Produkte diesbezüglich stabil.
   Allfällige farbliche Veränderungen sind nur bei Verwendung lichtempfindlicher Farbstoffe festzustellen. In der Beschreibung zitierte Registrierte Schutzmarken werden als solche anerkannt.

## Patentansprüche

1. Verfahren zur Herstellung von verrottbaren, dünnwandigen Formkörpern, wie z.B. Bechern, Tellern, Fast-Food-Verpackungen, Trays, ebenen Blättern u.dgl., durch Aufbringen einer Backmasse auf Stärkebasis auf den unteren Formteil einer mehrteiligen, vorzugsweise zweiteiligen Form, Ausbacken des Formkörpers durch Erhitzen der geschlossenen Form und anschliependes Konditionieren des ausgebackenen Produktes, dadurch gekennzeichnet, daß man, um ein zähes, festes, hohe mechanische Stabilität aufweisendes Produkt zu erhalten
1) eine aus folgenden Ingredienzien bereitete, im wesentlichen fettfreie Backmasse einsetzt:
a) 30 bis 63 Gew.-% vorzugsweise 42,0 bis 58,0 Gew.-% Wasser;
b) als Stärkebasis 27,0 bis 69 Gew.-%, vorzugsweise 36 bis 56,5 Gew.-%, insbesondere 44 bis 49 Gew.-% einer Stärke oder eines Gemisches verschiedener Stärken und/oder eines Mehles oder Mehlgemisches;
c) als Trennmittel 0,04 bis 11 Gew.-%, vorzugsweise 0,2 bis 4,5 Gew.-% einer oder mehrerer mittel-oder langkettiger, gegebenenfalls substituierter Fettsäuren und/oder deren Salze und/oder deren Säurederivate, z.B. Säureamide - gegebenenfalls können neben diesen Verbindungen oder als teilweiser, in Einzelfällen auch als vollständiger Ersatz derselben 0,5 bis 6,5 Gew.-%, vorzugsweise 0,1 bis 4,2 Gew.-% Polymethylhydrogensiloxane eingesetzt werden, wobei im Falle des Einsatzes beider Verbindungsgruppen bei hohen Konzentrationen an Fettsäuren bzw. deren Verbindungen die Konzentration an Polymethylhydrogensiloxanen in der Regel 3 Gew.-% nicht überschreiten soll -;
d) 0 bis 10 Gew.-%, vorzugsweise 0,1 bis 7,5 Gew.-% eines Verdickungsmittels, insbesondere 1,0 bis 5,5 Gew.-% Quellstärke, vorverkleisterte Stärke od. Backabfall, und/oder 0 bis 2 Gew.-%, vorzugsweise 0 bis 1,0 Gew.-% Guar-Mehl, Pektin, Johannisbrotkernmehl, Carboxymethylcellulose und/oder 0 bis 5,5 Gew.-%, vorzugsweise 0 bis 3 Gew.-% Gummi arabicum;
e) 0 bis 16,0 Gew.-%, vorzugsweise 0 - 11 Gew.-% cellulosereiche Rohstoffe - im Falle von Pülpe bis 26,9 Gew.-% - und/oder andere pflanzliche Faserstoffe und/oder Fasern aus Kunststoff, Glas, Metall, Kohlenstoff u.a.;
f) 0 bis 10 Gew.-%, vorzugsweise 0 bis 7,5 Gew.-% nicht faserförmige Füllstoffe, wie
Calciumcarbonat,
Kohle,
Talkum,
Titandioxid,
Kieselgel,
Aluminiumoxid;
0 bis 3 Gew.-%, vorzugsweise 0 bis 2,5 Gew.-% Schellack
0 bis 2,0 Gew.-%, vorzugsweise 0 bis 1,0 Gew.-% Sojaeiweiß, pulv., Weizenkleber, pulv., Hühnereiweiß, pulv., Casein, pulv. und Caseinat, pulv.;
g) als Feuchthaltemittel
0-3,5 Gew.-%, vorzugsweise 0-2,5 Gew.-% Kochsalz, und/oder
0-2,5 Gew.-%, vorzugsweise 0-1,5 Gew.-% Glycerin, Glykole und/oder
0-4,5 Gew.-%, vorzugsweise 0-3,5 Gew.-% Sorbit
h) als Färbemittel
0-10 Gew.-%, vorzugsweise 0-7,5 Gew.-% anorganische Pigmente, und/oder
0-0,1 Gew.-% natürl. u. synthet. Farbstoffe, und/oder
0-2,5 Gew.-%, vorzugsweise 0-1 Gew.-% Zuckercouleur, und/oder
0-1 Gew.-% Ruße und/oder
0-3,5 Gew.-%, vorzugsweise 0-2,5 Gew.-% Kakaopulver;
i) als Strukturverfestiger eine Zirkoniumsalzlösung, bevorzugt als alkalische Lösung von Ammoniumzirkoniumcarbonat, wobei der Gehalt an Zirkoniumverbindungen, ausgedrückt als Zr0₂ 0 bis 0,1 Gew.-%, bevorzugt 0,01 bis 0,05 Gew.-% beträgt;
k) 0-0,25 Gew.-%, vorzugsweise 0-0,1 Gew.-% Konservierungsmittel und
I) 0-0,5 Gew.-%, vorzugsweise 0-0,1 Gew.-% Antioxidanten;
2) die die Form ausfüllende Backmasse 25 bis 230 sec. lang bei 145 - 230°C ausbackt, und
3) das erhaltene Produkt durch Konditionieren auf einen Feuchtigkeitsgehalt von 6 Gew.-% bis 22 Gew.-% einstellt.

2. Verfahren nach Anspruch 1, dadurch gekennzeichnet, daß die Backmasse als Stärkebasis Kartoffelstärke, und/oder Maisstärke und/oder Weizenstärke und/oder Reisstärke und/oder Tapiocastärke enthält.

3. Verfahren nach Anspruch 1 oder 2, dadurch gekennzeichnet, daß die Backmasse als Stärkebasis 5 bis 100 Gew.-%, vorzugsweise 5 bis 95 Gew.-%, bezogen auf den Gesamtstärkebasisanteil, Kartoffelstärke enthält.

4. Verfahren nach einem oder mehreren der Ansprüche 1 bis 3, dadurch gekennzeichnet, daß die Backmasse als Trennmittel eine oder mehrere Fettsäuren mit einer Kettenlänge größer als C₁₂ vorzugsweise C₁₆ bis C₁₈ und/oder deren Salze und/oder deren Säurederivate enthält.

5. Verfahren nach Anspruch 4, dadurch gekennzeichnet, daß die Backmasse als Trennmittel Stearinsäure und/oder deren Natrium-, Kalzium-, Magnesium, Aluminium- und Zinksalze, insbesondere deren Aluminium-, Magnesium-, Calzium- und Zinksalze enthält.

6. Verfahren nach einem oder mehreren der Ansprüche 1 bis 5, dadurch gekennzeichnet, daß der Backmasse ein Polymethylhydrogenpolysiloxan der allgemeinen Formel 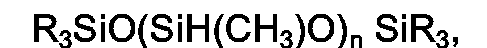 wobei R für H, Methyl oder Alkyl steht und für den Fall als R Methyl ist, n eine Zahl zwischen etwa 40 und etwa 100 bedeutet, zugesetzt wird.

7. Verfahren nach einem oder mehreren der Ansprüche 1 bis 6, dadurch gekennzeichnet, daß die Backmasse als Verdickungsmittel verkleisterte Stärken entweder als Fertigprodukt, wie Quellstärke oder Quellmehl oder als unmittelbar vor der Bearbeitung des Teiges hergestelltes Produkt enthält.

8. Verfahren nach Anspruch 7, dadurch gekennzeichnet, daß der Anteil der verkleisterten Stärke 1 bis 10 Gew.-%, vorzugsweise 2 bis 5 Gew.-% des Gesamtstärkeanteils beträgt.

9. Verfahren nach einem oder mehreren der Ansprüche 1 bis 8, dadurch gekennzeichnet, daß der Backmasse als cellulosereiche Rohstoffe 0 - 16 Gew.-% beschränkt wasserabsorbierende Stoffe (z.B. Holzspäne) und/oder 0 - 28 Gew.-% sehr stark wasserabsorbierende Stoffe (z. B. Pül pe) und/oder 0 - 11 Gew.-%, vorzugsweise 0 - 5 Gew.-% sonstige Faserstoffe zugesetzt werden.

10. Verfahren nach einem oder mehreren der Ansprüche 1 bis 9, dadurch gekennzeichnet, daß der Backmasse 0 - 10 Gew.-%, vorzugsweise 0 - 7,5 Gew.-% nicht faserförmige, weitgehend inerte Füllstoffe (anorganische Stoffe, Kohle u.dgl.), und/oder 0 - 2 Gew.-%, vorzugsweise 0 - 1 Gew.-% Eiweißstoffe, und/oder 0 - 3 Gew.-%, vorzugsweise 0 - 2,5 Gew.-% Schellack zugesetzt werden.

11. Verfahren nach einem oder mehreren der Ansprüche 1 bis 10, dadurch gekennzeichnet, daß der Backmasse Füll- und Bindestoffe in folgender Konzentration, bezogen auf Trockensubstanzen der Backmasse, zugesetzt werden:
Calciumcarbonat 0,1-17,2 Gew.-%, vorzugsweise 0,4-13,2 Gew.-% und/oder
Talkum 0,1-12,5 Gew.-%, vorzugsweise 0,4-9,5 Gew.-% und/oder
acetylierte Cellulose 0,1-14,1 Gew.-%, vorzugsweise 0,4-11,7 Gew.-% und/oder
Aluminiumoxid 0,1-12,5 Gew.-%, vorzugsweise 0,4-9,5 Gew.-% und/oder
Aktivkohle 0,1-12 Gew.-%, vorzugsweise 0,4-8,4 Gew.-% und/oder
Schellack 0,1-5 Gew.-%, vorzugsweise 0,4-3,5 Gew.-%.

12. Verfahren nach Anspruch 10, dadurch gekennzeichnet, daß eine voraufgeschlagene Backmasse eingesetzt wird, der zur Stabilisierung der Porenstruktur und/oder zum Erzielen eines Aufschlageffektes folgende Eiweißstoffe zugesetzt wurden (Angaben in Gew.-% Trockensubstanz in der Backmasse):
Casein 0,1-2,6 Gew.-%, vorzugsweise 0,2-1,3 Gew.-% und/oder Natriumcaseinat 0,1-1,3 Gew.-%, vorzugsweise 0,2 - 1,0 Gew.-% und/oder
Sojaisolat 0,1-2,6 Gew.-%, vorzugsweise 0,2-1,7 Gew.-% und/oder
Hühnereiweiß 0,1-1,7 Gew.-%, vorzugsweise 0,2-1,0 Gew.-%.

13. Verfahren nach einem oder mehreren der Ansprüche 1 bis 12, dadurch gekennzeichnet, daß durch Mit-Einbringen flächiger und/oder fadenförmiger Materialien in die Backform ein Werkstoff-Verbund bestehend aus Basiskörper und eingebackenen Materialien hergestellt wird.

14. Verfahren nach Anspruch 13, dadurch gekennzeichnet, daß das Mit-Einbringen dieser flächigen oder fadenförmigen Materialien vor und/oder nach dem Aufbringen der Backmasse jeweils auf den unteren Formteil der Backform erfolgt.

15. Verfahren nach Anspruch 13 oder 14, dadurch gekennzeichnet, daß als flächiges Material ein Backprodukt, wie es aus dem Verfahren gemäß einem oder mehreren der Ansprüche 1 bis 12 resultiert, eingebracht wird.

16. Anwendung des Verfahrens nach Anspruch 13 auf ein Verfahren, bei welchem in der Waffel- und Oblatenherstellung bekannte Backmassen ohne die als Trennmittel wirkenden Komponenten Fett und Lecithin eingesetzt werden.

17. Verfahren nach einem oder mehreren derAnsprüche 1 bis 15, dadurch gekennzeichnet, daß die Backform während des Backvorganges, vorzugsweise mehrmals, kurzfristig geringfügig geöffnet wird.

## Claims

1. A process of producing rottable, thin-walled shaped bodies, such as cups, plates, fast-food packages, trays, flat sheets, and the like, in which a baking composition made of starch is applied to the lower mold half of a composite, preferably bipartite, mold, the closed mold is heated to bake the shaped body, and the baked product is subsequently conditioned, characterized in that in order to produce a product which is tough and strong and has a high mechanical stability
1) a baking composition is used which is substantially fat-free and has been prepared from the following ingredients:
a) 30 to 63 % by weight, preferably 42.0 to 58.0 % by weight, water;
b) as a starch basis 27.0 to 69 % by weight, preferably 36 to 56.5 % by weight, particularly 44 to 49 % by weight, of a starch or a mixture of different starches and/or a flour or flour mixture;
c) as a release agent 0.04 to 11 % by weight, preferably 0.2 to 4.5 % by weight, of one or more fatty acids having medium or long chain lengths and being optionally substituted and/or of their salts and/or of their acid derivatives, such as acid amides; said components may optionally be supplemented or replaced in part or, in individual cases, entirely replaced by 0.5 to 6.5 % by weight, preferably 0.1 to4.2 % by weight, polymet hyl hydrogensiloxanes, and where both groups of compounds are used in conjunction with high concentrations of fatty acids the concentration of polymethylhy- drogensiloxanes should not exceed 3% by weight, as a rule;
d) 0 to 10 % by weight, preferably 0.1 to 7.5 % by weight, of a thickening agent, particularly 1.0 to 5.5 % by weight dried gelatinized starch, pregelatinized starch or waste baked products, and/or 0 to 2 % by weight, preferably 0 to 1.0 % by weight, guar meal, pectin, carubine, carboxymethyl cellulose and/or 0 to 5.5 % by weight, preferably 0 to 3 % by weight, gum arabic;
e) 0 to 16.0 % by weight, preferably 0 to 11 % by weight, high-cellulose raw material, in case of pulp up to 26.9% by weight and/or other plant fibers and/or fibers of plastic, glass, metal, carbon and others;
f) 0 to 10 % by weight, preferably 0 to 7.5 % by weight, non-fibrous fillers, such as calcium carbonate, coal, talc, titanium dioxide, silica gel, alumina;
0 to 3 % by weight, preferably 0 to 2.5 % by weight, shellac;
0 to 2.0 % by weight, preferably 0 to 1.0 % by weight, soybean protein, wheat gluten powder, chicken protein powder, casein powder, caseinate powder;
g) as a humectant
0 to 3.5 % by weight, preferably 0 to 2.5 % by weight, common salt and/or
0 to 2.5 % by weight, preferably 0 to 1.5 % by weight, glycerine, glycols and/or
0 to 4.5 % by weight, preferably 0 to 3.5 % by weight, sorbitol;
h) as a coloring material
0 to 10 % by weight, preferably 0 to 7.5 % by weight, inorganic pigments and/or
0 to 0.1 % by weight natural and synthetic dyestuffs and/or 0 to 2.5 % by weight, preferably
0 to 1 % by weight, sugar color and/or
0 to 1 % by weight carbon blacks and/or
0 to 3.5 % by weight, preferably 0 to 2.5 % by weight, cocoa powder;
i) as structure-consolidating agent a zirconium salt solution, preferably as an alkaline solution of ammonium zirconium carbonate, the amount of zirconium compounds expressed as Zr0₂ amounting to 0 to 0.1 % by weight, preferably 0.01 to 0.05 % by weight;
k) 0 to 0.25 % by weight, preferably 0 to 0.1 % by weight, preservatives; and
I) 0 to 0.5 % by weight, preferably 0 to 0.1 % by weight, antioxidants;
2) the baking composition filling the mold is baked at 145 to 230 °C for 25 to 230 seconds; and
3) the resulting product is conditioned to contain 6 to 22 % by weight moisture.

2. A process according to claim 1, characterized in that the baking composition contains potato starch and/or corn starch and/or wheat starch and/or rice starch and/or tapioca starch as a starch basis.

3. A process according to claim 1 or 2, characterized in that the baking composition contains potato starch as a starch basis in an amount of 5 to 100 % by weight, preferably 5 to 95 % by weight, relative to its total starch basis content.

4. A process according to any of claims 1 to 3, characterized in that the baking composition contains as a release agent one or more fatty acids having a chain length in excess of C₁₂, preferably a chain length of C₁₆ to C₁₈, and/or their salts and/or their acid derivatives.

5. A process according to claim 4, characterized in that the baking composition contains stearic acid and/or its sodium, calcium, magnesium, aluminum and zinc salts, particularly its aluminum, magnesium, calcium and zinc salts.

6. A process according to any of claims 1 to 5, characterized in that a polymethylhydrogenpolysiloxane of the general formula 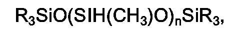 wherein R stands for H, methyl or alkyl and, if R is methyl, n is a number between about 40 and about 100, is added to the baking composition.

7. A process according to any of claims 1 to 6, characterized in that the baking composition contains as a thickening agent gelatinized starch either as a prefabricated product, such as dried gelatinized starch or dried gelatinized flour, or as a product which has been produced immediately before the processing of the dough.

8. A process according to claim 7, characterized in that the content of gelatinized starch amounts to 1 to 10 % by weight, preferably 2 to 5 % by weight, of the total starch content.

9. A process according to any of claims 1 to 8, characterized in that 0 to 16 % by weight of substances having a restricted absorbency for water (such as wood ships) and/or 0 to 28 % by weight of substances having a very high absorbency for water (such as pulp) and/or 0 to 11 % by weight, preferably 0 to 5 % by weight, of other fibrous materials are added to the baking composition as high-cellulose raw materials.

10. A process according to any of claims 1 to 9, characterized in that 0 to 7.5 % by weight non-fibrous, substantially inert fillers (inorganic substances, coal, and the like) and/or 0 to 2 % by weight, preferably 0 to 1 % by weight, proteins and/or 0 to 3 % by weight, preferably 0 to 2.5 % by weight, shellac are added to the baking composition.

11. A process according to any of claims 1 to 10, characterized in that fillers and binders are added to the baking composition in the following concentrations based on the dry solids content of the baking composition:
calcium carbonate 0.1 to 17.2 % by weight, preferably 0.4 to 13.2 % by weight; and/or
talc 0.1 to 12.5 % by weight, preferably 0.4 to 9.5 % by weight; and/or
acetylated cellulose 0.1 to 14.1 % by weight, preferably 0.4 to 11.7 % by weight; and/or
alumina 0.1 to 12.5 % by weight, preferably 0.4 to 9.5 % by weight; and/or
activated carbon 0.1 to 12 % by weight, preferably 0.4 to 8.4 % by weight; and/or
shellac 0.1 to 5 % by weight, preferably 0.4 to 3.5 % by weight.

12. A process according to claim 10, characterized in that a prewhipped baking composition is used, to which the following protein materials (contents stated in % by weight of the dry solids content of the baking composition) have been added to stabilize the porous structure of the baking composition and/or to produce a whipped effect:
casein 0.1 to 2.6 % by weight, preferably 0.2 to 1.3 % by weight; and/or
sodium caseinate 0.1 to 1.3 % by weight, preferably 0.2 to 1.0 % by weight; and/or
soybean isolate 0.1 to 2.6 % by weight, preferably 0.2 to 1.7 % by weight; and/or
chicken egg white 0.1 to 1.7 % by weight, preferably 0.2 to 1.0 % by weight.

13. A process according to any of claims 1 to 12, characterized in that sheetlike and/or threadlike materials are included in the baking mold to produce a baked composite consisting of a body and bonded material.

14. A process according to claim 13, characterized in that said sheetlike or threadlike materials are included before and/or after the baking composition has been applied to the bottom mold part of the baking mold.

15. A process according to claim 13 or 14, characterized in that the sheet material which is included consists of a baked product such as results from the process according to any of claims 1 to 12.

16. The use of the process according to claim 13 in a process in which baking compositions known in the production of waferand paper-thin baked products are used without the components fat and lecithin acting as release agents.

17. A process according to any of claims 1 to 15, characterized in that the baking mold is opened for a short time, preferably several times, during the baking operation.

## Revendications

1. Procédé de fabrication d'articles moulés à parois minces, pourrissables, comme, par exemple, des gobelets, des assiettes, des emballages pour prêts-à-manger, des plateaux, des feuilles planes et analogues, par l'application d'une masse à cuire à base d'amidon sur la partie de moule inférieure d'un moule en plusieurs, de préférence, deux parties, cuisson de l'article moulé par chauffage du moule fermé et conditionnement subséquent du produit cuit, caractérisé en ce que, pour obtenir un produit tenace, solide, présentant une stabilité mécanique élevée,
1) on met en oeuvre une masse à cuire sensiblement dépourvue de graisse, préparée à partir des ingrédients qui suivent :
a) 30 à 63% en poids, de préférence 42,0 à 58,0% en poids, d'eau;
b) à titre de base amidonnée, 27,0 à 69% en poids, de préférence 36 à 56,5% en poids, plus particulièrement44 à 49% en poids, d'un amidon, ou d'un mélange de divers amidons et/ou d'une farine ou d'un mélange de farines;
c) à titre d'agent de démoulage, 0,04 à 11% en poids, de préférence 0,2 à 4,5% en poids, d'un ou plusieurs acides gras, à moyenne ou longue chaîne, éventuellement substitués et/ou de leurs sels et/ou de leurs dérivés d'acides, par exemple des amides - peuvent éventuellement être mis en oeuvre, outre ces composés, ou à titre de succédanés partiels et dans quelques cas aussi totaux, de ceux-ci, 0,5 à 6,5% en poids, de préférence 0,1 à 4,2% en poids, de polyméthylhydrogéno-siloxan- nes, où dans le cas de la mise en oeuvre des deux groupes de composés et pour des concentrations élevées en acides gras ou de leurs composés, la concentration en polyméthylhydrogénosiloxannes ne dépassera pas, en règle générale, 3% en poids -;
d) 0 à 10% en poids, de préférence 0,1 à 7,5% en poids, d'un agent épaississant, plus particulièrement, 1,0 à 5,5% en poids d'amidon gonflant, d'amidon prégélifié, ou de résidus de cuisson ou de boulangerie et/ou 0 à 2% en poids, de préférence 0 à 1,0% en poids, de gomme guar, de pectine, de farine de graines de caroube, de carboxyméthylcellulose et/ou 0 à 5,5% en poids, de préférence 0 à 3% en poids, de gomme arabique;
e) 0 à 16,0% en poids, de préférence 0 à 11% en poids, de matières premières riches en cellulose - en cas de pulpes jusqu'à 26,9% en poids - et/ou d'autres fibres végétales et/ou de fibres de matières plastiques, de verre, de métal, de carbone, et analogues;
f) 0 à 10% en poids, de préférence à 0 à 7,5% en poids, de charges non fibreuses, telles que
le carbonate de calcium,
le charbon ou carbone,
le talc,
le dioxyde de titane,
le gel de silice,
l'oxyde d'aluminium,
0 à 3% en poids, de préférence 0 à 2,5% en poids, de shellac,
0 à 2,0% en poids, de préférence 0 à 1,0% en poids, de protéines de soja pulvérulentes, de colle de froment pulvérulente, d'albumine ou blanc d'oeuf de poule pulvérulent, de caséine pulvérulente et de caséinate pulvérulent,
g) à titre d'agent de retenue d'humidité
0 à 3,5% en poids, de préférence 0 à 2,5% en poids de sel de cuisine et/ou,
0 à 2,5% en poids, de préférence 0 à 1,5% en poids, de glycérine, de glycols et/ou
0 à 4,5% en poids, de préférence 0 à 3,5% en poids, de sorbite;
h) à titre de colorant
0 à 10% en poids, de préférence 0 à 7,5% en poids, de pigments inorganiques et/ou
0 à 0,1% en poids de colorants naturels et synthétiques et/ou
0 à 2,5% en poids, de préférence 0 à 1 % en poids, de colorant pour confiserie et/ou
0 à 1 % en poids de noirs de carbone et/ou
0 à 3,5% en poids, de préférence 0 à 2,5% en poids, de poudre de cacao;
i) à titre d'agent de renforcement de la structure, une solution de sel de zirconium, de préférence sous forme de solution alcaline de carbonate d'ammonium et de zirconium, où la teneur en composés du zirconium, exprimée sous forme de Zr0₂, varie de 0 à 0,1% en poids, de préférence 0,01 à 0,05% en poids;
k) 0 à 0,25% en poids, de préférence 0 à 0,1% en poids, d'un conservateur, et
I) 0 à 0,5% en poids, de préférence 0 à 0,1% en poids, d'agents antioxydants;
2) on cuit la masse à cuire remplissant le moule à 145-230°C pendant 25 à 230 secondes, et
3) on règle la teneur en humidité du produit obtenu de 6 à 22% en poids par conditionnement.

2. Procédé suivant la revendication 1, caractérisé en ce que la masse à cuire contient, à titre de base amidonnée, de la fécule de pomme de terre et/ou de l'amidon de maïs et/ou de l'amidon de blé et/ou de l'amidon de riz et/ou de la fécule de manioc.

3. Procédé suivant la revendication 1 ou 2, caractérisé en ce la masse à cuire contient, à titre de base amidonnée, 5 à 100% en poids, de préférence 5 à 95% en poids, de fécule de pomme de terre, par rapport à la fraction de base amidonnée totale.

4. Procédé suivant l'une ou plusieurs des revendications 1 à 3, caractérisé en ce que la masse à cuire contient, à titre d'agent de démoulage, un ou plusieurs acides gras, d'une longueur de chaîne supérieure à C₁₂, de préférence en C₁₆ à C₁₈ et/ou leurs sels et/ou leurs dérivés d'acides.

5. Procédé suivant la revendication 4, caractérisé en ce que la masse à cuire contient, à titre d'agent de démoulage, de l'acide stéarique et/ou de ses sels de sodium, de calcium, de magnésium, d'aluminium et de zinc, plus particulièrement de ses sels d'aluminium, de magnésium, de calcium et de zinc.

6. Procédé suivant une ou plusieurs des revendications 1 à 5, caractérisé en ce que l'on ajoute à la masse à cuire un polyméthylhydrogénopolysiloxanne de la formule générale : 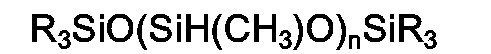 dans laquelle R représente un atome d'hydrogène, le radical méthyle ou un radical alkyle et, dans le cas où R représente le radical méthyle, n a une valeur qui varie d'environ 40 à environ 100.

7. Procédé suivant une ou plusieurs des revendications 1 à 6, caractérisé en ce que la masse à cuire contient, à titre d'agent épaississant, de l'amidon gélifié, soit sous forme de produit prêt, tel que de l'amidon gonflant ou de la farine gonflante, soit sous forme de produit préparé immédiatement avant le travail ou traitement de la pâte.

8. Procédé suivant la revendication 7, caractérisé en ce que la fraction de l'amidon gélifié varie de 1 à 10% en poids, de préférence de 2 à 5% en poids, de la fraction d'amidon totale.

9. Procédé suivant une ou plusieurs des revendications 1 à 8, caractérisé en ce que l'on ajoute à la masse à cuire, à titre de matières premières riches en cellulose, de 0 à 16% en poids de substances absorbant l'eau de manière limitée (par exemple des copeaux ou particules de bois) et/ou de 0 à 28% en poids de substances absorbant très fortement l'eau (par exemple des pulpes) et/ou de 0 à 11 % en poids, de préférence de 0 à 5% en poids, de certaines matières fibreuses.

10. Procédé suivant une ou plusieurs des revendications 1 à 9, caractérisé en ce que l'on ajoute à la masse à cuire de 0 à 10% en poids, de préférence de 0 à 7,5% en poids, de charges fibreuses, sensiblement inertes (substances inorganiques, charbon et analogues) et/ou de 0 à 2% en poids, de préférence de 0 à 1 % en poids, de protéines, et/ou de 0 à 3% en poids, de préférence de 0 à 2,5% en poids, de shellac.

11. Procédé suivant une ou plusieurs des revendications 1 à 10, caractérisé en ce que l'on ajoute à la masse à cuire des charges et/ou des liants en la concentration suivante, par rapport à la substance sèche de la masse à cuire :
carbonate de calcium : 0,1 à 17,2% en poids, de préférence 0,4 à 13,2% en poids et/ou
talc : 0,1 à 12,5% en poids, de préférence 0,4 à 9,5% en poids et/ou
cellulose acétylée : 0,1 à 14,1% en poids, de préférence 0,4 à 11,7% en poids et/ou
oxyde d'aluminium : 0,1 à 12,5% en poids, de préférence 0,4 à 9,5% en poids et/ou
charbon activé : 0,1 à 12% en poids, de préférence 0,4 à 8,4% en poids et/ou
shellac : 0,1 à 5% en poids, de préférence 0,4 à 3,5% en poids.

12. Procédé suivant la revendication 10, caractérisé en ce que l'on met en oeuvre une masse à cuire prélevée, à laquelle on a ajouté, en vue de la stabilisation de la structure des pores et/ou en vue de l'obtention d'un effet de levée, les protéines suivantes (indications en % en poids de substance sèche dans la masse à cuire):
caséine : 0,1 à 2,6% en poids, de préférence 0,2 à 1,3% en poids et/ou
caséinate de sodium : 0,1 à 1,3% en poids, de préférence 0,2 à 1,0% en poids et/ou
isolat de soja : 0,1 à 2,6% en poids, de préférence 0,2 à 1,;% en poids et/ou
albumine d'oeuf de poule : 0,1 à 1,7% en poids, de préférence 0,2 à 1,0% en poids.

13. Procédé suivant une ou plusieurs des revendications 1 à 12, caractérisé en ce que, par l'introduction conjointe de matériaux plats et/ou filiformes dans le moule de cuisson, on prépare un produit composite constitué de corps de base et de matériaux incorporés par cuisson.

14. Procédé suivant la revendication 13, caractérisé en ce que l'introduction conjointe de ces matériaux plats ou filiformes s'effectue, avant et/ou après l'application de la masse à cuire, à chaque fois sur la partie inférieure du moule.

15. Procédé suivant la revendication 13 ou 14, caractérisé en ce qu'à titre de matériau plat, on introduit un produit à cuire tel qu'on l'a obtenu par la mise en oeuvre du procédé suivant une ou plusieurs des revendications 1 à 12.

16. Utilisation du procédé suivant la revendication 13 dans un procédé conformément auquel, lors de la préparation de gaufres et d'oublies ou plaisirs, on met en oeuvre des masses à cuire connues sans les composants graisse et lécithine à activité de démoulage.

17. Procédé suivant une ou plusieurs des revendications 1 à 15, caractérisé en ce qu'au cours du processus de cuisson, on ouvre faiblement et très brièvement, de préférence plusieurs fois, le moule de cuisson.
